(19) Europäisches Patentamt / European Patent Office / Office européen des brevets

(11) **EP 4 421 619 A1**

(12) **EUROPEAN PATENT APPLICATION**
published in accordance with Art. 153(4) EPC

(43) Date of publication:
**28.08.2024 Bulletin 2024/35**

(21) Application number: **22897862.3**

(22) Date of filing: **23.11.2022**

(51) International Patent Classification (IPC):
**G06F 8/38** $^{(2018.01)}$

(52) Cooperative Patent Classification (CPC):
**G06F 8/38; G06F 9/451; G06F 9/54; Y02D 10/00**

(86) International application number:
**PCT/CN2022/133838**

(87) International publication number:
**WO 2023/093779 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.11.2021 CN 202111410513**

(71) Applicant: **Huawei Technologies Co., Ltd.**
**Shenzhen, Guangdong 518129 (CN)**

(72) Inventors:
• **ZHANG, Xiaoci**
  **Shenzhen, Guangdong 518129 (CN)**
• **LI, Yu**
  **Shenzhen, Guangdong 518129 (CN)**
• **YU, Tanqi**
  **Shenzhen, Guangdong 518129 (CN)**
• **NI, Zeyu**
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **INTERFACE GENERATION METHOD AND ELECTRONIC DEVICE**

(57) This application discloses an interface generation method and an electronic device, and relates to the field of electronic technologies. According to the interface generation method provided in this application, render trees of one or more applications in one display area may be merged, and an interface including one or more application interfaces is generated through one-time rendering based on a merged target render tree, thereby reducing a quantity of rendering times, reducing power consumption of an electronic device, and improving user experience.

FIG. 9

**Description**

This application claims priority to Chinese Patent Application No. 202111410513.6, filed with the China National Intellectual Property Administration on November 25, 2021 and entitled "INTERFACE GENERATION METHOD AND ELECTRONIC DEVICE", which is incorporated herein by reference in its entirety.

**TECHNICAL FIELD**

This application relates to the field of electronic technologies, and in particular, to an interface generation method and an electronic device.

**BACKGROUND**

With development of electronic technologies, more electronic devices are involved in users' daily life. In addition, as parameters such as a resolution and a size of a display of the electronic device increase, more content can be displayed on the electronic device.

However, before displaying an interface of an application, the electronic device needs to consume computing resources and storage resources to generate the interface of the application. This increases power consumption of the electronic device. In addition, when there are a plurality of applications or a plurality of windows on the screen of the electronic device, the electronic device needs to consume more computing resources and storage resources to perform rendering to generate interfaces of the plurality of applications or the plurality of windows.

**SUMMARY**

Embodiments of this application provide an interface generation method and an electronic device. According to the interface generation method provided in this application, render trees of one or more applications in one display area may be merged, and an interface including one or more application interfaces is generated through one-time rendering based on a merged target render tree, thereby reducing a quantity of rendering times, reducing power consumption of an electronic device, and improving user experience.

According to a first aspect, an interface generation method provided in an embodiment of this application is applied to a first electronic device. The first electronic device determines that content displayed in a first display area includes an interface of a first process and an interface of a second process, and the method includes: The first process generates a first render tree, where the first render tree is used to draw the interface of the first process; the second process generates a second render tree, where the second render tree is used to draw the interface of the second process; and a third process generates a first target interface based on the first render tree and the second render tree, where the first target interface includes the interface of the first process and the interface of the second process, and the first target interface is displayed in the first display area.

In the foregoing embodiment, an interface including one or more application interfaces is generated based on render trees of one or more applications in a display area, thereby reducing a quantity of rendering times, reducing power consumption of the electronic device, and improving user experience.

With reference to some embodiments of the first aspect, in some embodiments, that a third process generates a first target interface based on the first render tree and the second render tree specifically includes: The third process generates a first target render tree based on the first render tree and the second render tree; and the third process generates the first target interface based on the first target render tree.

In the foregoing embodiment, the third process may merge render trees of one or more applications into one target render tree, so that an interface may be generated based on the target render tree. The interface includes interfaces of the one or more applications. It is clear that the interface including the one or more applications can be generated through one-time rendering, that is, one rendering process from a render tree to a bitmap, so that a quantity of rendering times is reduced, and power consumption of the electronic device is reduced.

With reference to some embodiments of the first aspect, in some embodiments, that the third process generates a first target render tree based on the first render tree and the second render tree specifically includes: The third process creates a root render node as a root node of the first target render tree, and uses the first render tree and the second render tree as child nodes of the root render node.

In the foregoing embodiment, a new root node may be created, and render trees of a plurality of applications may be mounted onto child nodes of the root node, to implement creation of a target render tree.

With reference to some embodiments of the first aspect, in some embodiments, the method further includes: The third process deletes a render node in the first target render tree based on a Z-order of the first render tree and a Z-order of the second render tree, where the deleted render node corresponds to a fully shielded view.

In the foregoing embodiment, the third process may optimize a parameter in the target render tree, for example, delete a render node corresponding to a fully shielded view in an interface, to reduce overdrawing.

With reference to some embodiments of the first aspect, in some embodiments, the method further includes: The third process deletes a draw operation in the first target render tree based on a Z-order of the first render tree and a Z-order of the second render tree, where the deleted draw operation corresponds to a fully shielded graphic.

In the foregoing embodiment, the third process may optimize a parameter in the target render tree, for example, delete a render node corresponding to a fully shielded graphic in an interface, to reduce overdrawing.

With reference to some embodiments of the first aspect, in some embodiments, the method further includes: In a process in which the third process generates the first target interface based on the first render tree and the second render tree, the third process performs merging or batching on a first draw operation and a second draw operation, where the first draw operation belongs to the first render tree, and the second draw operation belongs to the second render tree.

In the foregoing embodiment, the third process may merge or batch draw operations in the target render tree, to increase an interface generation rate, reduce frame freezing, reduce power consumption of the electronic device, and improve user experience.

With reference to some embodiments of the first aspect, in some embodiments, the method further includes: The third process determines off-screen rendering logic of the interface of the first process, where the off-screen rendering logic includes at least one of window rounding, color transform, rotation, and scaling; and the third process adds an off-screen rendering property to a rendering property of the first render tree based on the off-screen rendering logic of the interface of the first process, where the off-screen rendering property includes at least one of a rounding property, a color property, a rotation property, and a scaling property. The off-screen rendering property one-to-one corresponds to the off-screen rendering logic, and the off-screen rendering property is used to modify a draw operation in the process in which the third process generates the first target interface based on the first render tree and the second render tree, to implement the off-screen rendering logic.

In the foregoing embodiment, the off-screen rendering property is added to the render tree, so that in a process of performing a draw operation on a surface, an off-screen-rendered graphic can be directly drawn based on the off-screen rendering property, and there is no need to perform off-screen rendering on an entire bitmap and then perform layer composition after drawing is completed. This can avoid off-screen rendering, thereby reducing a quantity of rendering times and off-screen rendering overheads, reducing power consumption of the electronic device, and improving user experience.

With reference to some embodiments of the first aspect, in some embodiments, when a reference coordinate system of the first render tree is a first coordinate system, a reference coordinate system corresponding to the first display area is a second coordinate system, and the first coordinate system is different from the second coordinate system, the method further includes: The third process determines a first parameter based on the first coordinate system and the second coordinate system, and adds the first parameter to the rendering property of the first render tree; and in the process in which the third process generates the first target interface based on the first render tree and the second render tree, the third process modifies a reference coordinate system of the first draw operation based on the first parameter, where the first draw operation belongs to the first render tree.

In the foregoing embodiment, when a reference coordinate system of a render tree generated by an application is different from a reference coordinate system in which the third process performs a draw operation in the render tree, the first parameter is added to a rendering property, and then the reference coordinate system of the draw operation is transformed based on the first parameter, to implement a correct draw operation.

According to a second aspect, an interface generation method provided in an embodiment of this application includes: A third process running on a second electronic device receives a first render tree and a second render tree, where the first render tree is generated by a first process running on a first electronic device, the first render tree is used to draw an interface of the first process, the second render tree is generated by a second process running on the second electronic device, and the second render tree is used to draw an interface of the second process; and the third process generates a target interface based on the first render tree and the second render tree, where the target interface includes the interface of the first process and the interface of the second process, and the target interface is displayed in a first display area.

In the foregoing embodiment, an interface including one or more application interfaces is generated based on render trees of one or more applications in a display area, thereby reducing a quantity of rendering times, reducing power consumption of the electronic device, and improving user experience.

With reference to some embodiments of the second aspect, in some embodiments, that the third process generates a first target interface based on the first render tree and the second render tree specifically includes: The third process generates a first target render tree based on the first render tree and the second render tree; and the third process generates the first target interface based on the first target render tree.

In the foregoing embodiment, the third process may merge render trees of one or more applications into one target render tree, so that an interface may be generated based on the target render tree. The interface includes interfaces of the one or more applications. It is clear that the interface including the one or more applications can be generated through one-time rendering, that is, one rendering process from a render tree to a bitmap, so that a quantity of rendering times is reduced, and power consumption of the electronic device is reduced.

With reference to some embodiments of the second aspect, in some embodiments, that the third process generates a first target render tree based on the first render tree and the second render tree specifically includes: The third process creates a root render node as a root node of the first target render tree, and uses the first render tree and the second render tree as child nodes of the root render node.

In the foregoing embodiment, a new root node may be created, and render trees of a plurality of applications may be mounted onto child nodes of the root node, to implement creation of a target render tree.

With reference to some embodiments of the second aspect, in some embodiments, the method further includes: The third process deletes a render node in the first target render tree based on a Z-order of the first render tree and a Z-order of the second render tree, where the deleted render node corresponds to a fully shielded view.

In the foregoing embodiment, the third process may optimize a parameter in the target render tree, for example, delete a render node corresponding to a fully shielded view in an interface, to reduce overdrawing.

With reference to some embodiments of the second aspect, in some embodiments, the method further includes: The third process deletes a draw operation in the first target render tree based on a Z-order of the first render tree and a Z-order of the second render tree, where the deleted draw operation corresponds to a fully shielded graphic.

In the foregoing embodiment, the third process may optimize a parameter in the target render tree, for example, delete a render node corresponding to a fully shielded graphic in an interface, to reduce overdrawing.

With reference to some embodiments of the second aspect, in some embodiments, the method further includes: In a process in which the third process generates the first target interface based on the first render tree and the second render tree, the third process performs merging or batching on a first draw operation and a second draw operation, where the first draw operation belongs to the first render tree, and the second draw operation belongs to the second render tree.

In the foregoing embodiment, the third process may merge or batch draw operations in the target render tree, to increase an interface generation rate, reduce frame freezing, reduce power consumption of the electronic device, and improve user experience.

With reference to some embodiments of the second aspect, in some embodiments, the method further includes: The third process determines off-screen rendering logic of the interface of the first process, where the off-screen rendering logic includes at least one of window rounding, color transform, rotation, and scaling; and the third process adds an off-screen rendering property to a rendering property of the first render tree based on the off-screen rendering logic of the interface of the first process, where the off-screen rendering property includes at least one of a rounding property, a color property, a rotation property, and a scaling property. The off-screen rendering property one-to-one corresponds to the off-screen rendering logic, and the off-screen rendering property is used to modify a draw operation in the process in which the third process generates the first target interface based on the first render tree and the second render tree, to implement the off-screen rendering logic.

In the foregoing embodiment, the off-screen rendering property is added to the render tree, so that in a process of performing a draw operation on a surface, an off-screen-rendered graphic can be directly drawn based on the off-screen rendering property, and there is no need to perform off-screen rendering on an entire bitmap and then perform layer composition after drawing is completed. This can avoid off-screen rendering, thereby reducing a quantity of rendering times and off-screen rendering overheads, reducing power consumption of the electronic device, and improving user experience.

With reference to some embodiments of the second aspect, in some embodiments, when a reference coordinate system of the first render tree is a first coordinate system, a reference coordinate system corresponding to the first display area is a second coordinate system, and the first coordinate system is different from the second coordinate system, the method further includes: The third process determines a first parameter based on the first coordinate system and the second coordinate system, and adds the first parameter to the rendering property of the first render tree; and in the process in which the third process generates the first target interface based on the first render tree and the second render tree, the third process modifies a reference coordinate system of the first draw operation based on the first parameter, where the first draw operation belongs to the first render tree.

In the foregoing embodiment, when a reference coordinate system of a render tree generated by an application is different from a reference coordinate system in which the third process performs a draw operation in the render tree, the first parameter is added to a rendering property, and then the reference coordinate system of the draw operation is transformed based on the first parameter, to implement a correct draw operation.

According to a third aspect, an embodiment of this application provides an electronic device. The electronic device includes one or more processors and a memory, the memory is coupled to the one or more processors, the memory is configured to store computer program code, the computer program code includes computer instructions, and the one or more processors invoke the computer instructions, so that the electronic device performs the following operations: A first process generates a first render tree, where the first render tree is used to draw an interface of the first process; a second process generates a second render tree, where the second render tree is used to draw an interface of the second process; and a third process generates a first target interface based on the first render tree and the second render tree, where the first target interface includes the interface of the first process and the interface of the second process, and the first target interface is displayed in a first display area.

In the foregoing embodiment, an interface including one or more application interfaces is generated based on render trees of one or more applications in a display area, thereby reducing a quantity of rendering times, reducing power consumption of the electronic device, and improving user experience.

With reference to some embodiments of the third aspect, in some embodiments, the one or more processors are specifically configured to invoke the computer instructions, so that the electronic device performs the following operations: The third process generates a first target render tree based on the first render tree and the second render tree; and the third process generates the first target interface based on the first target render tree.

With reference to some embodiments of the third aspect, in some embodiments, the one or more processors are specifically configured to invoke the computer instructions, so that the electronic device performs the following operations: The third process creates a root render node as a root node of the first target render tree, and uses the first render tree and the second render tree as child nodes of the root render node.

With reference to some embodiments of the third aspect, in some embodiments, the one or more processors are further configured to invoke the computer instructions, so that the electronic device performs the following operation: The third process deletes a render node in the first target render tree based on a Z-order of the first render tree and a Z-order of the second render tree, where the deleted render node corresponds to a fully shielded view.

With reference to some embodiments of the third aspect, in some embodiments, the one or more processors are further configured to invoke the computer instructions, so that the electronic device performs the following operation: The third process deletes a draw operation in the first target render tree based on a Z-order of the first render tree and a Z-order of the second render tree, where the deleted draw operation corresponds to a fully shielded graphic.

With reference to some embodiments of the third aspect, in some embodiments, the one or more processors are further configured to invoke the computer instructions, so that the electronic device performs the following operation: In a process in which the third process generates the first target interface based on the first render tree and the second render tree, the third process performs merging or batching on a first draw operation and a second draw operation, where the first draw operation belongs to the first render tree, and the second draw operation belongs to the second render tree.

With reference to some embodiments of the third aspect, in some embodiments, the one or more processors are further configured to invoke the computer instructions, so that the electronic device performs the following operations: The third process determines off-screen rendering logic of the interface of the first process, where the off-screen rendering logic includes at least one of window rounding, color transform, rotation, and scaling; and the third process adds an off-screen rendering property to a rendering property of the first render tree based on the off-screen rendering logic of the interface of the first process, where the off-screen rendering property includes at least one of a rounding property, a color property, a rotation property, and a scaling property. The off-screen rendering property one-to-one corresponds to the off-screen rendering logic, and the off-screen rendering property is used to modify a draw operation in the process in which the third process generates the first target interface based on the first render tree and the second render tree, to implement the off-screen rendering logic.

With reference to some embodiments of the third aspect, in some embodiments, the one or more processors are further configured to invoke the computer instructions, so that the electronic device performs the following operations: The third process determines a first parameter based on the first coordinate system and the second coordinate system, and adds the first parameter to the rendering property of the first render tree; and in the process in which the third process generates the first target interface based on the first render tree and the second render tree, the third process modifies a reference coordinate system of the first draw operation based on the first parameter, where the first draw operation belongs to the first render tree.

According to a fourth aspect, an embodiment of this application provides an electronic device. The electronic device includes one or more processors and a memory, the memory is coupled to the one or more processors, the memory is configured to store computer program code, the computer program code includes computer instructions, and the one or more processors invoke the computer instructions, so that the electronic device performs the following operations: A third process running on a second electronic device receives a first render tree and a second render tree, where the first render tree is generated by a first process running on a first electronic device, the first render tree is used to draw an interface of the first process, the second render tree is generated by a second process running on the second electronic device, and the second render tree is used to draw an interface of the second process; and the third process generates a target interface based on the first render tree and the second render tree, where the target interface includes the interface of the first process and the interface of the second process, and the target interface is displayed in a first display area.

In the foregoing embodiment, an interface including one or more application interfaces is generated based on render trees of one or more applications in a display area, thereby reducing a quantity of rendering times, reducing power consumption of the electronic device, and improving user experience.

With reference to some embodiments of the fourth aspect, in some embodiments, the one or more processors are specifically configured to invoke the computer instructions, so that the electronic device performs the following operations: The third process generates a first target render tree based on the first render tree and the second render tree; and the third process generates the first target interface based on the first target render tree.

With reference to some embodiments of the fourth aspect, in some embodiments, the one or more processors are specifically configured to invoke the computer instructions, so that the electronic device performs the following operations: The third process creates a root render node as a root node of the first target render tree, and uses the first render tree and the second render tree as child nodes of the root render node.

With reference to some embodiments of the fourth aspect, in some embodiments, the one or more processors are further configured to invoke the computer instructions, so that the electronic device performs the following operation: The third process deletes a render node in the first target render tree based on a Z-order of the first render tree and a Z-order of the second render tree, where the deleted render node corresponds to a fully shielded view.

With reference to some embodiments of the fourth aspect, in some embodiments, the one or more processors are further configured to invoke the computer instructions, so that the electronic device performs the following operation: The third process deletes a draw operation in the first target render tree based on a Z-order of the first render tree and a Z-order of the second render tree, where the deleted draw operation corresponds to a fully shielded graphic.

With reference to some embodiments of the fourth aspect, in some embodiments, the one or more processors are further configured to invoke the computer instructions, so that the electronic device performs the following operation: In a process in which the third process generates the first target interface based on the first render tree and the second render tree, the third process performs merging or batching on a first draw operation and a second draw operation, where the first draw operation belongs to the first render tree, and the second draw operation belongs to the second render tree.

With reference to some embodiments of the fourth aspect, in some embodiments, the one or more processors are further configured to invoke the computer instructions, so that the electronic device performs the following operations: The third process determines off-screen rendering logic of the interface of the first process, where the off-screen rendering logic includes at least one of window rounding, color transform, rotation, and scaling; and the third process adds an off-screen rendering property to a rendering property of the first render tree based on the off-screen rendering logic of the interface of the first process, where the off-screen rendering property includes at least one of a rounding property, a color property, a rotation property, and a scaling property. The off-screen rendering property one-to-one corresponds to the off-screen rendering logic, and the off-screen rendering property is used to modify a draw operation in the process in which the third process generates the first target interface based on the first render tree and the second render tree, to implement the off-screen rendering logic.

With reference to some embodiments of the fourth aspect, in some embodiments, the one or more processors are further configured to invoke the computer instructions, so that the electronic device performs the following operations: The third process determines a first parameter based on the first coordinate system and the second coordinate system, and adds the first parameter to the rendering property of the first render tree; and in the process in which the third process generates the first target interface based on the first render tree and the second render tree, the third process modifies a reference coordinate system of the first draw operation based on the first parameter, where the first draw operation belongs to the first render tree.

According to a fifth aspect, an embodiment of this application provides a chip system. The chip system is applied to an electronic device, the chip system includes one or more processors, and the processor is configured to invoke computer instructions, so that the electronic device performs the method according to any one of the first aspect and the second aspect and the possible implementations of the first aspect and the second aspect.

According to a sixth aspect, an embodiment of this application provides a computer program product including instructions. When the computer program product runs on an electronic device, the electronic device is enabled to perform the method according to any one of the first aspect and the second aspect and the possible implementations of the first aspect and the second aspect.

According to a seventh aspect, an embodiment of this application provides a computer-readable storage medium, including instructions. When the instructions are run on an electronic device, the electronic device is enabled to perform the method according to any one of the first aspect and the second aspect and the possible implementations of the first aspect and the second aspect.

It may be understood that the electronic devices provided in the third aspect and the fourth aspect, the chip system provided in the fifth aspect, the computer program product provided in the sixth aspect, and the computer storage medium provided in the seventh aspect are all used to perform the method provided in embodiments of this application.

Therefore, for beneficial effects that can be achieved, refer to the beneficial effects in the corresponding method. Details are not described herein again.

**BRIEF DESCRIPTION OF DRAWINGS**

FIG. 1A and FIG. 1B each are a schematic diagram of an example of an interface of an electronic device according to an embodiment of this application;

FIG. 2 is a schematic diagram of an example of generating a bitmap by an application according to an embodiment of this application;

FIG. 3 is a schematic diagram of an example of a render tree according to an embodiment of this application;

FIG. 4 is a schematic diagram of an example in which a bitmap is used as a layer to participate in layer composition according to an embodiment of this application;

FIG. 5 is a schematic diagram of an example of layer composition according to an embodiment of this application;

FIG. 6 is a schematic diagram of another example in which a SurfaceFlinger performs layer composition according to an embodiment of this application;

FIG. 7A and FIG. 7B-1 and FIG. 7B-2 are schematic diagrams of another example of layer composition according to an embodiment of this application;

FIG. 8 is a schematic diagram of an example of a system architecture of an interface generation method according to an embodiment of this application;

FIG. 9 is a schematic diagram of an example of an interface generation method according to an embodiment of this application;

FIG. 10 is a schematic diagram of an example of an architecture of a UniRender according to an embodiment of this application;

FIG. 11 is a schematic diagram of an example in which a shared memory transfers a render tree according to an embodiment of this application;

FIG. 12A and FIG. 12B each are a schematic diagram of an example of a storage structure of a render tree in a shared memory according to an embodiment of this application;

FIG. 13 is a schematic diagram of an example of an architecture of a UniRender according to an embodiment of this application;

FIG. 14 is a schematic diagram of an example in which an application writes a render tree into a shared memory according to an embodiment of this application;

FIG. 15 is a schematic diagram of another example in which an application writes a render tree into a shared memory according to an embodiment of this application;

FIG. 16A-1 and FIG. 16A-2 to FIG. 16C are schematic diagrams of an example of a scenario of drawing logic that triggers off-screen rendering according to an embodiment of this application;

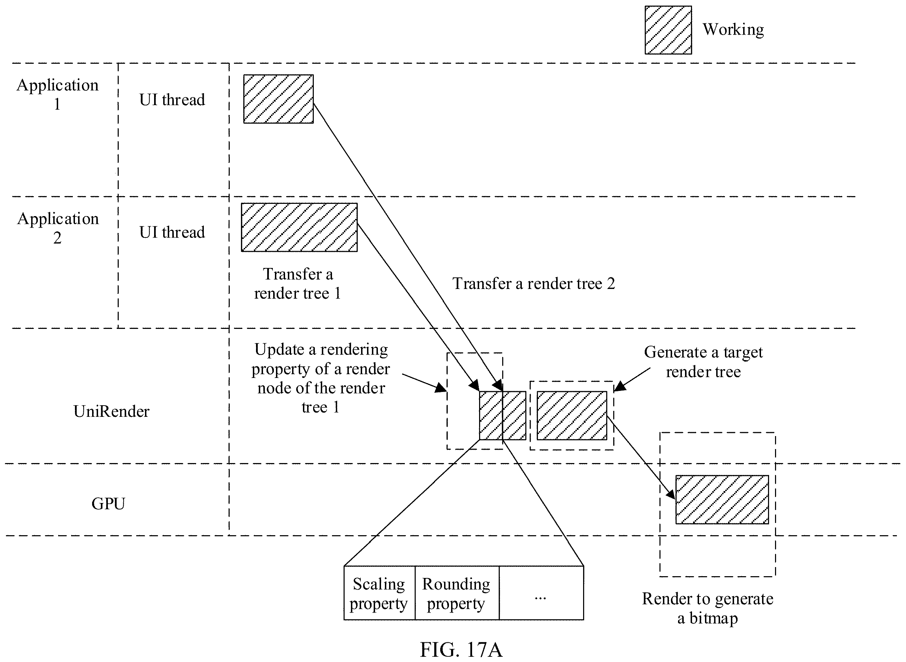

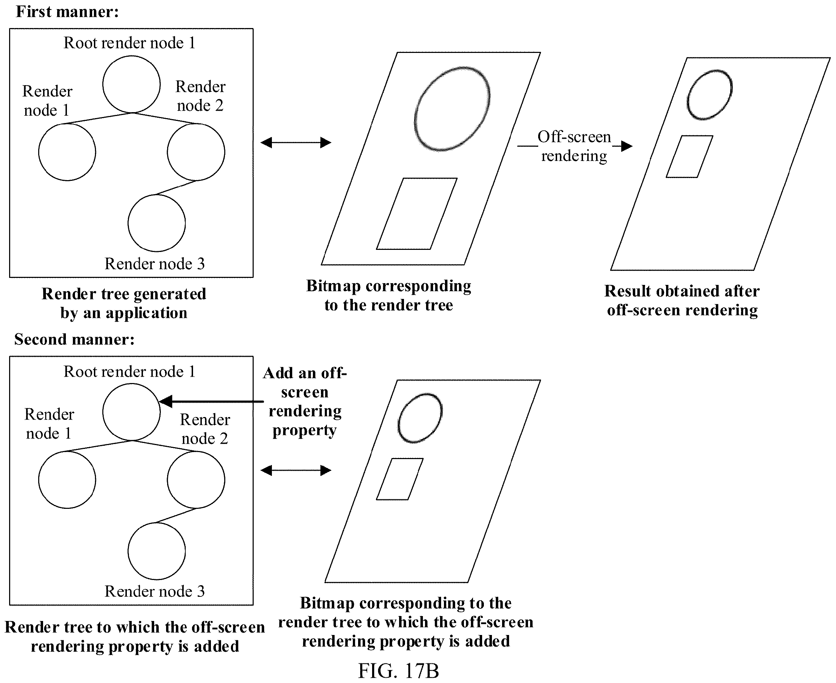

FIG. 17A and FIG. 17B are schematic diagrams of an example in which a UniRender moves an off-screen rendering trigger instruction forward according to an embodiment of this application;

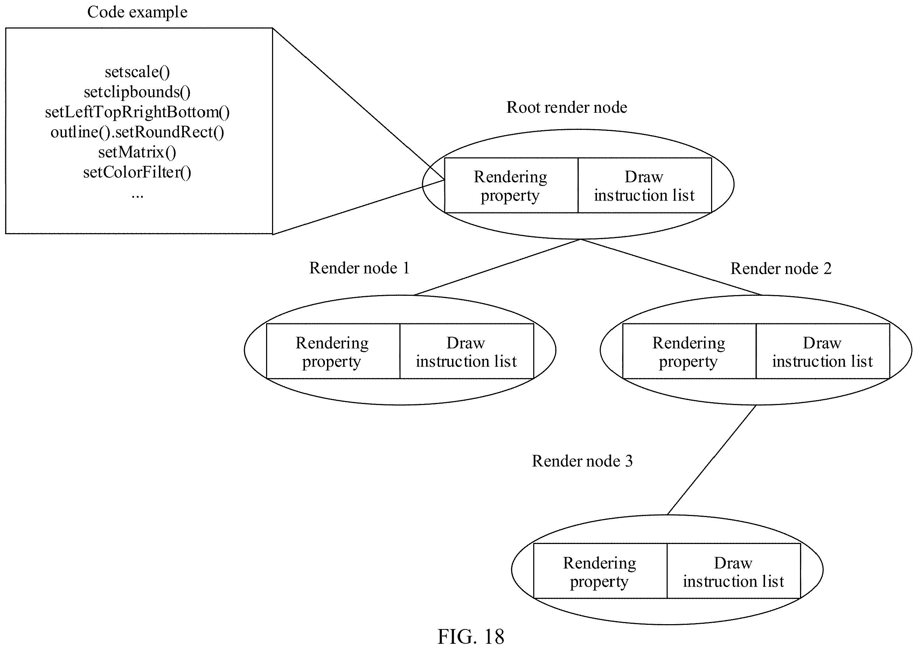

FIG. 18 is a schematic diagram of an example in which a UniRender modifies a render node property of a render tree according to an embodiment of this application;

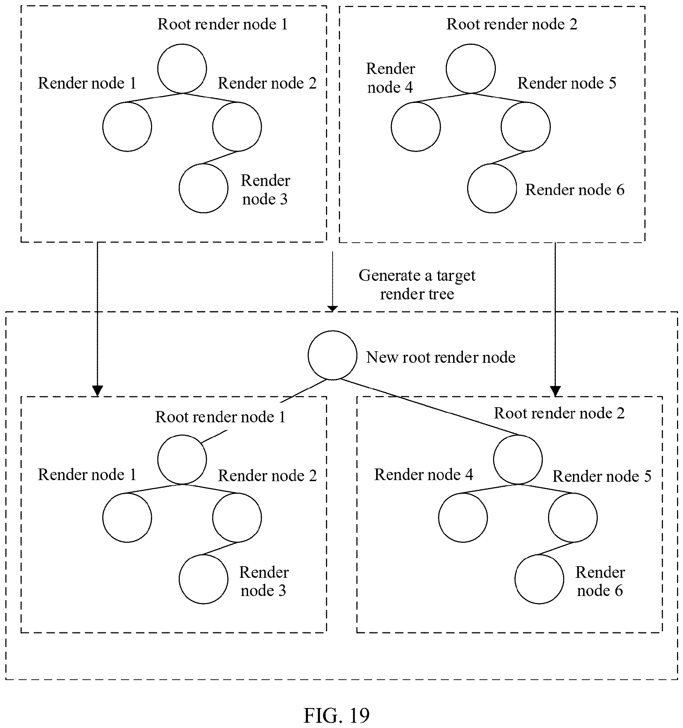

FIG. 19 is a schematic diagram of an example of merging a plurality of render trees obtained after an off-screen rendering instruction is moved forward into one target render tree according to an embodiment of this application;

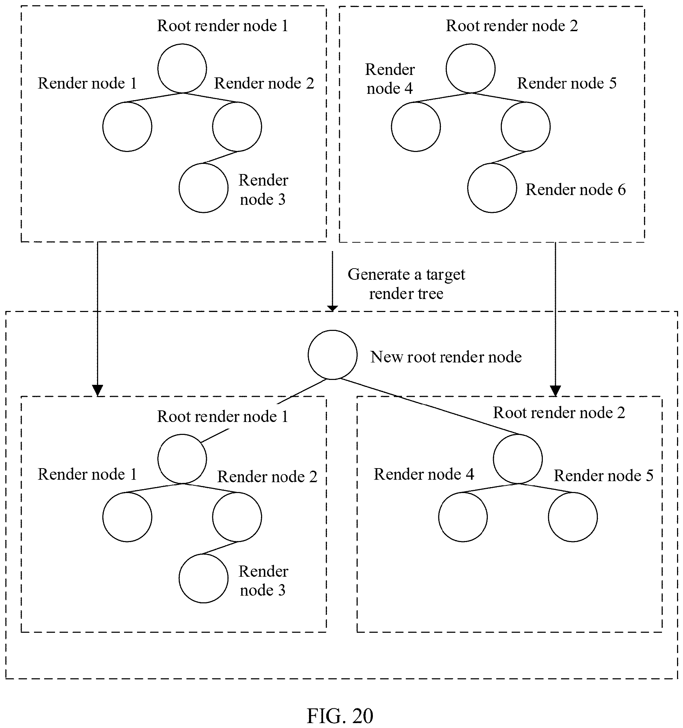

FIG. 20 is a schematic diagram of an example of merging a plurality of render trees obtained after an off-screen rendering instruction is moved forward into one target render tree according to an embodiment of this application;

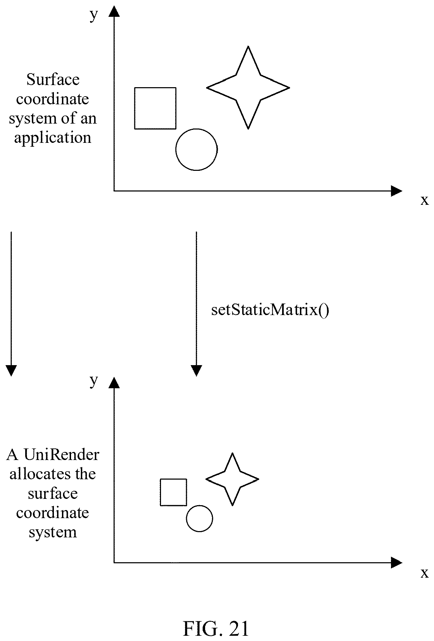

FIG. 21 is a schematic diagram of an example of setStaticMatrix() according to an embodiment of this application;

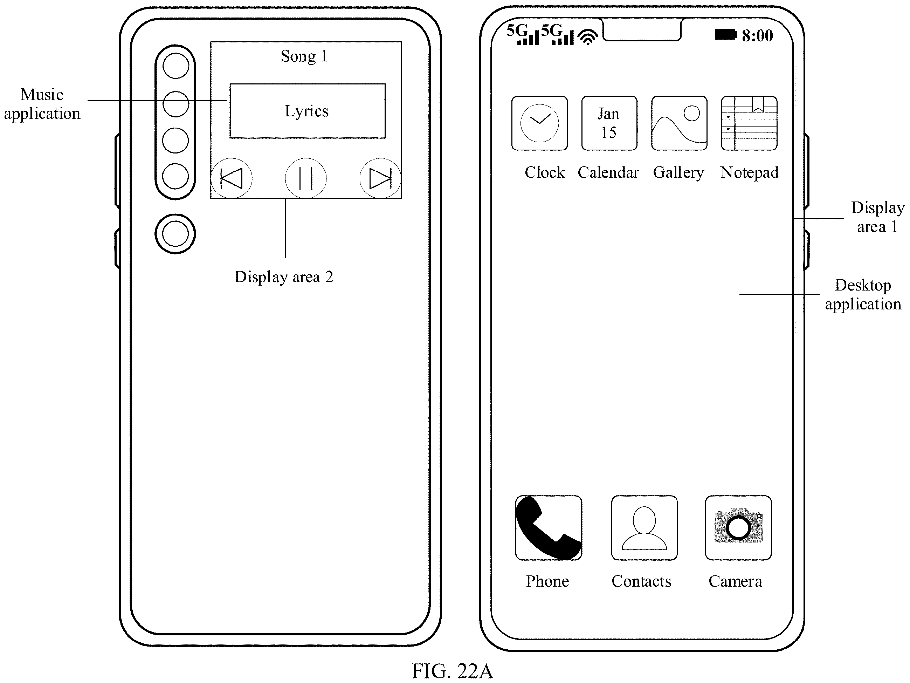

FIG. 22A to FIG. 22C are schematic diagrams of an example of a multi-display-area scenario according to an embodiment of this application;

FIG. 23A-1 and FIG. 23A-2 to FIG. 23C are schematic diagrams of another example of a multi-display-area scenario according to an embodiment of this application;

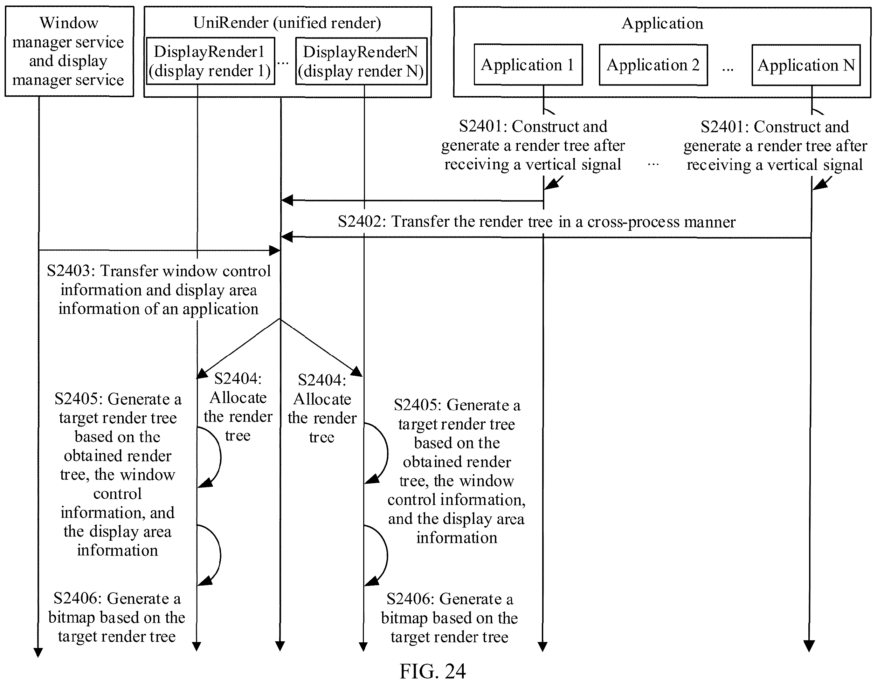

FIG. 24 is a schematic diagram of another example of an interface generation method according to an embodiment of this application;

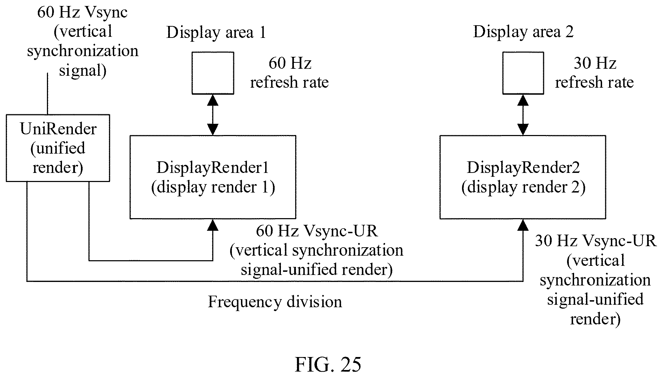

FIG. 25 is a schematic diagram of an example in which a UniRender process performs frequency division or frequency multiplication on a vertical synchronization signal according to an embodiment of this application;

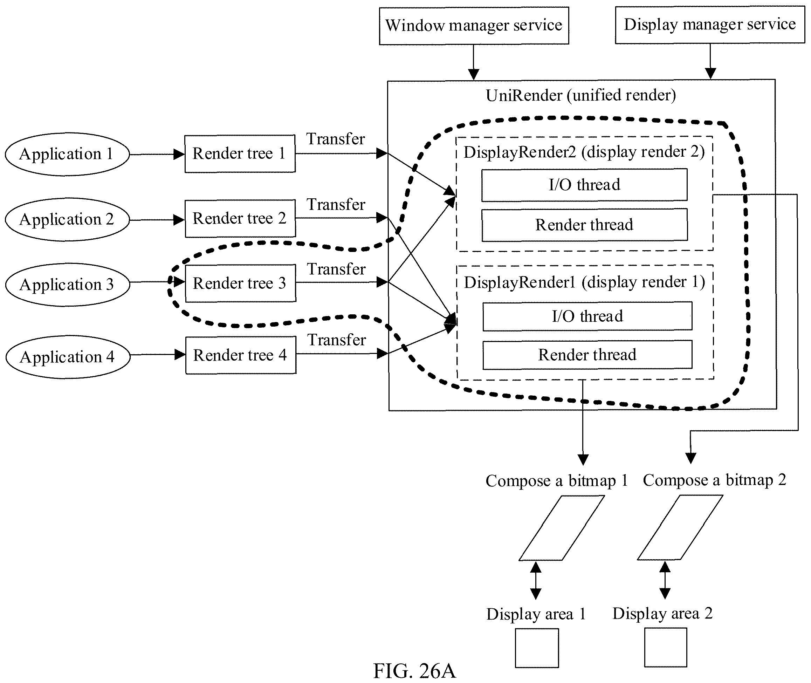

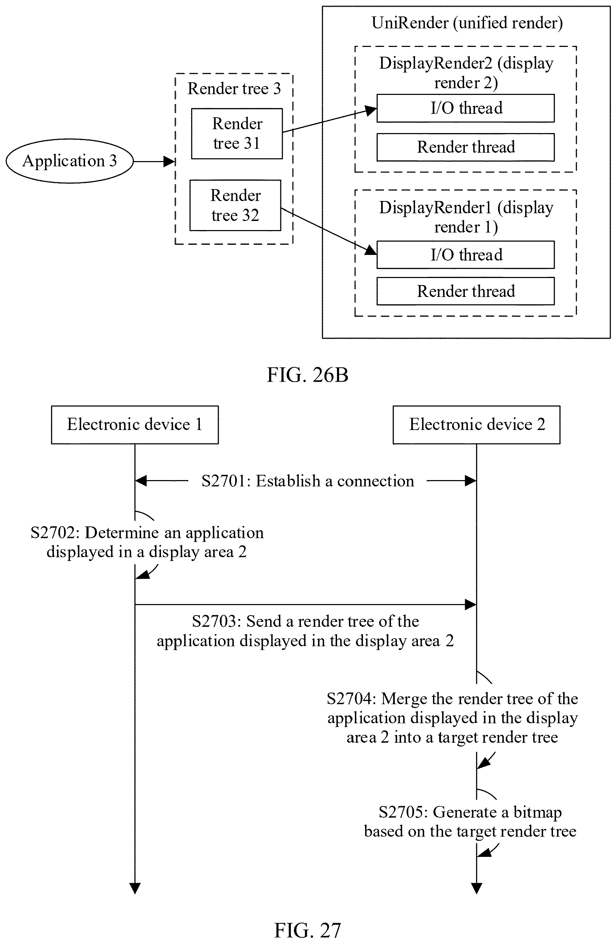

FIG. 26A and FIG. 26B are schematic diagrams of an example of a data flow when an electronic device implements an interface generation method according to an embodiment of this application;

FIG. 27 is a schematic diagram of another example of an interface generation method according to an embodiment of this application;

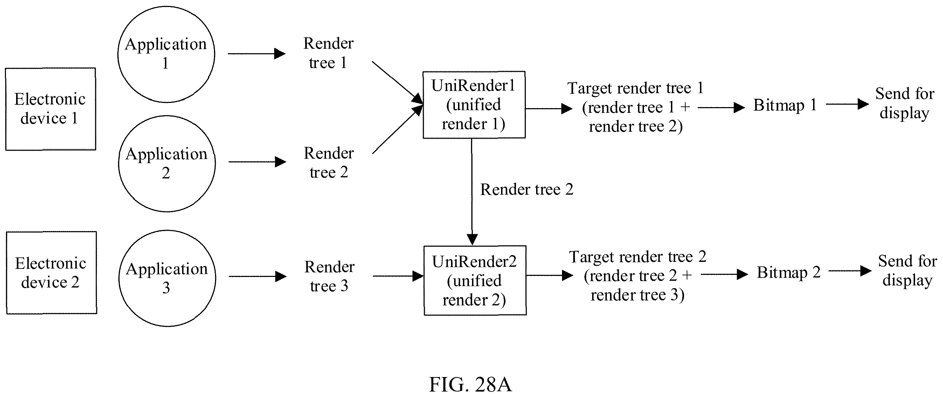

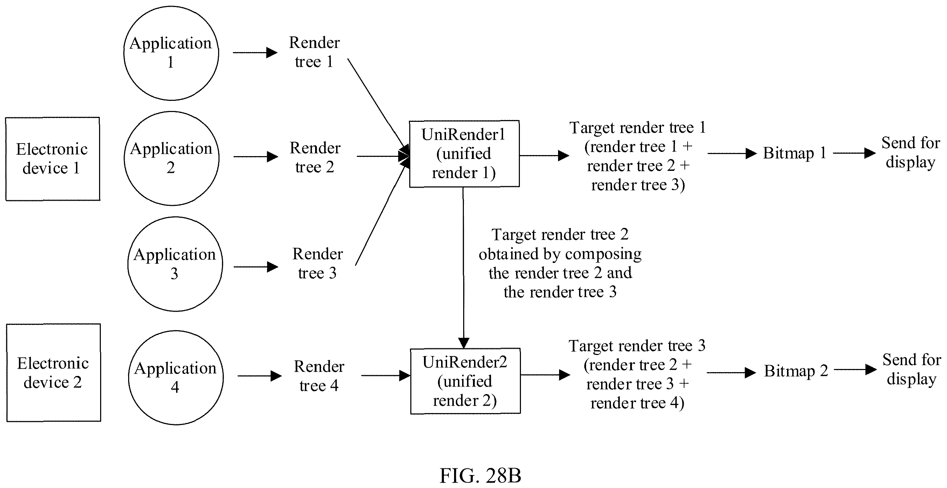

FIG. 28A and FIG. 28B each are a schematic diagram of an example of merging render trees into a target render tree according to an embodiment of this application;

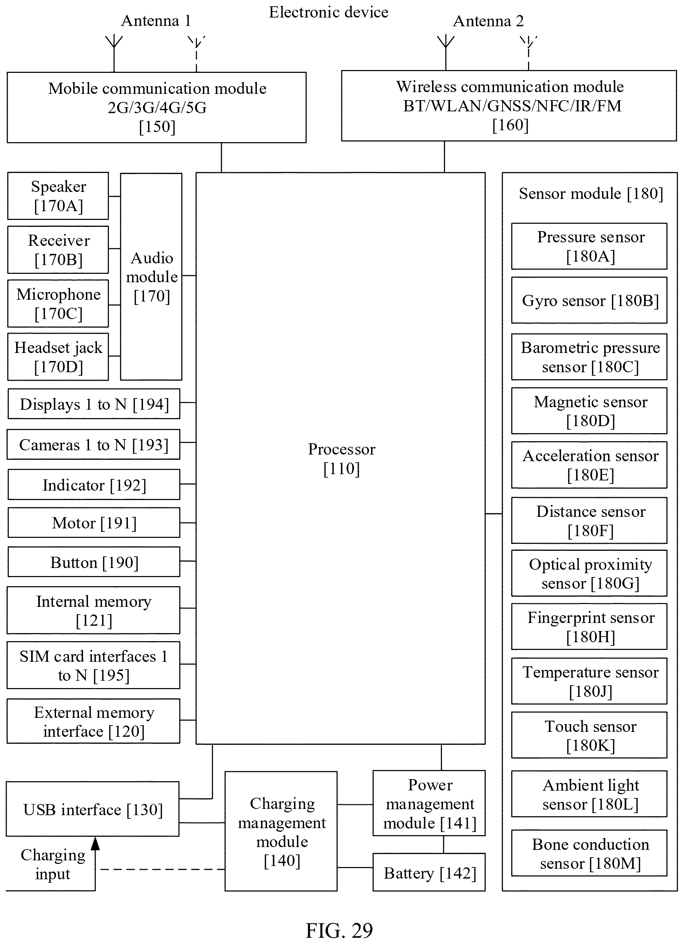

FIG. 29 is a schematic diagram of an example of a hardware structure of an electronic device according to an embodiment of this application; and

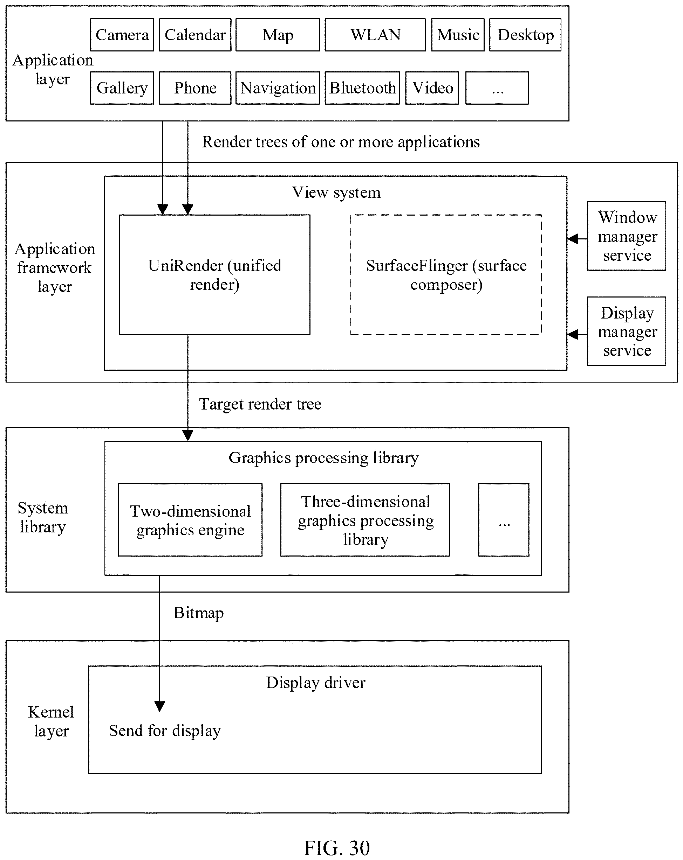

FIG. 30 is a schematic diagram of an example of a software structure of an electronic device according to an embodiment of this application.

## DESCRIPTION OF EMBODIMENTS

The terms used in the following embodiments of this application are merely intended to describe specific embodiments, but are not intended to limit this application. As used in the specification of this application, the singular expressions "a", "one", "the", "the foregoing", "this", and "the one" are intended to also include plural expressions, unless otherwise expressly indicated in the context. It should be further understood that the term "and/or" used in this application refers to and includes any or all possible combinations of one or more listed items.

The following terms "first" and "second" are merely used for description, but should not be understood as indicating or implying relative importance or implying a quantity of indicated technical features. Therefore, a feature limited by "first" or "second" may explicitly or implicitly include one or more such features. In the descriptions of embodiments of this application, unless otherwise specified, "a plurality of' means two or more.

The term "user interface (user interface, UI)" in the following embodiments of this application is a medium interface for interaction and information exchange between an application or an operating system and a user, and implement conversion between an internal form of information and an acceptable form of the user. A user interface is source code compiled in a specific computer language such as Java or the extensible markup language (extensible markup language, XML). The interface source code is parsed and rendered on an electronic device, and finally presented as content that can be recognized by the user. A common presentation form of the user interface is a graphic user interface (graphic user interface, GUI), which refers to a user interface that is displayed in a graphical manner and that is related to a computer operation. The GUI may be a visible interface element displayed on a display of an electronic device, for example, a text, an icon, a button, a menu, a tab, a text box, a dialog box, a status bar, a navigation bar, or a widget.

For ease of understanding, the following first describes related terms and related concepts in embodiments of this application. Terms used in embodiments of the present invention are merely used to explain specific embodiments of the present invention, but are not intended to limit the present invention.

An interface is used as a medium interface for interaction and information exchange between an application and a user. Each time a vertical synchronization signal arrives, an electronic device needs to generate, for a foreground application, an interface of the application. A frequency of the vertical synchronization signal is related to a refresh rate of a screen of the electronic device. For example, the frequency of the vertical synchronization signal is the same as the refresh rate of the screen of the electronic device.

To be specific, each time before the electronic device refreshes content displayed on the screen, the electronic device needs to generate the application interface for the foreground application. In this case, when the screen is refreshed, the newly generated application interface is displayed to the user.

The interface displayed by the electronic device on the electronic device may include interfaces of one or more applications, that is, the electronic device needs to generate interfaces for one or more applications, and compose the interfaces, to obtain a composed interface to be displayed on the screen.

When the electronic device generates an interface of an application, the application needs to render and generate a bitmap (bitmap), and transfer the bitmap of the application to a surface composer (SurfaceFlinger). That is, the application serves as a producer and draws and generates a bitmap, and stores the bitmap in a buffer queue (BufferQueue) provided by the SurfaceFlinger. The SurfaceFlinger serves as a consumer and continuously obtains the bitmap generated by the application from the BufferQueue. The bitmap is located on a surface generated by the application. The surface is put in the BufferQueue.

After the SurfaceFlinger obtains a bitmap of a visible application, the SurfaceFlinger and a hardware composition policy module (Hardware Composer, HWC) determine a layer composition mode in which the bitmap is used as a layer (layer). The SurfaceFlinger may determine the visible application by using a window manager service (Window Manager Service, WMS).

After obtaining off-screen rendering logic, such as rounding, rotation, color transform, and scaling, acting on a window of the application from the window manager service, the SurfaceFlinger may copy the bitmap of the application to an off-screen buffer for rendering, and obtain the bitmap for layer composition through off-screen rendering.

After application bitmaps are composed, the SurfaceFlinger/HWC puts a composed bitmap (the bitmap may also be referred to as a layer on the SurfaceFlinger) into a frame buffer (Frame Buffer) for transfer to a display subsystem (Display Subsystem, DSS). After obtaining the composed bitmap, the DSS may display the composed bitmap on the screen. The frame buffer may be an on-screen buffer (on-screenbuffer).

**(1) First, the following separately describes examples of (1.1) process of generating a bitmap by an application, (1.2) process of composing a bitmap by a SurfaceFlinger/HWC, and (1.3) off-screen rendering.**

(1.1) Process of generating a bitmap by an application

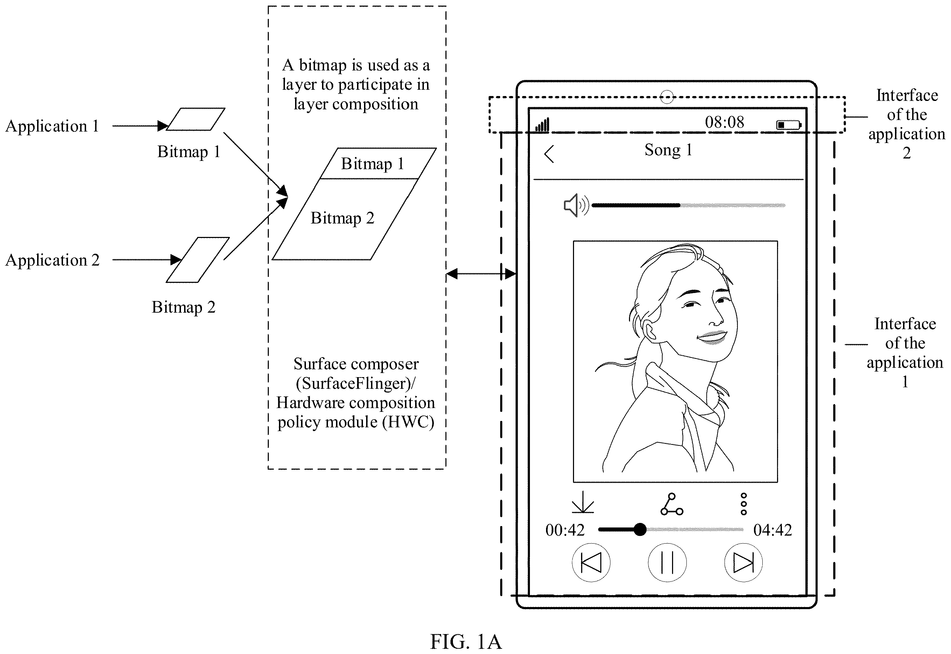

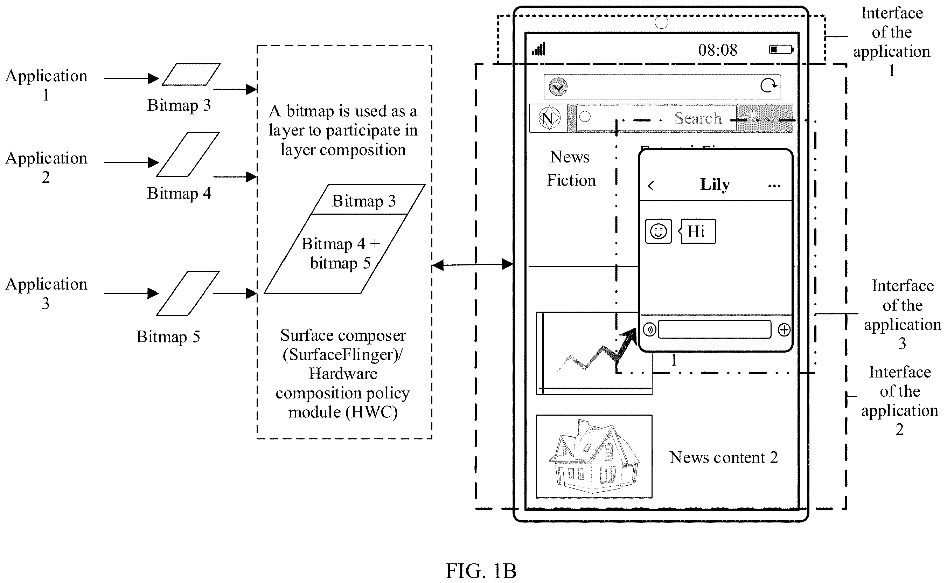

FIG. 1A and FIG. 1B each are a schematic diagram of an example of an interface of an electronic device according to an embodiment of this application.

As shown in FIG. 1A, interfaces of an application 1 and an application 2 are displayed on a screen of the electronic device. The interface of the application 1 may be referred to as a status bar. In FIG. 1A, the application 1 may be an operating system, and the application 2 may be a music application.

Before displaying the interface shown in FIG. 1A, the electronic device needs to separately and independently generate bitmaps of applications. An interface of the status bar is maintained by the operating system, that is, it may be considered that an application that generates a bitmap of the status bar is the operating system. To be specific, after generating a bitmap 1, the operating system transfers the bitmap 1 to a SurfaceFlinger; and after generating a bitmap 2, the music application transfers the bitmap 2 to the SurfaceFlinger. The bitmap 1 carries image information of the status bar, and the bitmap 2 carries image information of the music application.

After receiving the bitmap 1 and the bitmap 2, the SurfaceFlinger/HWC uses the bitmap 1 and the bitmap 2 as layers to perform layer composition. For content of layer composition, refer to the text description in (1.2) process of composing a bitmap by a SurfaceFlinger/HWC, and details are not described herein again.

As shown in FIG. 1B, interfaces of an application 1, an application 2, and an application 3 are displayed on a screen of the electronic device. The interface of the application 1 may be referred to as a status bar. In FIG. 1B, the application 1 may be an operating system, the application 2 may be a browser application, and the application 3 may be an SMS application.

Before displaying the interface shown in FIG. 1B, the electronic device also needs to separately and independently generate bitmaps of applications.

To be specific, after generating a bitmap 3, the operating system transfers the bitmap 3 to a SurfaceFlinger; after generating a bitmap 4, the SMS application transfers the bitmap 4 to the SurfaceFlinger; and after generating a bitmap 5, the news application transfers the bitmap 5 to the SurfaceFlinger. The bitmap 3 carries image information of the status bar, the bitmap 4 carries image information of the SMS application, and the bitmap 5 carries image information of the news application.

After receiving the bitmap 3, the bitmap 4, and the bitmap 5, the SurfaceFlinger/HWC uses the bitmap 3, the bitmap 4, and the bitmap 5 as layers to perform layer composition. For content of layer composition, refer to the text description in (1.2) process of composing a bitmap by a SurfaceFlinger/HWC, and details are not described herein again.

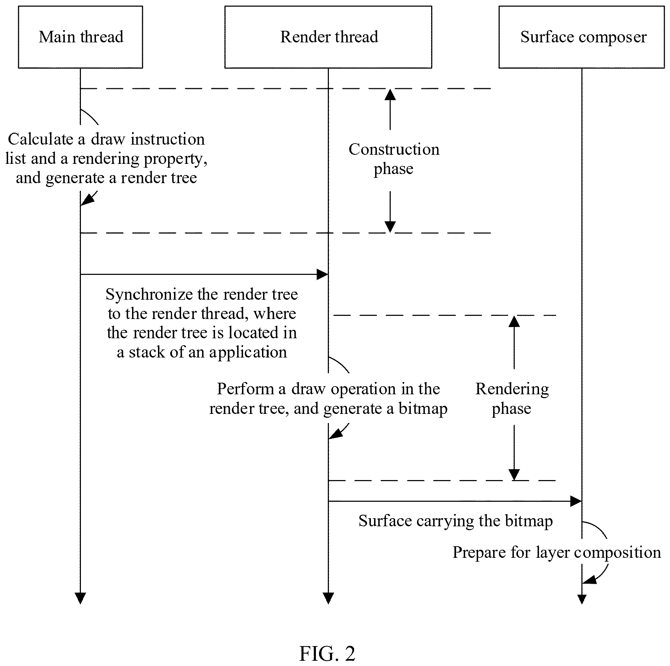

A process of generating a bitmap by an application is shown in FIG. 2.

FIG. 2 is a schematic diagram of an example of generating a bitmap by an application according to an embodiment of this application.

As shown in FIG. 2, after receiving a vertical synchronization signal (Vsync-APP), the application starts to generate a bitmap. Specific steps include three steps, which are as follows:

① A view structure (viewhierarchy) is disabled. A main thread (UI thread, UI Thread) traverses views (view) of the application, determines and stores a draw operation of each view, and records the view and the draw operation (Draw Operation Struct, DrawOP) related to the view into a draw instruction list (displaylist) of a render node (RenderNode) of a render tree.

The view is a basic element that forms an application interface, and one control on the interface may correspond to one or more views.

The draw operation is a data structure, and is used to draw a graphic, for example, draw a line, draw a width, draw a rectangle, or draw a text. The draw operation is converted to API calling of an image processing library on the render node, for example, API calling of OpenGL. For example, DrawLineOp is a data structure, and the data structure contains information about drawing data, such as a length and a width of a line.

The draw instruction list may be a buffer, and the buffer records all draw operations or identifiers of all draw operations included in one frame of interface of the application, such as addresses and sequence numbers. When the application has a plurality of windows or is displayed in different display areas (display), a plurality of render trees need to be independently generated. A plurality of draw instruction lists corresponding to different windows or display areas are independently generated.

In embodiments of this application, the display area may be a screen, a virtual screen (VirtualDisplay), or the like. The virtual screen may be an area used by the electronic device to carry content displayed on the screen during screen recording.

The render tree is generated by the UI thread and is used to generate a data structure of an application interface. The render tree may include a plurality of render nodes, and each render node includes a rendering property and a draw instruction list. The render tree records all information for generating one frame interface of the application.

② The UI thread transfers/synchronizes the render tree to a render thread (Render Thread), where the render tree is located in a stack (stack) of a process corresponding to the application, and may not be continuously distributed in terms of a physical address.

③ The render thread first obtains a hardware canvas (HardwareCanvas), and performs a draw operation in the render tree on the hardware canvas to generate a bitmap. The hardware canvas is located on a surface held by the application, and the surface carries a bitmap or data that is in another format and that is used to store image information.

It may be considered that ① is a construction phase, which is mainly responsible for determining properties such as a size, a location, and transparency of each view in the application. For example, a drawLine in the view may be packaged into a DrawLineOp during construction, and the DrawLineOp includes drawing data such as a length and a width of a line, may further include interface calling corresponding to a drawLineOP of an underlying graphics processing library, and is used to invoke the underlying graphics library to generate a bitmap in a rendering phase.

Similarly, it may be considered that ③ is a rendering phase, which is mainly responsible for traversing render nodes of the render tree, performing a draw operation on each render node, and generating a bitmap on the hardware canvas. In this process, the render thread invokes the underlying graphics processing library, for example, OpenGL, to invoke a GPU to complete rendering, so as to generate the bitmap.

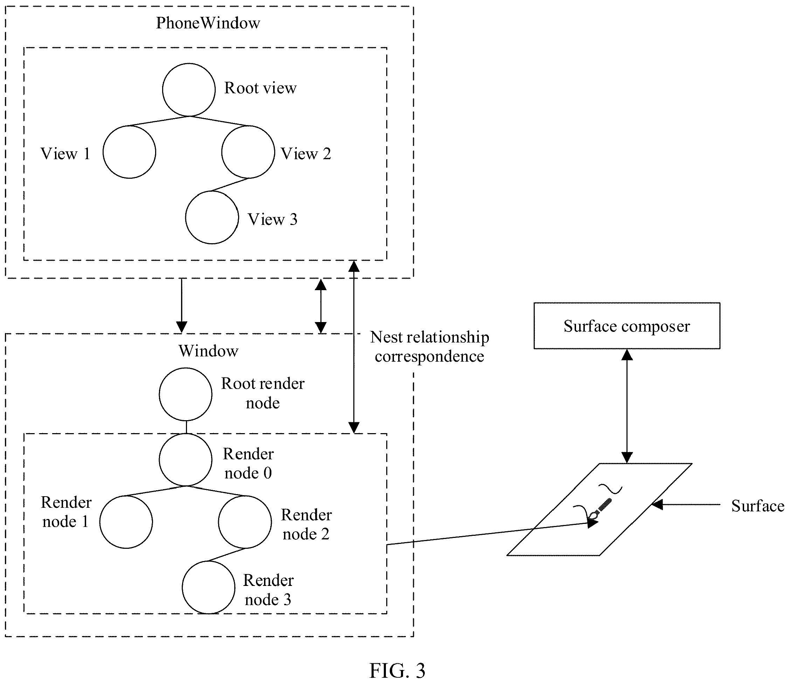

FIG. 3 is a schematic diagram of an example of a render tree according to an embodiment of this application.

An interface that needs to be displayed by an application includes a plurality of nested views, and different views have a parent-child relationship. Therefore, a parent-child relationship between render nodes of a render tree generated by traversing views is the same as a parent-child relationship between the views. In other words, a parent-child relationship between views determines a nesting relationship between different render nodes. Then, the render thread can correctly render the interface of the application when generating a bitmap according to the render tree.

One view may correspond to one or more render nodes. A root view (DecorView) corresponds to a root render node (RootRenderNode). In other words, the nesting relationship between render nodes corresponds to the parent-child relationship between views. The render node further includes a rendering property (properties), which is used to determine a location, a size, transparency, and the like of a view corresponding to the render node on a surface when a bitmap is generated through rendering.

For example, a structure of the interface of the application is as follows: A PhoneWindow of the application carries a root view, child views of the root view are a view 1 and a view 2, and a child view of the view 2 is a view 3. In this case, a structure of a render tree generated by a UI thread of the application is as follows: A root render node corresponding to the PhoneWindow is a root node of the render tree, a child node of the root render node is a render node 0 corresponding to the root view, child nodes of the render node 0 are a render node 1 corresponding to the view 1 and a render node 2 corresponding to the view 2, and a child node of the render node 2 is a render node 3 corresponding to the view 3.

A correspondence between a view and a render node means that the render node includes all draw operations in the corresponding view.

After receiving the render tree synchronized by the UI thread, the render thread calls an OpenGL interface to render a bitmap on a surface of the application and sends the surface to a SurfaceFlinger for composition and display.

It should be noted that a computing resource of a CPU needs to be occupied in the construction phase, and a resource of a GPU needs to be occupied in the rendering phase.

It should be noted that, if hardware acceleration is not enabled, the application completes all operations in the construction phase and the rendering phase by using the UI thread, and does not need to perform packaging into a render node. After views of the application and draw operations of the views are traversed, the application applies to the SurfaceFlinger for an anonymous shared memory, and directly invokes an underlying graphics library in the memory to generate a bitmap.

It should be noted that content shown in FIG. 2 is a process in which an application generates a bitmap when hardware acceleration is enabled. When hardware acceleration is not enabled on the electronic device, the application generates a bitmap through software drawing. The software drawing includes the following.

① A view structure (viewhierarchy) is disabled. A UI thread traverses views of the application and records a draw operation of each view. ② The UI thread obtains a software canvas (Canvas) for drawing through an interface, for example, Surface.lockCanvas(), performs drawing on the canvas based on a stored draw operation list, and generates a bitmap. The software canvas is located on a surface generated by the application.

The surface held by the application is allocated by the SurfaceFlinger to the application through binder communication. A quantity of surfaces held by the application may be the same as a quantity of current windows (PhoneWindow) of the application.

After the process of generating the bitmap by the application is described, a process of composing a bitmap is described by using an example.

(1.2) Process of composing a bitmap by a SurfaceFlinger/HWC

The SurfaceFlinger is a system service on an electronic device, and is used to allocate a surface to an application, and use bitmaps on one or more surfaces as layers for layer composition. The HWC is a function module of a hardware abstraction layer (Hardware Abstraction Layer, HAL) responsible for composition and display in the electronic device, provides an interface for the upper-layer SurfaceFlinger, and invokes a capability of underlying hardware (such as a display driver, excluding a GPU), to perform layer composition.

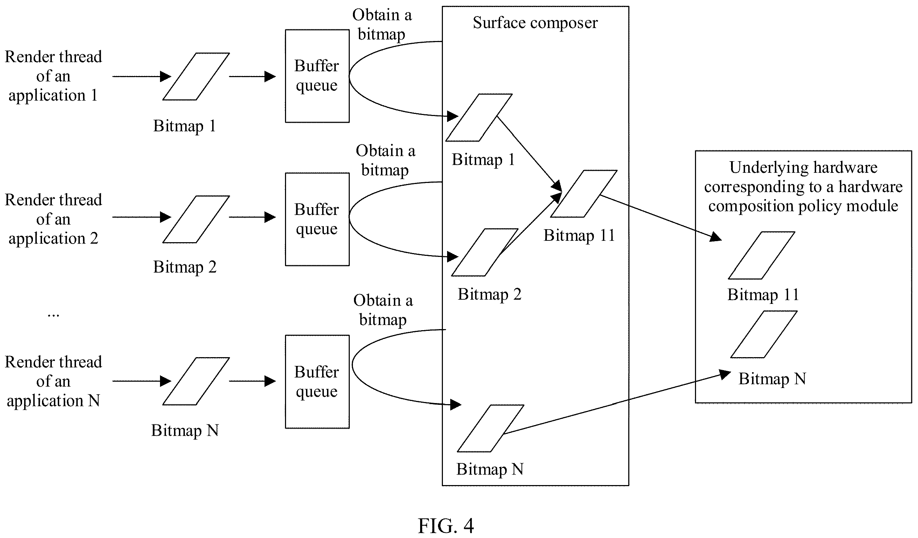

FIG. 4 is a schematic diagram of an example in which a bitmap is used as a layer to participate in layer composition according to an embodiment of this application.

As shown in FIG. 4, a render thread of an application generates a bitmap on a surface allocated by a Surface-Flinger to the application. The SurfaceFlinger maintains the surfaces of one or more applications by using a BufferQueue mechanism. In other words, the SurfaceFlinger can obtain bitmaps of different applications.

After obtaining bitmaps of one or more applications, the SurfaceFlinger may invoke a GPU to compose the plurality of bitmaps into one bitmap (bitmap composition is referred to as layer composition). The composition may also be referred to as Client composition or GLES composition.

After obtaining the bitmaps of the applications, the SurfaceFlinger may invoke underlying hardware (excluding the GPU) through an HWC for composition. This composition mode is also referred to as Device composition.

The Client composition needs to invoke the GPU, and the Client composition may compose a plurality of layers, and complete composition of the layers in a pixel-by-pixel processing manner such as linear deepening.

The Device composition may compose a limited quantity of layers, and does not support composition in many pixel-by-pixel processing manners. When the Device composition composes a plurality of layers that do not have a location intersection on a screen, layer composition may not be performed. Instead, data on different surfaces is read and displayed when different locations on the screen are displayed.

As shown in FIG. 4, after obtaining a bitmap 1 of an application 1, a bitmap 2 of an application 2, ..., and a bitmap N of an application N, the SurfaceFlinger may perform Client composition on the bitmap 1 and the bitmap 2 to generate a bitmap 11. Then, the SurfaceFlinger performs Device composition on the bitmap 11 and the bitmap N by using the HWC to invoke the underlying hardware.

In the Device composition, the bitmap 11 and the bitmap N are temporarily stored. When display on the screen of the electronic device is required, a corresponding pixel is obtained from the bitmap 11/the bitmap N for display on the screen. For example, in the interface shown in FIG. 1B, the bitmap 11 is a bitmap composed by the SMS application and the news application, and the bitmap N is a bitmap of the status bar.

For the underlying hardware corresponding to the SurfaceFlinger or HWC, each bitmap is equivalent to one layer (Layer).

The layer composition mode may be determined by the underlying hardware corresponding to the HWC or may be determined by the SurfaceFlinger.

For example, after obtaining the bitmap, the SurfaceFlinger transfers a layer set to the underlying hardware by using the HWC, and the underlying hardware determines specific layers on which Client composition is to be performed and specific layers on which Device composition is to be performed. The underlying hardware marks a composition mode for layers in a layer list and returns composition modes of different layers to the SurfaceFlinger. The SurfaceFlinger composes layers marked with GPU composition and stores a composition result in a buffer. The SurfaceFlinger transfers the buffer and other layers marked with Overlay composition mode to the underlying hardware through the HWC. Then, the underlying hardware completes layer composition.

For another example, the SurfaceFlinger directly marks, with GPU composition, a layer related to off-screen rendering trigger logic, such as a window animation, in a layer composition process. The off-screen rendering trigger logic further includes logic that cannot be processed by the underlying hardware corresponding to the HWC, such as rounding, scaling, rotation, and color transform.

In addition to a bitmap generated by an application render thread, the surface allocated by the SurfaceFlinger of the application to the application further includes window control information such as a Z-order of a layer obtained from a window manager service. Therefore, the SurfaceFlinger may obtain the window control information of the layer from the surface to determine whether the layer requires GPU composition. The Z-order of the layer determines a ranking of the layer on a Z-axis, where the Z-axis is a direction perpendicular to the screen and is used to calculate a high-low relationship between different layers.

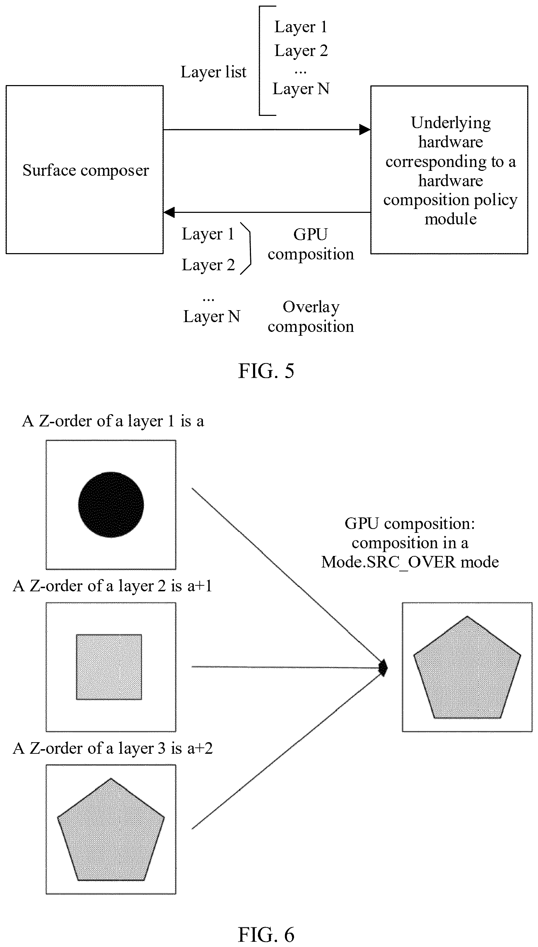

FIG. 5 is a schematic diagram of an example of layer composition according to an embodiment of this application.

As shown in FIG. 5, after obtaining a bitmap of an application, a SurfaceFlinger writes each bitmap as a layer into a layer list. The SurfaceFlinger transfers the layer list to underlying hardware through an HWC. The underlying hardware determines composition modes of different layers based on a capability of the underlying hardware and returns a result to the SurfaceFlinger through the HWC.

After obtaining the result returned by the HWC, the SurfaceFlinger may obtain a composition mode of each layer in the layer list. For layers marked with GPU composition, the SurfaceFlinger composes the layers, and transfers a composed layer and layers marked with overlay composition to the underlying hardware through the HWC. Then, the underlying hardware corresponding to the HWC is used to compose the layers.

FIG. 6 is a schematic diagram of another example in which a SurfaceFlinger performs layer composition according to an embodiment of this application.

After obtaining a plurality of surfaces, the SurfaceFlinger may determine a composition mode in which a bitmap is used as a layer on each surface. After obtaining a plurality of layers and determining that the layer composition mode is GPU, the SurfaceFlinger may perform Client composition. The layer composition mode may include: Mode.CLEAR (displaying a layer at the top of a Z-order), Mode.SRC_OVER (displaying layers in sequence according to a Z-order), Mode.DST_IN (displaying a non-intersection part between a layer at the top of a Z-order and a lower layer of the layer), or the like.

For example, as shown in FIG. 6, when the layer composition mode is Mode.SRC_OVER, the SurfaceFlinger composes content of three layers, determines a high-low relationship between different layers according to Z-orders of the layers, and sequentially overlays the layers onto one layer.

A Z-order of a layer 1 is a, a Z-order of a layer 2 is a+1, and a Z-order of a layer 3 is a+2. After the SurfaceFlinger composes the contents of the three layers, content of the layer 1 and the layer 2 is fully shielded, and content of only the layer 3 is displayed.

Full shielding means that due to shielding of a layer with a higher Z-order, a view on a layer with a lower Z-order is not displayed.

A layer on which GPU composition is performed triggers off-screen rendering. Layer composition is performed through off-screen rendering. The following describes concepts related to off-screen rendering.

(1.3) Off-screen rendering

If the SurfaceFlinger determines that any plurality of layers need to be composed by using the GPU, off-screen rendering (off-screen rendering) needs to be enabled to complete layer composition.

The off-screen rendering applies for an off-screen buffer (off-screenbuffer) for the SurfaceFlinger, and invokes the GPU for image processing in the off-screen buffer. The off-screen buffer is a memory outside a current screen buffer, and a plurality of layers are composed in the off-screen buffer.

The off-screen rendering may include the following steps:

① A bitmap in a layer for which GPU composition is determined by the SurfaceFlinger needs to be converted into a texture (texture) and then uploaded to a GPU memory (that is, off-screenbuffer) or mapped to a texture of OpenGL through a shared memory. Then, the OpenGL binds the texture (binding the texture includes binding a context context).

② The texture is rendered according to an instruction related to a window animation corresponding to the layer. In addition, textures of a plurality of applications are merged. In layer composition, pixel-by-pixel rendering processing is performed according to a layer composition mode.

③ The SurfaceFlinger obtains the rendered texture from the GPU memory or directly obtains the rendered texture from the shared memory.

It is clear that off-screen rendering causes context (context) switching, and the context switching increases additional performance overheads.

With reference to content in (1.1) process of generating a bitmap by an application, (1.2) process of composing a bitmap by a SurfaceFlinger/HWC, and (1.3) off-screen rendering, the following completely describes a composition process in which a bitmap is used as a layer.

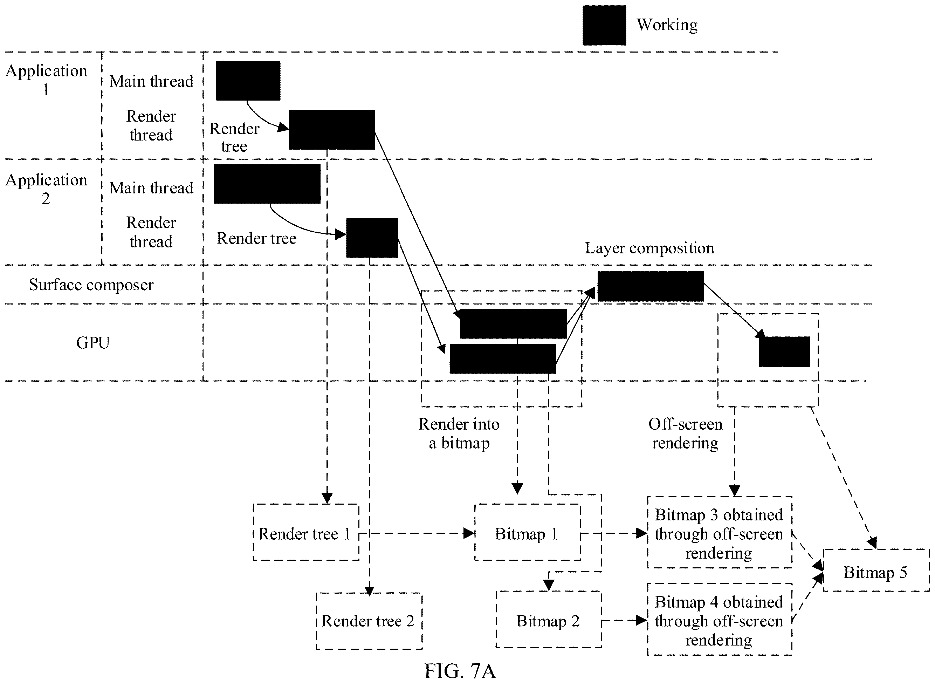

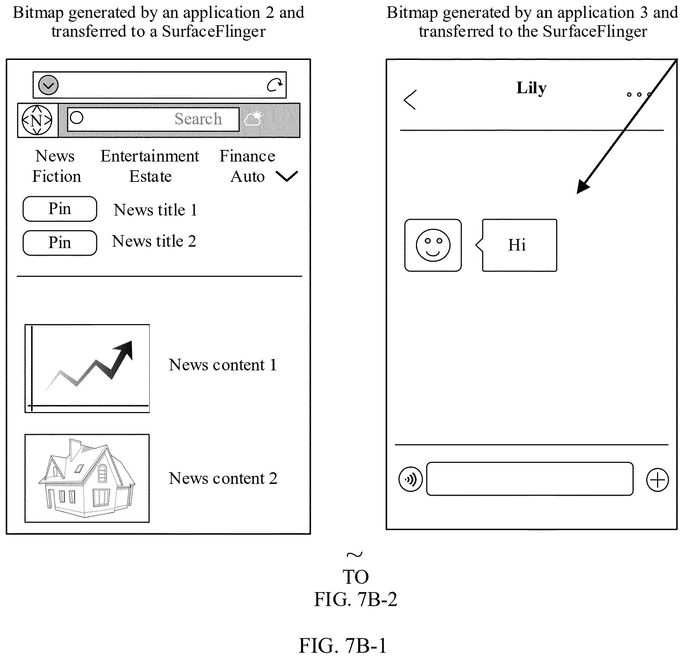

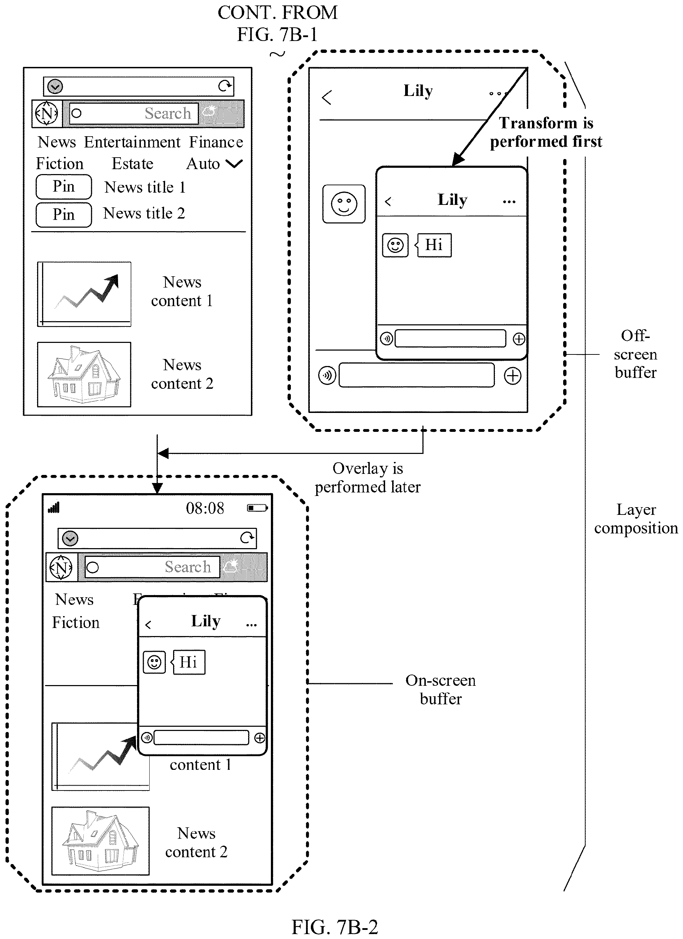

FIG. 7A and FIG. 7B-1 and FIG. 7B-2 are schematic diagrams of another example of layer composition according to an embodiment of this application.

As shown in FIG. 7A, UI threads of different applications independently generate respective render trees, and transfer the render trees to respective render threads for rendering to generate bitmaps.

The render thread first generates the bitmap through rendering based on a property of a render node in the render tree and a draw instruction list, and performs composition by using the bitmap as a layer. When a layer composition mode is GPU composition, a SurfaceFlinger composes a plurality of layers into one layer through off-screen rendering.

For example, an application 1 generates a render tree 1, and then generates a bitmap 1 based on the render tree 1, and an application 2 generates a render tree 2, and then generates a bitmap 2 based on the render tree 2. After receiving the bitmap 1 and the bitmap 2, the SurfaceFlinger performs off-screen rendering on the bitmap 1 and the bitmap 2, to generate a bitmap 5. In an off-screen rendering process, the bitmap 1 is first copied to an off-screen buffer, and the bitmap 1 is transformed into a bitmap 3 in the off-screen buffer based on window animation information; similarly, the bitmap 2 is transformed into a bitmap 4; and finally, the bitmap 3 and the bitmap 4 are superimposed based on the layer composition mode to generate the bitmap 5.

As shown in FIG. 7B-1 and FIG. 7B-2, to implement the interface shown in FIG. 1B, after receiving a bitmap of an application, the SurfaceFlinger first performs off-screen rendering on a bitmap of an application related to a window animation bitmap to complete transform, and then copies a transformed layer to an on-screen buffer for sending and display.

For example, if a bitmap of an application 3 needs to be scaled down, the bitmap of the application 3 cannot be directly copied to the on-screen buffer for transform. This may affect a bitmap of another application. Instead, the bitmap of the application 3 needs to be copied to the off-screen buffer for separate transform, and a transform result is copied back to the on-screen buffer.

It is clear that a correct interface can be generated only when a bitmap generated by each application is changed first and then superimposed based on the layer composition mode.

From the time when a main thread of an application generates a render tree to the time when the SurfaceFlinger completes layer composition, because a process invoking a GPU keeps changing (from the application 1 to the application 2, ..., an application N, and the SurfaceFlinger), the GPU needs to be separately started at least N+1 times, where N is a quantity of applications.

It may be understood that, different applications independently construct and render bitmaps of the applications, but a layer with a lower Z-order may be fully shielded by a layer with a higher Z-order during layer composition. This inevitably leads to overdrawing (Overdraw) of the bitmaps of the different applications. For example, an overlapping part of three graphics in FIG. 6 is overdrawn, that is, a layer 1 and a layer 2 are overdrawn. A composed interface is not affected by the layer 1 and the layer 2. In addition, off-screen rendering requires new off-screen buffer allocation and context switching, increasing memory overheads and computing overheads of the electronic device.

**(2) Then, the following describes an interface generation method provided in embodiments of this application.**

According to the interface generation method provided in embodiments of this application, first, render trees of one or more applications are obtained by using a UniRender process, and the one or more render trees are regrouped to generate a target render tree. Second, the UniRender process performs rendering based on the target render tree to directly obtain a bitmap that carries image information of interfaces of the one or more applications, without performing layer composition.

First, in the interface generation method provided in embodiments of this application, target render trees of one or more applications are merged into a target render tree. In a process of generating the target render tree, the UniRender process determines off-screen rendering logic of each layer, and adds or modifies a property of a corresponding render node in the target render tree according to the off-screen rendering logic, so that the UniRender process directly generates a bitmap without performing off-screen rendering.

Then, in the interface generation method provided in embodiments of this application, target render trees of one or more applications are merged into a target render tree, and there is no need to first generate a plurality of bitmaps as layers for composition. In a process in which the UniRender process performs rendering based on the target render tree to generate the bitmap, a Z-order of a layer is used as a Z-order of a render tree, and a render node corresponding to a view that is not displayed or that does not affect display may be deleted, thereby avoiding overdrawing.

Finally, according to the interface generation method provided in embodiments of this application, the application may not generate a render thread, but the UniRender process performs unified rendering, thereby helping improve an interface rendering speed.

**(2.1) System architecture of an interface generation method provided in embodiments of this application**

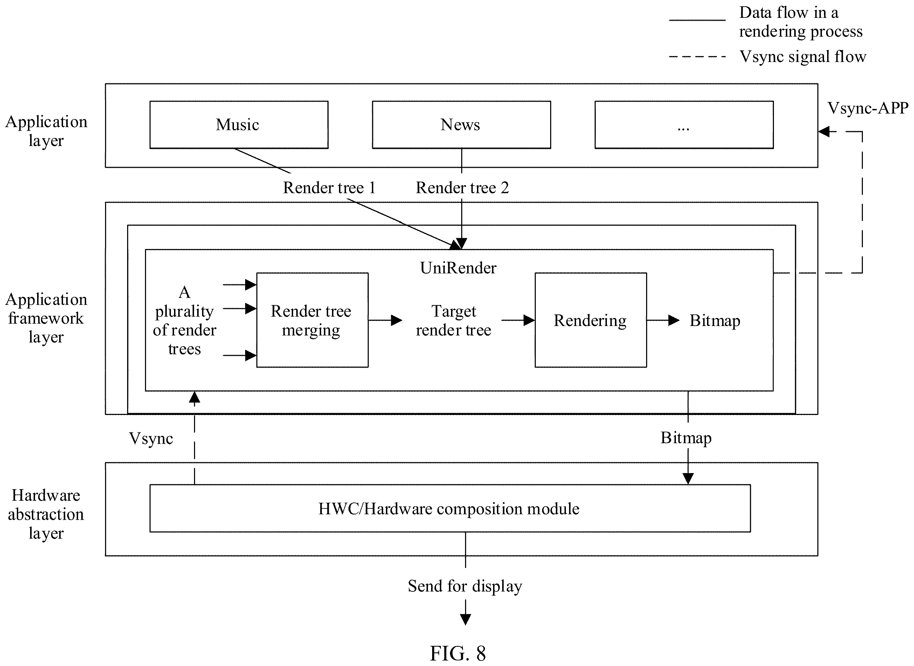

FIG. 8 is a schematic diagram of an example of a system architecture of an interface generation method according to an embodiment of this application.

When an interface of an application is updated, the application may request a vertical synchronization signal (Vsync-APP) from a UniRender process (a SurfaceFlinger is not shown in FIG. 8). When the SurfaceFlinger exists, the application may request a vertical synchronization signal (Vsync-APP) from the SurfaceFlinger.

The vertical synchronization signal (Vsync-APP) of the UniRender process may be generated from the SurfaceFlinger, or directly from underlying hardware (such as a screen) corresponding to an HWC, or the vertical synchronization signal (Vsync-APP) is generated by the UniRender process by starting a thread that is periodically woken up. When the SurfaceFlinger exists, the Vsync-APP may be from the SurfaceFlinger.

After the application obtains the vertical synchronization signal (Vsync-APP), the application generates a render tree and transfers the render tree to the UniRender process.

After receiving a vertical synchronization signal (Vsync-UR), the UniRender process merges one or more render trees to generate a target render tree. Then, the UniRender process uses a render engine to traverse and execute a draw operation in a draw instruction list of each render node in the render tree, to generate a bitmap that carries image information of one or more render trees. The bitmap may be located in an on-screen buffer.

A difference between the Vsync-UR and the Vsync-APP is a Vsync-Offset, and the Vsync-Offset may be determined by the UniRender process. If the SurfaceFlinger exists, the Vsync-Offset may be determined by the SurfaceFlinger.

After generating the bitmap, the UniRender process transfers the bitmap to a display subsystem through the HWC for display.

After the system architecture of the interface generation method in this application is described, a method procedure of the interface generation method provided in embodiments of this application is described by using an example.

### (2.2) Method procedure of an interface generation method provided in embodiments of this application

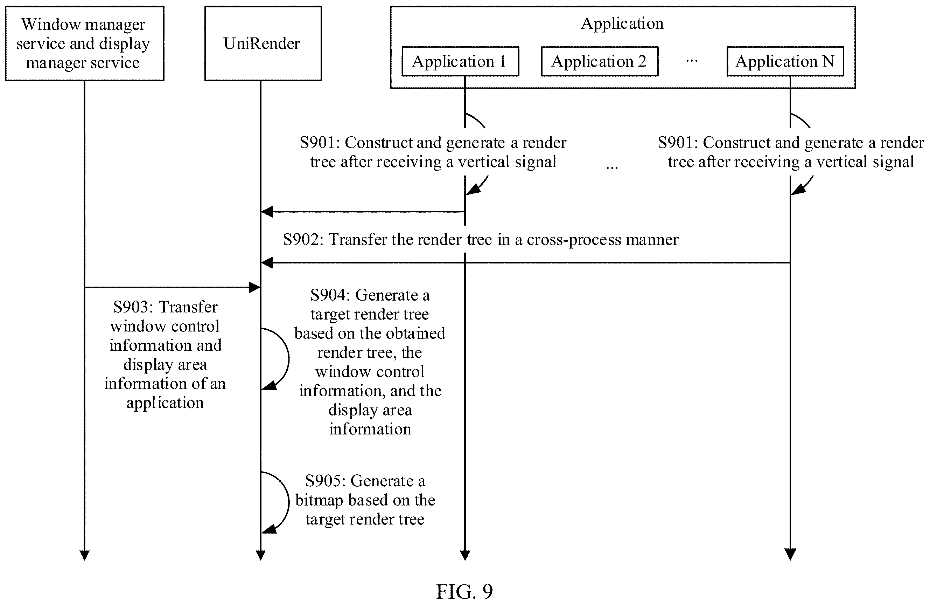

With reference to FIG. 9, the following describes an example of an interface generation method provided in an embodiment of this application.

FIG. 9 is a schematic diagram of an example of an interface generation method according to an embodiment of this application.

As shown in FIG. 9, the interface generation method provided in this embodiment of this application includes the following steps.

S901: Construct and generate a render tree after receiving a vertical synchronization signal.

When an interface needs to be updated, an application may request a vertical synchronization signal (Vsync-APP) from a UniRender process. After receiving the vertical synchronization signal, the application performs a measure() method, a layout() method, and a draw() method in a UI thread. When performing the draw() method, the UI thread traverses views of the application, determines a draw instruction required for rendering each view, and continuously records the draw instruction in a draw instruction list of a render node corresponding to the view.

An interface that needs to be displayed by the application includes a plurality of nested views, and a draw instruction list corresponding to a root view (DecorView) includes a draw instruction list entry of a child view of the root view, that is, a nesting relationship between draw instruction lists is the same as a nesting relationship between views. Therefore, a nesting relationship between render nodes is the same as the nesting relationship between views. For definitions of related concepts of the render tree and the render node, refer to the foregoing text description corresponding to FIG. 3.

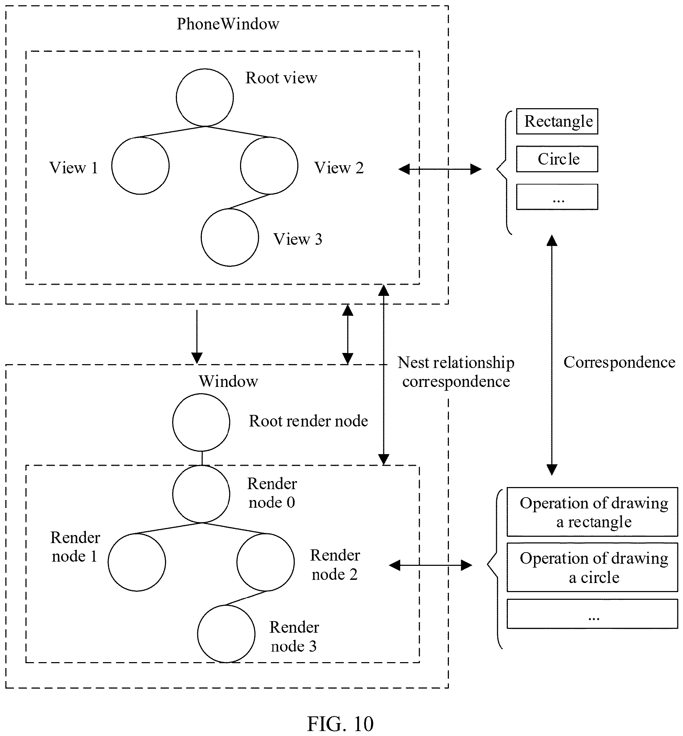

FIG. 10 is a schematic diagram of an example of constructing a render tree according to an embodiment of this application.

After performing measure, layout, and draw, the UI thread of the application may obtain a parent-child structure of a plurality of views of the interface to be updated, and in a process of traversing the views, determine content to be displayed in each view and interface calling required for generating the content, for example, drawCircle or drawLine.

The application packages drawing interface calling such as drawCircle or drawLine into corresponding DrawOp, such as DrawCircleOp or DrawLineOp, and stores the DrawOp in the draw instruction list. The DrawLineOp is graphics drawing interface calling of an underlying graphics library (such as OpenGL) and is further converted to a graphics drawing instruction for invoking a GPU.

As shown in FIG. 10, a view structure of the interface of the application includes a root view, child views of the root view are a view 1 and a view 2, and a child view of the view 2 is a view 3. The view 2 includes a rectangle and a circle, and draw operations in a draw instruction list of a render node 2 corresponding to the view 2 include an operation of drawing a rectangle, an operation of drawing a circle, and the like.

When performing the draw() method, the UI thread of the application may start from the root view, traverse all views based on the parent-child relationship between views, determine a draw operation in each view, and package the draw operation into DrawOp. After generating the draw instruction list, the UI thread of the application further packages the draw instruction list into a render tree.

A render node in the render tree includes a drawing instruction list and a rendering property, where the rendering property is used to determine properties such as a location, a size, and transparency of a view to be rendered by the render node on a surface, and the draw instruction list is used to determine content such as a line, a rectangle, or a circle of the view to be rendered by the render node.

The surface is applied for by the application. The application determines a size of the surface. If the SurfaceFlinger exists, the surface may be applied for by the application from the SurfaceFlinger. If the SurfaceFlinger does not exist, the surface may be applied for from a UniRender process. The SurfaceFlinger may not allocate a surface to the application.

Optionally, in some embodiments of this application, after determining a screen refresh rate of each display area, the UniRender process may adjust a frequency of a vertical synchronization signal (Vsync-APP) in each display area, so that an application displayed in a display area 1 generates a render tree at a frequency of a screen refresh rate of the display area 1.

It should be noted that a UI thread of an application may generate a plurality of render trees, for example, in a multi-display-area (display) scenario such as a multi-screen scenario, a virtual screen scenario, or a multi-window scenario. For the multi-display-area scenario, refer to the text description in (2.2) interface generation method in a multi-display-area scenario.

S902: Transfer the render tree in a cross-process manner.

After generating the render tree, the UI thread of the application transfers the render tree to the UniRender process through IPC communication. The render tree is on a stack of a process corresponding to the application. A corresponding UniRender process needs to receive render trees transferred by different applications, and determine a correspondence between a render tree and an application.

A plurality of applications in the foreground transfer render trees to the UniRender. If the application meets any one of the following three conditions, the application is a foreground application: The application has a visible activity (Activity), the application has a foreground service, and another foreground application is associated with the application.

Because memory of different processes is not shared, data exchange between processes needs to be completed through inter-process communication (Inter-Process Communication, IPC). The application may transfer the render tree to the UniRender process in a manner such as Binder, AIDL, shared memory, or Socket, to implement IPC communication. This is not limited herein.

The following uses a shared memory as an example of IPC communication to describe an example of a manner of transferring a render tree in a cross-process manner.

(a) An application writes a render tree into a shared memory.

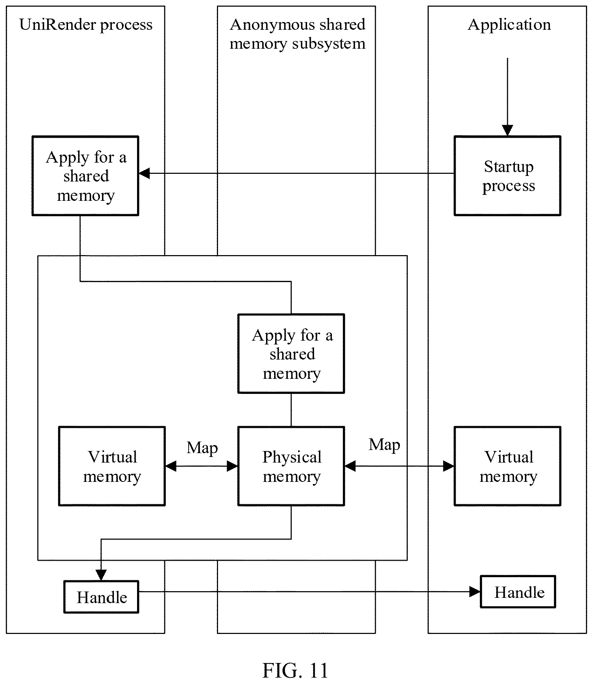

FIG. 11 is a schematic diagram of an example in which a shared memory transfers a render tree according to an embodiment of this application.

As shown in FIG. 11, first, each time the application is started, the application applies to the UniRender process for the shared memory. After receiving a request for the shared memory initiated by the application, the UniRender process applies for a shared memory and a handle corresponding to the shared memory through an anonymous shared memory (Anonymous Shared Memory, Ashmem) subsystem.

After successfully applying for the shared memory from the Ashmem subsystem, the UniRender process receives the handle returned by the Ashmem subsystem for reading and writing a physical memory. The UniRender process returns the handle to the application, so that the application can use the handle to write the render tree to the physical memory. The UniRender process can directly read the physical memory from process space of the UniRender process, and then directly read the render tree of the application.

The shared memory may be a virtual file created in a memory (RAM) by using a temporary file system (tmpfs), and is separately mapped to user space of different processes.

Cross-process communication, for example, the application applies for the shared memory from the UniRender process, the UniRender process applies for the shared memory from the Ashmem subsystem, and the UniRender process returns, to the application, the handle corresponding to the shared memory obtained through application, may be implemented through Binder communication.

It may be understood that the render tree stored in the stack of the application process may be transferred to the UniRender process in another IPC manner such as memory sharing. This is not limited herein.

Optionally, in some embodiments of this application, a trustlist is configured in a local configuration file of the electronic device or a cloud server, and the trustlist stores another identifier that can uniquely determine an application process, such as a package name of the application. If the application is in the trustlist, the render tree is transferred to the UniRender process. If the application is not in the trustlist, after a bitmap is obtained through software drawing of the UI thread or rendering of a render thread, the bitmap is transferred to the UniRender for process composition or the bitmap is transferred to the SurfaceFlinger. The SurfaceFlinger composes a bitmap of the application that is not in the trustlist with the bitmap generated by the UniRender process.

Optionally, in some embodiments of this application, if the application has a plurality of layers, that is, if the application generates a plurality of render trees, the application may apply to the UniRender process for two shared memories, which are respectively used to store different layers, that is, store data of different render trees.

Optionally, in some embodiments of this application, the application may apply to the UniRender process for two shared memories, to write the render trees in a staggered manner. For example, if a render tree corresponding to an interface of a frame is written into a first shared memory, a render tree corresponding to an interface of a next frame is written into a second shared memory, and then a render tree corresponding to an interface of a next frame is written into the first shared memory. This helps avoid a read/write conflict that data of a render tree cannot be written into a shared memory in a timely manner when there is only one shared memory.

(b) Storage data structure of the render tree in the shared memory

To further improve IPC communication efficiency, in this embodiment of this application, the render tree is stored in the shared memory in a form of a memory tree. The following describes an example of a data structure form of the render tree stored in the shared memory.

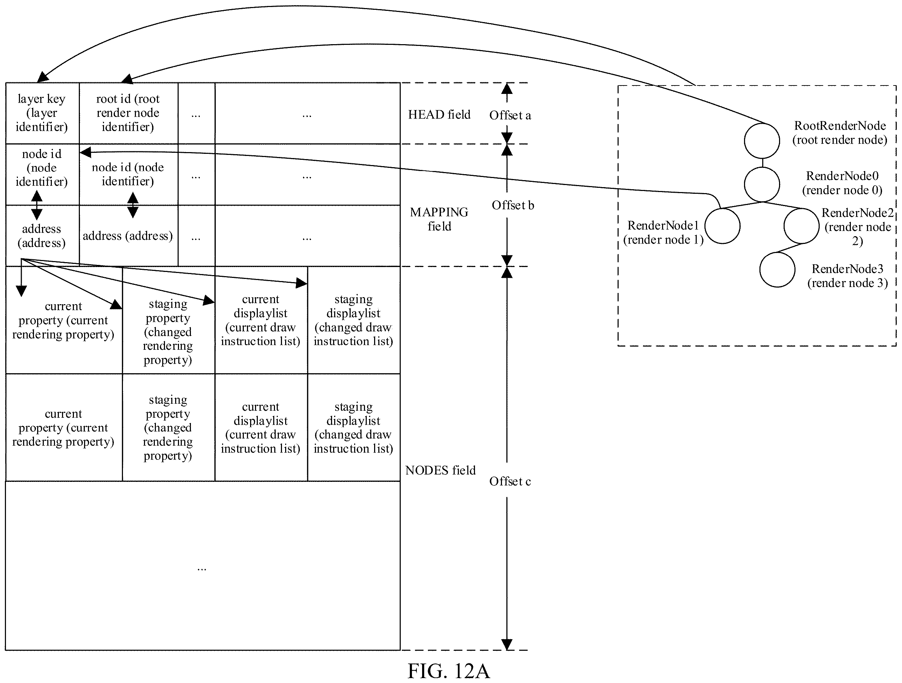

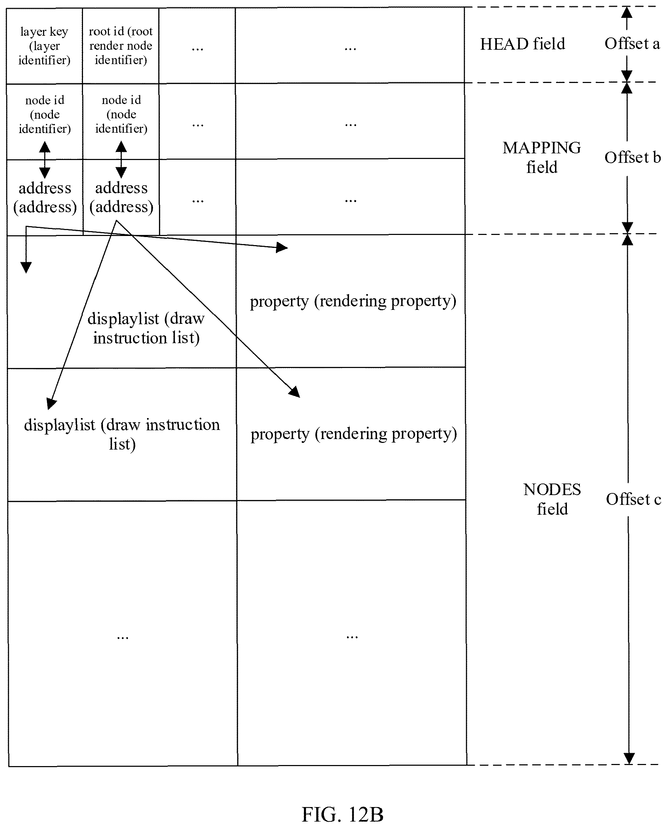

The memory tree may include a plurality of segments of data, and different segments of data respectively store layer information, rendering data, and the like. The following uses content shown in FIG. 12A and FIG. 12B as an example to describe a structure of the memory tree. Offsets of different segments of data in the shared memory may be fixed, or may be unfixed and adaptive.

FIG. 12A and FIG. 12B each are a schematic diagram of an example of a storage structure of a render tree in a shared memory according to an embodiment of this application.

As shown in FIG. 12A, the storage structure of the render tree includes three segments of data: a HEAD field, a MAPPING field, and a NODES field.

The HEAD field includes layerkey and rootid; the MAPPING field includes nodeid and address corresponding to nodeid; and the NODES field includes currentproperties, stagingproperties, stagingdisplaylist and currentdisplaylist.

layerkey is an ID of an entire render tree as a layer; rootid is an ID of a root node of the render tree; nodeid is an ID of a render node other than the root node of the render tree, and one nodeid corresponds to one address, where the address is a start address of a rendering property (renderproperties/properties) and a draw instruction list (displaylist) in the render tree node; stagingproperties is a rendering property written by the application; stagingdisplaylist is a draw instruction list written by the application; currentproperties is a rendering property read by the UniRender process; and currentdisplaylist is a draw instruction list read by the UniRender process.

It should be noted that, it is considered that "stagingproperties and stagingdisplaylist" are a first group of data, and "currentproperties and currentdisplaylist" are a second group of data. In this case, data written in the application is the first group of data, and data written in the application next time is the second group of data, thereby implementing a dual-buffer mechanism. Similarly, data read by the UniRender process is the first group of data, and data read next time is the second group of data.

Optionally, in some embodiments of this application, a storage structure of the render tree in the shared memory may be shown in FIG. 12B. The NODES field may include only one group of data, that is, include only a rendering property and a draw instruction list.

layerkey is used to: before the UniRender process reads layer data in the shared memory by using a handle, obtain an application to be displayed and an ID of a layer that is of the application and that needs to be composed from a WMS. The UniRender process verifies the layer ID with a layer ID included in layerkey in the shared memory.

rootid is used for the following: As an entry of the render tree, rootid stores an entry of another render node. After obtaining rootid, the UniRender process may read data of the render tree, and restore a nested structure of the render tree.

currentproperties, stagingproperties, stagingdisplaylist, and currentdisplaylist are used for the following: After the application completes writing the draw instruction list and rendering property, values of currentproperties and stagingproperties are exchanged, and values of currentdisplaylist and stagingdisplaylist are exchanged. The UniRender process reads the rendering property and draw instruction list from currentproperties and current displaylist.

For example, an application 1 is an application displayed in the foreground, and the application 1 may have a plurality of layers. To be specific, after receiving a vertical synchronization signal (Vsync-APP), the application 1 generates a plurality of render trees, for example, a render tree 1 and a render tree 2. The UniRender process determines, from the WMS, that a render tree corresponding to the layer participating in layer composition is the render tree 1.

Because offsets of layerkey and rootid are fixed, the UniRender process can determine an address of a root node. The UniRender process finds a location of the root node on the NODES end in the MAPPING field and reads a rendering instruction of the node. If a child node exists, there is a corresponding DrawRenderNode instruction. An ID of the child node is stored in the instruction. A location of the child node in the MAPPING field is found based on a hash value. For example, a parent-child relationship between render nodes of the render tree is stored in a DrawOP operation. For example, a draw instruction list of a render node 2 includes several DrawOP operations and an operation of "Draw RenderNode3" (drawing a render node 3), so that the UniRender process may determine that the render node 3 is a child node of the render node 2.

It may be understood that, the render tree in the shared memory still stores a nesting relationship that is the same as that between views of the application. Therefore, the UniRender process may read data from the root node, and then read all data of the render tree.

currentproperties, stagingproperties, stagingdisplaylist, and currentdisplaylist are classified, to ensure security of display data read by the UniRender process and data written by the application, and prevent data that is not completely written by the application from being read by the UniRender process as latest data to render and generate an interface of the application. For security assurance of simultaneous reading and writing of the render tree, refer to the following text description in (2.3) reading and writing of a render tree in a shared memory. Details are not described herein again.

Optionally, in some embodiments of this application, sizes of the three segments of data may be fixed. To be specific, after the UniRender process applies for the shared memory from the Ashmem subsystem, a size of the obtained shared memory is a+b+c. A start address (physical address) to the start address+a are a location at which the HEAD field is filled; the start address+a+1 to the start address+a+b are a location at which the MAPPING field is filled; and the start address+a+b+1 to the start address+a+b+c are a location at which the NODES field is filled.

It may be understood that, if the sizes of the three segments of data are fixed, the UniRender process may determine a start of each segment of data according to a fixed offset, to find the Mapping field. The Mapping field stores an offset of a render node of the render tree in the NODES field, so as to find data of each render node.

Optionally, in some embodiments of this application, if the sizes of the three segments of data are fixed, and a size of the render node written by the application exceeds b, the application applies to the UniRender process for a second shared memory. A format of the second shared memory may be the same as that of the first shared memory, and a draw instruction list and a render node property of a render node continue to be stored in a NODES field of the second shared memory. A HEAD field and/or a MAPPING field of the second shared memory may be null or may not exist. In other words, in some embodiments of this application, the second shared memory includes only the NODES field.

(c) The UniRender reads the render tree in the shared memory.

(c. 1) UniRender architecture

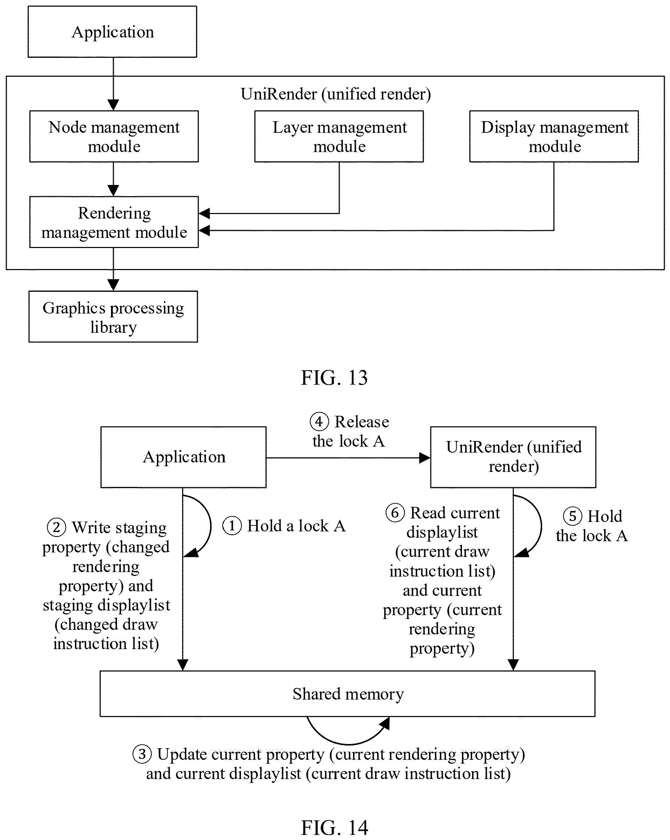

FIG. 13 is a schematic diagram of an example of an architecture of a UniRender according to an embodiment of this application.

As shown in FIG. 13, the UniRender provided in this application may include four parts: a NodeManager, a LayerManager, a DisplayManager, and a UniRenderCore.

The NodeManager is a node management module in the UniRender process, and is responsible for receiving a render tree sent by an application. For composition of the target render tree, refer to the text description in step S903.

The LayerManager is a layer management module in the UniRender process, and is responsible for synchronizing layer information, such as layer creation, layer destruction, and property change, from a window manager service (Window Manager Service, WMS). One bitmap is equivalent to one layer.

The DisplayerManager is a display device management module in the UniRender process, and is responsible for synchronizing information of a display device, such as a screen size, from a display manager service (Display Manager Service, DMS).

The UniRenderCore is a rendering management module in the UniRender process, and is responsible for: establishing a corresponding render node for each layer; receiving render trees corresponding to different applications maintained in the NodeManager, making layer information of the application in the LayerManager into an instruction and inserting the instruction into the render node; merging render trees corresponding to all visible layers of a display device in an activated state maintained in the DisplayManager; and traversing a merged render tree for each display area. The UniRender generates a bitmap for a buffer allocated by the UniRender.

(c.2) The UniRender reads the render tree.

The UniRender process first determines, from the DMS and the WMS, an application displayed in each display area, where the application is an application that participates in layer composition. The UniRender process may further determine, with reference to a trustlist, an application that performs layer composition in the UniRender process. The UniRender process may determine a layer ID of each application by using the WMS.

The DisplayerManager in the UniRender process is responsible for communicating with the DMS, and the LayerManager in the UniRender process is responsible for communicating with the WMS.

Because the UniRender process stores the handle of the shared memory corresponding to the application, after determining the application participating in layer composition, the UniRender may determine, by using the handle, the shared memory corresponding to the application. The UniRender reads the render tree from the shared memory through the handle.

The NodeManager in the UniRender process is responsible for managing the handle of the shared memory, and reading the render tree from the shared memory.

A process in which the UniRender process reads the render tree from the shared memory includes the following.

The UniRender process first reads layerkey from a start address of the shared memory and verifies a layer ID. The UniRender process compares, with the layer ID determined by the WMS, the layer ID determined from layerkey. After the layer IDs are consistent, the UniRender process reads the render tree from rootid of the root node.

Then, after finding the address of the root node, the UniRender process determines, in an address field in the MAPPING field, a start address of the root node in the NODES field, and starts to read the draw instruction list and the rendering property of the render node. If the root node has a child node, the draw list instruction of the root node stores an entry of the child node, for example, a DrawRenderNode instruction. Because the DrawRenderNode instruction includes an ID of a child node, the UniRender process finds corresponding nodeid in the MAPPING field through a hash operation, to determine a location of the draw instruction list and the rendering property of the child node in the NODES field, and read the draw instruction list and the rendering property of the child node.

(d) Reading and writing of the render tree in the shared memory

The render tree located in the shared memory may be read and written by two or more processes. To reduce and avoid errors in data of the render tree caused by read and write conflicts, a synchronized lock between processes may be configured to ensure read and write security of the render tree.

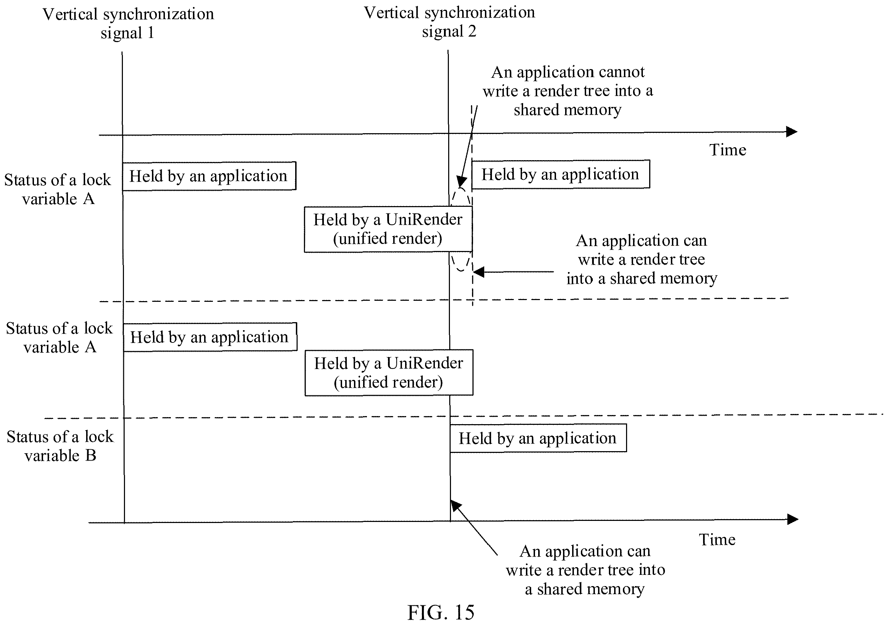

With reference to content shown in FIG. 14 and FIG. 15, the following describes an example of a process of reading and writing a render tree.

FIG. 14 is a schematic diagram of an example in which an application writes a render tree into a shared memory according to an embodiment of this application.

Each application stores at least one lock variable A to avoid that the application and the UniRender read/write the shared memory at the same time. The UniRender obtains lock variable statuses (held or released) on different applications through IPC communication.

As shown in FIG. 14, ① first, when an application needs to update an interface, a vertical synchronization signal (Vsync-APP) is requested and received, then a lock variable A of a shared memory corresponding to the application is obtained, and a property and a draw instruction list of a render node are calculated and updated from a root node.

(2) Then, the application writes the updated property and draw instruction list of the render node into stagingproperties and stagingdisplaylist data segments of the NODES field in the shared memory, and adds an ID of the changed render node to a properties_dirty queue and a displaylist_dirty queue. The queues are stored in a shared memory management class singleton on an application side.

It may be understood that, the changed render node is marked in the properties_dirty queue and the displaylist_dirty queue, to implement differential update of the render tree.

Optionally, in some embodiments of this application, the properties_dirty queue and the displaylist_dirty queue may not be stored, to implement full render tree update.

③ Then, the application copies the stagingproperties segment of the corresponding render node in the properties_dirty queue to the currentproperties segment. The application exchanges draw_pointer and record_pointer of the corresponding render node in the displaylist_dirty queue, that is, copies the stagingdisplaylist segment of the corresponding render node in the displaylist_dirty queue to currentdisplaylist; or the application copies the stagingdisplaylist segment to currentdisplaylist.

It may be understood that, compared with a previous vertical synchronization signal (Vsync-APP), in response to the current vertical synchronization signal (Vsync-APP), the application changes only data of the render node corresponding to displaylist_dirty, and the application exchanges draw_pointer and record_pointer of the corresponding render node in the displaylist_dirty queue, so that differential update of currentdisplaylist can be implemented.

It may be understood that, the application copies the stagingdisplaylist segment to currentdisplaylist, to implement full update, that is, all data of the render tree generated by the application in response to the vertical synchronization signal (Vsync-APP) is directly written into the shared memory, which is relatively easy to implement.

Optionally, in some embodiments of this application, when the properties_dirty queue and the displaylist_dirty queue are not stored, stagingproperties segments of all render nodes of the application are copied to currentproperties segments, and stagingdisplaylist segments are copied to currentdisplaylist segments. The copying may be implemented by changing a position of a pointer.

(4) Then, the application transfers, to the UniRender process through IPC communication, information that the lock variable A has been released.

⑤ Then, the UniRender process holds the lock variable A.

⑥ Finally, corresponding to (3), the UniRender process reads current displaylist and current properties from the shared memory, or reads the stagingdisplaylist segment of the corresponding render node in the displaylist_dirty queue and copies the stagingdisplaylist segment to currentdisplaylist.

After reading the data, the UniRender process may release the lock variable A and notify the application that the lock variable A is released. When a next vertical synchronization signal (Vsync-APP) arrives, the lock variable A is held and the render tree is written into the shared memory. In this case, functions of the staging data segment and current data segment are exchanged. The UniRender process reads the stagingdisplaylist and stagingproperties segments finally to implement a "dual-buffer" mechanism and ensure robustness of interface generation.

Optionally, in some embodiments of this application, when there is one lock variable between the application and the UniRender process, the NODES field may include only stagingdisplaylist and stagingproperties, or include only currentdisplaylist and currentproperties. The application and the UniRender process implement read and write security by using the lock variable, so that the UniRender process reads a correct render tree.

Optionally, in some embodiments of this application, each application may hold more lock variables. For example, each application holds a lock variable A and a lock variable B. In this way, after the application releases the lock A, the application does not need to wait for the UniRender to release the lock A. After holding the lock variable B, the application directly writes render tree data into the shared memory after receiving a next vertical synchronization signal (Vsync-APP).

Holding, releasing, and inter-process synchronization of the lock variable B are the same as holding, releasing, and inter-process synchronization of the lock variable A. For details, refer to the text description in FIG. 14. Details are not described herein again.

FIG. 15 is a schematic diagram of another example in which an application writes a render tree into a shared memory according to an embodiment of this application.

As shown in FIG. 15, when the application stores one lock variable A, after a vertical synchronization signal 1 (Vsync-APP) is received, the application holds the lock variable A, and writes a generated render tree into the shared memory in a holding phase. After the application writes the render tree to the shared memory, the lock variable A is released. After determining that the lock variable A is released by the application, the UniRender holds the lock variable A, and starts to read, from the shared memory, a render tree generated by the application in response to the vertical synchronization signal 1.

In a time period in which the UniRender process holds the lock variable A, the application receives a vertical synchronization signal 2 (Vsync-APP) after the vertical synchronization signal 1. Because the lock variable A is held by the UniRender process, the application cannot write a render tree into the shared memory in a timely manner, and needs to wait for a period of time until the application determines that the UniRender process releases the lock A.

However, it is clear that, in the content in FIG. 13, the UniRender process reads the currentdisplaylist field and the currentproperties field, and the application writes the stagingdisplaylist field and the stagingproperties field. Concurrent reading and writing of different fields in the shared memory may be implemented by increasing a quantity of lock variables.

As shown in FIG. 15, when the application stores two lock variables B, after a vertical synchronization signal 1 (Vsync-APP) is received, the application holds the lock variable A, and writes a generated render tree into the shared memory in a holding phase. After the application writes the render tree to the shared memory, the lock variable A is released. After determining that the lock variable A is released by the application, the UniRender process holds the lock variable, and starts to read, from the shared memory, a render tree generated by the application in response to the vertical synchronization signal 1.

In a time period in which the UniRender process holds the lock variable A, the application receives a vertical synchronization signal 2 (Vsync-APP) after the vertical synchronization signal 1. In this case, because the lock variable B is held, the application can write a render tree into the shared memory in a timely manner, and does not need to wait for a period of time until the application determines that the UniRender process releases the lock A.

Correspondingly, after determining that the lock variable B is released by the application, the UniRender process holds the lock variable B, and starts to read, from the shared memory, a render tree generated by the application in response to the vertical synchronization signal 2.

It should be noted that, a quantity of lock variables held by the application may be related to content included in the NODES field in the shared memory, or may be related to a value of Vsync-offset.

For example, if currentdisplaylist and currentproperties are a first group, and stagingdisplaylist and stagingproperties are a second group, two synchronized variables may be configured in the application and the UniRender process, which correspond to two groups of data respectively. Similarly, for another example, if the NODES field includes three groups of data, three synchronized lock variables may be configured in the application and the UniRender.

One lock variable corresponds to one group of data. For example, if a lock variable A corresponds to currentdisplaylist and currentproperties, a change of the lock variable A from a held state to a released state indicates that the application successfully updates the data of currentdisplaylist and currentproperties in the shared memory, and the data of currentdisplaylist and currentproperties can be read by the UniRender process. Alternatively, a change of the lock variable A from a held state to a released state indicates that the UniRender process completes reading of the data of currentdisplaylist and currentproperties from the shared memory, and the data of currentdisplaylist and currentproperties can be updated by the application.

A quantity of lock variables may be related to a value of Vsync-offset.

In other words, the quantity of lock variables may be related to a difference Vsync-offset between a vertical synchronization signal (Vsync-APP) and a vertical synchronization signal

(Vsync-UR). If Vsync-offset is large, no lock variable may be configured. If no lock variable is configured, the UniRender process reads the render tree from the shared memory after receiving the vertical synchronization signal (Vsync-UR). Because Vsync-offset is large, when the UniRender process reads the render tree, the application has completely written the render tree into the shared memory.

S903: Transfer window control information and display area information of the application.

The LayerManager in the UniRender process obtains window control information of one or more applications from the window manager service, and further determines, with reference to the layers of the one or more applications obtained in step S802, whether drawing logic triggering off-screen rendering exists on a layer of any application.

The UniRender process may further obtain Z-orders of layers of different applications. The Z-order is a Z-axis sequence between different layers.

The DisplayerManager in the UniRender process obtains the display area information from the display manager service, where the display area information includes a size of a display device. The UniRender process determines a size of an allocated surface based on the display area information. The surface is used to carry a bitmap generated by the UniRender based on the target render tree. For generating, by the UniRender process, the bitmap based on the target render tree, refer to the text description in step S905. Details are not described herein again.

An instruction related to off-screen rendering includes an instruction such as rounding, scaling, rotation, or color transform. For a definition of off-screen rendering, refer to the foregoing text description in (1.3) off-screen rendering. Details are not described herein again.

The following describes, by using an example, drawing logic related to triggering off-screen rendering, such as rounding, scaling, rotation, and color transform.

FIG. 16A-1 and FIG. 16A-2 to FIG. 16C are schematic diagrams of an example of a scenario of drawing logic that triggers off-screen rendering according to an embodiment of this application.

In response to interaction with the user, for example, a bezel-less gesture (for example, sliding upward from the bottom to the center of the screen) or tapping a multi-task control on a bottom navigation bar, the electronic device displays a multi-task interface, as shown in FIG. 16A-1 and FIG. 16A-2.

A bitmap generated by the gallery application has a same size as the screen, but an interface of the gallery application in the multi-task interface shown in FIG. 16A-1 and FIG. 16A-2 is an interface obtained after scaling and rounding processing.

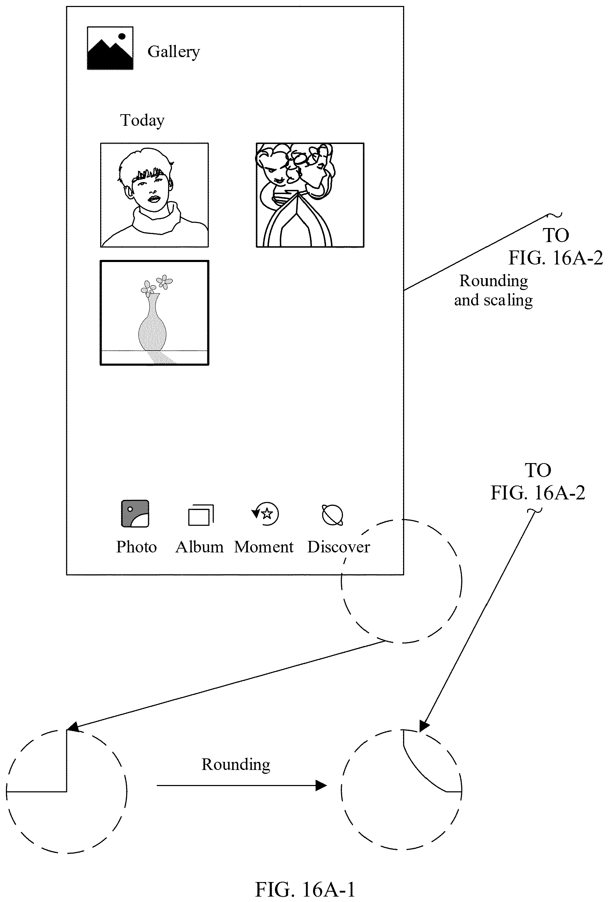

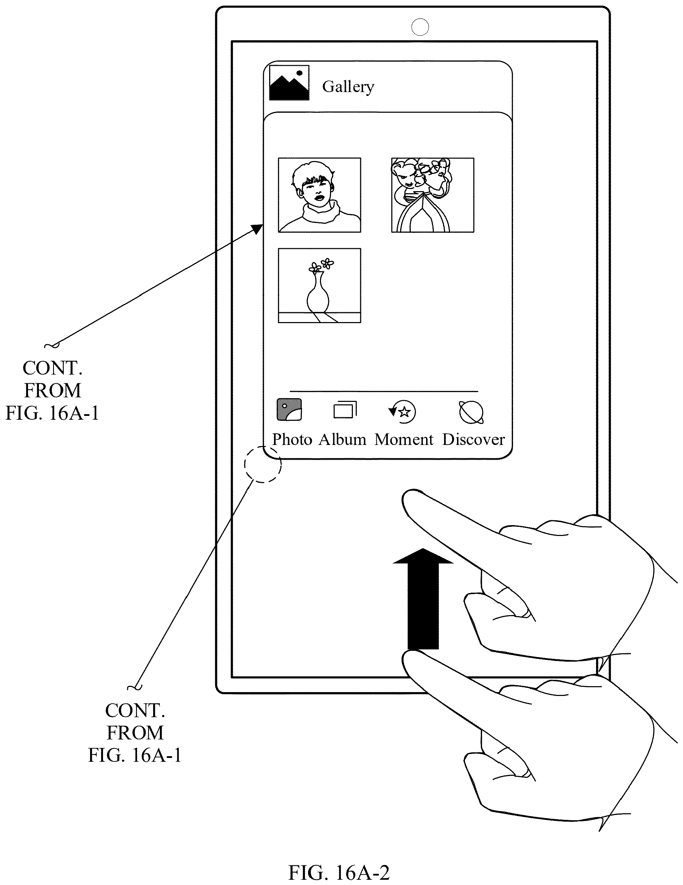

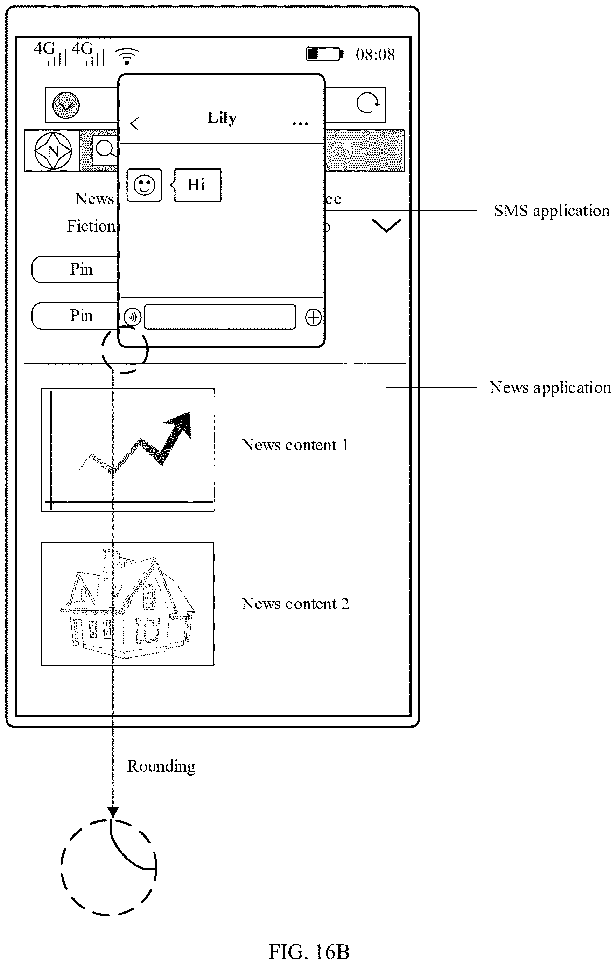

As shown in FIG. 16B, in a small-window mode, views of a plurality of applications are displayed on an interface of the electronic device. Interfaces of some applications are in floating windows.

For example, an interface of a news application and an interface of an SMS application are displayed on the interface of the electronic device, where the interface of the SMS application is in a rendering floating window.

A bitmap generated by the SMS application has a same size as the screen, but an interface of the SMS application in the small-window mode shown in FIG. 16B is an interface obtained after scaling and rounding processing.

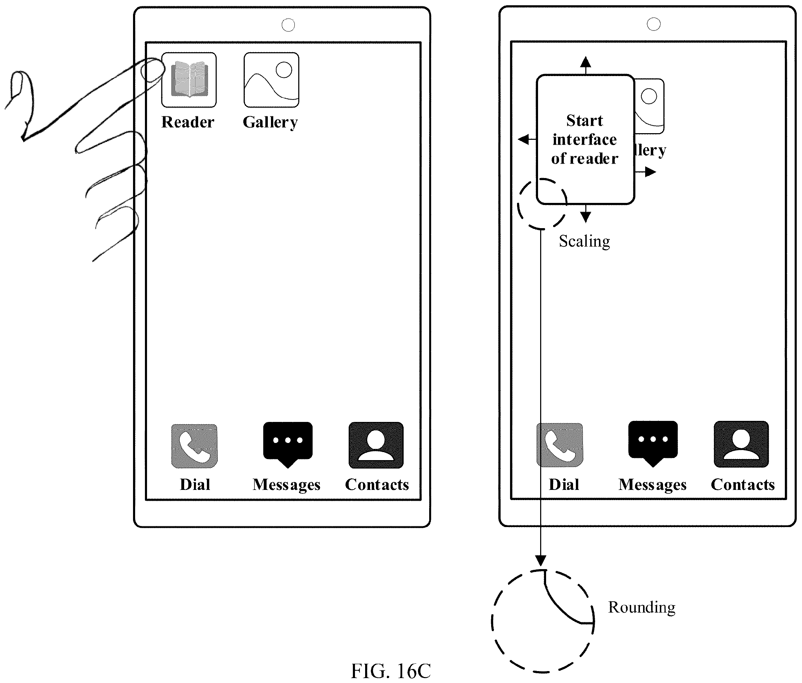

As shown in FIG. 16C, in response to tapping, by the user, an icon of a reader application on a desktop application, the electronic device starts the reader application. In a startup process of the reader application, a main interface (an interface corresponding to Main Activity) or a start window (startingwindow) of the reader application is continuously enlarged.

A bitmap corresponding to the main interface or the start window of the reader application has a same size as the screen, and continuous scale-up effect is implemented by adjusting a scaling ratio. Then, the bitmap corresponding to the main interface or the start window of the reader application is a bitmap obtained after rounding processing, and is displayed on the interface of the electronic device.

It may be understood that, in the scenario shown in FIG. 16A-1 and FIG. 16A-2 to FIG. 16C and more other scenarios, an interface that better conforms to a visual habit of a user needs to be generated through rounding, scaling, rotation, and color transform, so as to improve user experience.

It should be noted that, in the scenario shown in FIG. 16A-1 and FIG. 16A-2 to FIG. 16C and more other scenarios, the UniRender process receives window control information of a layer of each application from the window manager service, to determine whether rounding, scaling, rotation, and color transform need to be performed on the layer of each application.

Optionally, in some embodiments of this application, the UniRender process may first obtain window control information of one or more applications from the window manager service, and then obtain render trees of the one or more applications. In other words, a time sequence of step S902 and step S903 may be reversed.

S904: Generate a target render tree based on the obtained render tree, the window control information, and the display area information.

First, after receiving the render trees generated by the one or more applications, the UniRender process determines, from the window control information in response to receiving the vertical synchronization signal and the window control information, whether a layer of each application has logic for triggering off-screen rendering.

When the application is displayed in a display area of a local electronic device, the window control information may be from a local window manager service. When the application is displayed in a display area of another electronic device, the window control information may be from a window manager service of the peer electronic device.

If the UniRender process determines that the logic for triggering off-screen rendering exists at a layer of any application, the UniRender process converts the logic for triggering off-screen rendering into an off-screen rendering instruction, and converts the off-screen rendering instruction into a property of a render node of a corresponding render tree. For ease of description, a process in which the UniRender process converts the logic for triggering off-screen rendering into the off-screen rendering instruction, and converts the off-screen rendering instruction into the property of the render node of the corresponding render tree may be briefly referred to as moving the off-screen rendering instruction forward.

Then, after the UniRender process moves off-screen rendering trigger instructions of the one or more render trees forward, the UniRender process merges, for each display area (display), render trees corresponding to visible layers of each display area, to generate the target render tree. In other words, a quantity of target render trees may be related to a quantity of display areas.

After receiving the vertical synchronization signal (Vsync-UR), the UniRender process may start to read the render tree from the shared memory, and after obtaining a plurality of render trees, move the off-screen rendering instruction forward and merge the render trees. Alternatively, the UniRender process may start to read the render tree from the shared memory when holding a lock variable, and start to move the off-screen rendering instruction forward and merge the render trees when receiving the vertical synchronization signal (Vsync-UR).

The following separately describes a process of triggering the off-screen rendering instruction to move forward and a process of generating the target render tree.

(a) Process of moving the instruction for triggering off-screen rendering forward

First, the UniRender process obtains window control information of each application layer, and determines whether window control information of a layer includes drawing logic for triggering off-screen rendering. If the UniRender process determines that none of window control information of layers of all applications in a display area includes the drawing logic for triggering off-screen rendering, one or more render trees may be directly merged into a target render tree. When the UniRender process determines that window control information of a layer of any application in a display area includes the drawing logic for triggering off-screen rendering, the UniRender process first moves the instruction for triggering off-screen rendering forward, and then merges a plurality of render trees into a target render tree.

Process of moving the instruction for triggering off-screen rendering forward:
The UniRender process first determines, from the window control information, the drawing logic that triggers off-screen rendering, and converts the drawing logic that triggers off-screen rendering into an instruction that can be configured in a rendering property of a render node (or referred to as drawing logic instruction). After determining a binding relationship between a layer and a render tree, the UniRender process updates the off-screen rendering instruction to the rendering property of the corresponding render node.

When the rendering property of the render node includes a corresponding scaling property (scale), rounding property (roundrect), color transform property (colortransform), or rotation property (transform), a parameter in the scaling instruction, the rounding instruction, the color transform instruction, or the rotation instruction in the instruction for triggering off-screen rendering is assigned to the scaling property, the rounding property, the color transform property, or the rotation property in the property of the render node. When the rendering property of the render node does not include a corresponding scaling property, rounding property, color transform property, or rotation property, the scaling property, the rounding property, the color transform property, or the rotation property is added to the render node, and a parameter in the scaling instruction, the rounding instruction, the color transform instruction, or the rotation instruction in the instruction for triggering off-screen rendering is assigned to the scaling property, the rounding property, the color transform property, or the rotation property in the property of the render node.

FIG. 17A and FIG. 17B are schematic diagrams of an example in which a UniRender moves an off-screen rendering trigger instruction forward according to an embodiment of this application.

As shown in FIG. 17A, after UI threads of an application 1 and an application 2 independently generate render trees and independently transfer the render trees to the UniRender process through IPC communication, the UniRender process determines, from the window manager service, an instruction for triggering off-screen rendering at a layer of each application. A render tree generated by the application 1 is a render tree 1, and a render tree generated by the application 2 is a render tree 2.

The UniRender independently updates properties of render nodes in different render trees. In other words, the UniRender process updates the property of the render node in the render tree 1, and the UniRender updates the property of the render node in the render tree 2.

If the instruction for triggering off-screen rendering is applied to the entire layer, the UniRender process assigns a parameter in the off-screen rendering instruction to a root node of a render tree corresponding to the layer, or directly to all render nodes of the render tree.

When the UniRender process assigns the parameter in the off-screen rendering instruction to the root node of the render tree corresponding to the layer, when generating a bitmap based on the render tree, the UniRender process automatically configures these properties of the render node to a rendering property of a child node of the root node.

For example, if a child node of the render node 1 is a render node 2, after a rotation property (transform) is configured in a rendering property of the render node 1, when generating a render tree, the UniRender process configures the same rotation property (transform) for the rendering property of the RenderNode2.

As shown in FIG. 17B, before the off-screen rendering instruction is moved forward, after receiving a bitmap corresponding to a render tree generated by an application, the SurfaceFlinger needs to perform different processing on bitmaps of different applications based on window control information, to complete layer composition.

After the off-screen rendering instruction is moved forward for the render tree of the application, the UniRender process assigns a parameter in the off-screen rendering instruction to a rendering property of the render tree, so that a transformed bitmap is directly drawn on a canvas in a process of generating the bitmap based on the render tree. Because bitmaps of different applications do not need to be processed differently, bitmaps of different applications can be drawn in sequence in one on-screen buffer.

The UniRender process assigns the parameter in the off-screen rendering instruction to the rendering property of the render tree, as shown in FIG. 18.

FIG. 18 is a schematic diagram of an example in which a UniRender modifies a render node property of a render tree according to an embodiment of this application.

As shown in FIG. 18, the UniRender process modifies a property of a root node of a render tree, and adds an instruction to implement adding a property of a render node. An instruction corresponding to the scaling property is setScale(), an instruction corresponding to the rounding property is outline.setRoundRect(), an instruction corresponding to the color transform property is setColorFilter(), an instruction corresponding to the rotation property is setLeftTopRight-Bottom(), and the like.

In the following step S905, when generating the bitmap based on the render tree, the UniRender process modifies the draw operation in the draw instruction list according to the rendering property and then generates a bitmap obtained after scaling, rounding, color transform, and rotation. For details, refer to the text description in step S905. Details are not described herein again.

Optionally, in some embodiments of this application, the instruction in the property of the root node of the render tree may further include an instruction setStaticMatrix() and the like. Because the UI thread of the application generates the render tree based on the surface applied from the SurfaceFlinger, to change a reference system when the UniRender generates the bitmap based on the render tree in step S905, in a process of moving forward the instruction for triggering off-screen rendering, the instruction setStaticMatrix() is configured in the root node of the render tree. For specific content of the instruction setStaticMatrix(), refer to the following text description in step S905. Details are not described herein again.

(b) Process of generating a target render tree

The UniRender process obtains one or more processed render trees after moving the off-screen rendering instruction forward for all the render trees.

When there is one processed render tree, the processed render tree is a target render tree; or when there is more than one processed render tree, a plurality of processed render trees are merged to form one target render tree.

FIG. 19 is a schematic diagram of an example of composing a plurality of render trees obtained after an off-screen rendering instruction is moved forward into one target render tree according to an embodiment of this application.

As shown in FIG. 19, the UniRender process may create a new root render node, for example, a new root render node in FIG. 19, and use processed render trees of a plurality of applications as child nodes of the root render node. To be specific, the root render node may store a parent-child relationship between processed render trees of different applications, so that the UniRender process can traverse the target render tree from the root render node to find the processed render trees of the different applications.

FIG. 20 is a schematic diagram of an example of composing a plurality of render trees obtained after an off-screen rendering instruction is moved forward into one target render tree according to an embodiment of this application.

The UniRender process may first determine, according to the window manager service, Z-orders of layers corresponding to different applications, that is, determine a high-low shielding relationship between the layers of the applications. Further, in a process of generating the target render tree, a render node corresponding to a fully shielded view is deleted, thereby reducing a calculation amount in a process of generating a bitmap in step S905, and improving a bitmap generation speed.

For example, as shown in FIG. 20, a layer corresponding to a render tree generated by an application 1 is a layer 1, and a layer corresponding to a render tree generated by an application 2 is a layer 2. A Z-order of the layer 1 is higher than a Z-order of the layer 2. A render tree corresponding to the layer 1 is a root render node 1, a render node 1, a render node 2, and a render node 3, the render node 1 and the render node 2 are child render nodes of the root render node 1, and the render node 3 is a child render node of the render node 2. A render tree corresponding to the layer 2 is a root render node 2, a render node 4, a render node 5, and a render node 6, the render node 4 and the render node 5 are child render nodes of the new root render node, and the render node 6 is a child render node of the render node 5.

The UniRender process may traverse the child render nodes of the render tree corresponding to the layer 1 and the child nodes of the render tree corresponding to the layer 2, determine a location of a view corresponding to each render node on a surface (surface allocated by the UniRender process), and determine, with reference to the Z-order of the layer 1 and the Z-order of the layer 2, a fully shielded view and a render node of the fully shielded view.

For example, the UniRender may determine that a view corresponding to the render node 6 in the render tree corresponding to the layer 2 is fully shielded, and then delete the render node 6.

After deleting the render node corresponding to the fully shielded view, the UniRender process may merge, according to content shown in FIG. 18, all render trees obtained after moving the off-screen rendering trigger instruction forward into the target render tree.

Optionally, in some embodiments of this application, the UniRender may further traverse the render nodes, and optimize a parameter of the target render tree based on a granularity of a DrawOP draw operation. For example, a DrawOP draw operation that does not affect an interface is deleted, where not affecting means that a graphic drawn by the DrawOP draw operation is not displayed on the interface. For another example, for different applications, a location of a DrawOP operation in a draw node is modified, so that DrawOP draw operations of a same type can be performed together. For example, a DrawOP draw operation of the render node 2 of the application 1 is modified to a draw instruction list of the render node 1 of the application 2. This is not limited herein.

Optionally, in some embodiments of this application, a plurality of render trees obtained after the off-screen rendering trigger instruction is moved forward may be merged into one render tree according to the content shown in FIG. 18, and then a fully shielded view is determined, to delete a render node corresponding to the fully shielded view, so as to generate the target render tree.

Optionally, in some embodiments of this application, for a partially shielded view, a render node corresponding to the view may also be clipped by using a clip instruction. The clipping may be performed before the target render tree is merged, or may be performed after the target render tree is merged.

Optionally, in some embodiments of this application, after step S904 and before step S905, after generating the target render tree, the UniRender process de-packages the draw instruction list of the RenderNode to obtain a series of DrawOP, and then performs a DrawOP operation on the entire target render tree to perform batching (Batch) and merging (Merge). In step S805, a target render tree for which a bitmap can be generated with a smaller computing amount is obtained.

It may be understood that, in the scenario shown in FIG. 16A-1 and FIG. 16A-2 and FIG. 16B and other scenarios, a plurality of render trees are merged and a merged render tree is optimized, to avoid or reduce overdrawing, thereby improving a speed of generating a bitmap in step S905, reducing power consumption of the electronic device, and improving user experience.

It should be noted that the UniRender process may further optimize other parameters of the target render tree in a process of generating the target render tree. This is not limited herein.

S905: Generate a bitmap based on the target render tree.

After the target render tree is obtained, the UniRender process allocates a surface to the target render tree, and the UniRender process generates the bitmap on the surface based on the target render tree, where the bitmap corresponds to a composed interface of one or more applications.

When the electronic device has a plurality of display areas, the surface may be bound to one of the display areas, and a size of the surface may be the same as a size of the display area bound to the surface.

That the UniRender process generates the bitmap on the surface based on the target render tree includes the following.

First, the UniRender process starts to traverse the target render tree from the root node, and may traverse child nodes of the root node in a plurality of manners.

The UniRender process can traverse different layers under the root node based on Z-orders of the layers. The UniRender process may traverse different layers in descending order of Z-orders, or may traverse different layers in ascending order of Z-orders.

For example, in the target render tree shown in FIG. 20, if a Z-order of a layer 1 is higher than a Z-order of a layer 2, the UniRender process may first traverse a render tree corresponding to the layer 1, that is, first traverse a render tree including a root render node 1, a render node 1, a render node 2, and a render node 3, and then traverse a render tree including a root render node 2, a render node 4, and a render node 5. Similarly, the UniRender process may first traverse the render tree corresponding to the layer 2, and then traverse the render tree corresponding to the layer 1.

It should be noted that, when the UniRender process traverses the layers in descending order of Z-orders, when the UniRender process performs the draw operation in the draw instruction list, if the layers are composed into a high-low shielding relationship, drawing may be performed in only a place that is not drawn, to reduce overdrawing.

It should be noted that, when the UniRender process traverses layers in ascending order of Z-orders, the UniRender process sequentially performs draw operations in draw instruction lists in render trees corresponding to different layers, to generate bitmaps.

Second, the UniRender process modifies the draw operation in the draw instruction list according to a rendering property, and performs the draw operation, to generate a bitmap.

When traversing each render node, the UniRender process reads a rendering property of the render node. When the rendering property includes a scaling property, a rounding property, a color transform property, a rotation property, or the like, the UniRender process modifies a parameter of the draw operation in the draw instruction list according to these properties, and then performs a draw operation in a modified draw instruction list. If the rendering property does not include the scaling property, rounding property, color transform property, or rotation property, the UniRender directly performs the draw operation in the drawing instruction list.

The following describes, by using an example, a method for modifying, by the UniRender process, the parameter of the draw operation in the draw instruction list according to the rendering property.

For example, the rendering property of the render node includes setscale(0.5), where setscale(0.5) indicates scaling down to 0.5 times of the original size, and the draw instruction list includes drawCircle(x0, y0, 5). In this case, when performing the draw operation drawCircle(x0, y0, 5), the UniRender process changes the draw operation to drawCircle(x0, y0, 2.5). In drawCircle(), a first parameter is the coordinate of the circle center on the X axis, a second parameter is the coordinate of the circle center on the Y axis, and a third parameter is the radius of the circle.

Considering that the draw instruction list generated by the UI thread of the application may be related to a size of a surface applied for by the application, in this embodiment of this application, when traversing render tree nodes, the UniRender process configures setStaticMatrix() in a property of the render node, to transform a reference coordinate system of drawing and rendering.

The UniRender process may determine, by using the WMS, a size of a reference coordinate system or a reference surface when each application generates a draw instruction list, to determine a parameter of setStaticMatrix().

FIG. 21 is a schematic diagram of an example of setStaticMatrix() according to an embodiment of this application.

After determining a surface coordinate system referenced by the application for generating the draw instruction list, the UniRender process determines a coordinate transformation matrix Transformation based on a coordinate system of the surface held by the UniRender process.

$$\text{Transformation} = \begin{bmatrix} scale_x & skew_x & translate_x \\ skew_y & scale_y & translate_y \\ 0 & 0 & 1 \end{bmatrix}$$

Herein, $scale_x$ is scaling in the x-axis direction, $skew_x$ is warping/tilting in the x-axis direction, $translate_x$ is translation in the x-axis direction, $scale_y$ is scaling in the y-axis direction, $skew_y$ is warping/tilting in the y-axis direction, and $translate_y$ is translation in the y-axis direction.

After executing the setStaticMatrix() instruction, the UniRender process obtains the coordinate transformation matrix Transformation through calculation, and applies the transformation matrix to each draw operation in the draw instruction list. As shown in FIG. 21, when the coordinate system referenced by the UI thread of the application for generating the render tree is not the coordinate system on the surface held by the UniRender process, the UniRender process determines the coordinate transformation matrix Transformation by using the setStaticMatrix() instruction, and transforms the reference coordinate system when drawing an interface on the surface based on the draw instruction list, to correctly draw the interface.

The foregoing mainly describes a specific procedure in which the electronic device implements the interface generation method provided in embodiments of this application in a single-display-area scenario. The following mainly describes a specific procedure in which the electronic device implements the interface generation method provided in embodiments of this application in a multi-display-area scenario.

**(2.3) Interface generation method in a multi-display-area scenario**

First, the multi-display-area scenario is described by using an example.

(a) Multi-display-area scenario

In embodiments of this application, the display area (display) may be a screen, a virtual screen (VirtualDisplay), or the like. The virtual screen may be an area used by the electronic device to carry content displayed on the screen during screen recording.

FIG. 22A to FIG. 22C are schematic diagrams of an example of a multi-display-area scenario according to an embodiment of this application.

When a plurality of screens are configured on the electronic device, each screen is a display area. As shown in FIG. 22A, a primary screen of the electronic device is used as a display area 1 to display a desktop application, and a secondary screen of the electronic device is used as a display area 2 to display a music application.

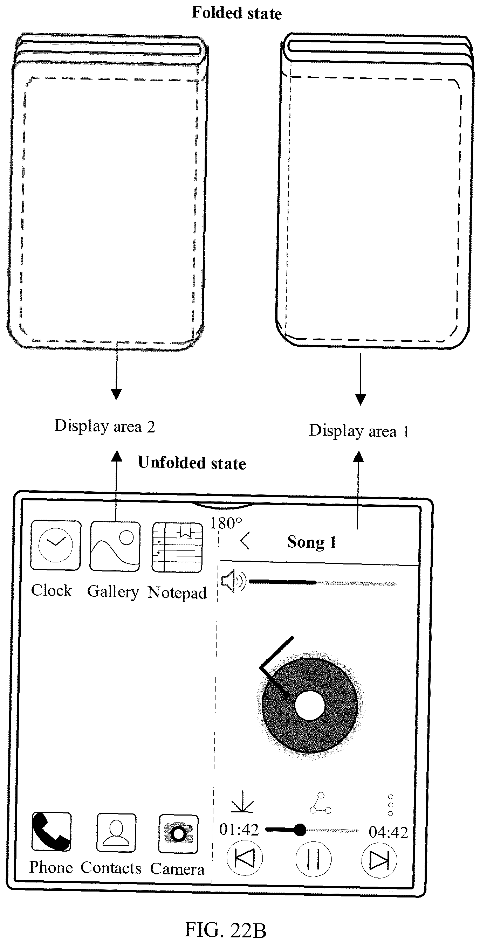

The screen of the electronic device may have a plurality of states, and the screen in each state may be one or more display areas. As shown in FIG. 22B, when the screen of the electronic device is in a folded state, each part of the screen may be a display area; or when the screen of the electronic device is in an unfolded state, the left half part of the screen and the right half part of the screen each may be a display area.

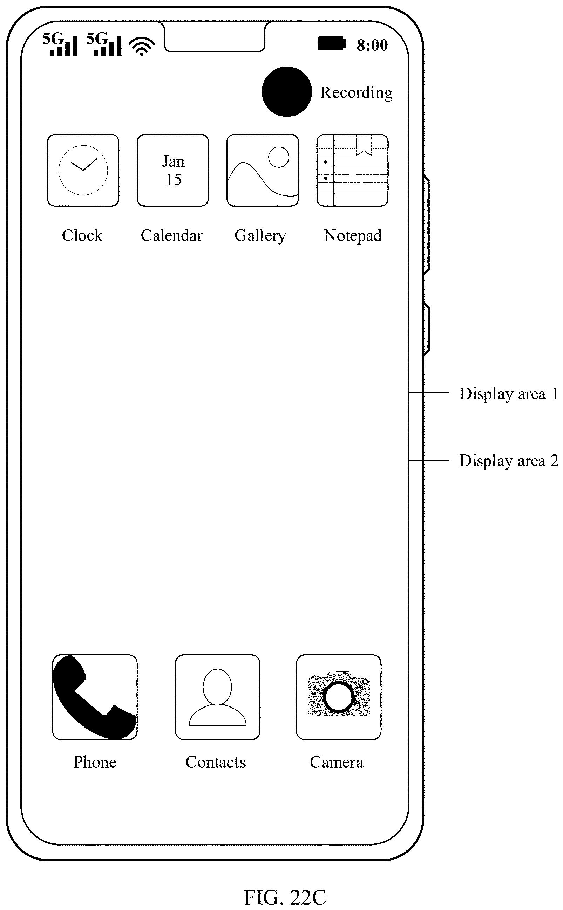

As shown in FIG. 22C, when a screen recording function is enabled, the screen of the electronic device is a display area, and a virtual screen carrying screen recording content is a display area. Content displayed in the two display areas may be the same.

FIG. 23A-1 and FIG. 23A-2 to FIG. 23C are schematic diagrams of another example of a multi-display-area scenario according to an embodiment of this application.

As shown in FIG. 23A-1 and FIG. 23A-2, an electronic device 1 shares content displayed on a screen with a screen of an electronic device 2. In this case, for the electronic device 1, the screen of the electronic device 1 is a display area 1, and the screen of the electronic device 2 is a display area 2. Content displayed on the screen of the electronic device 2 includes content on the screen of the electronic device 1.

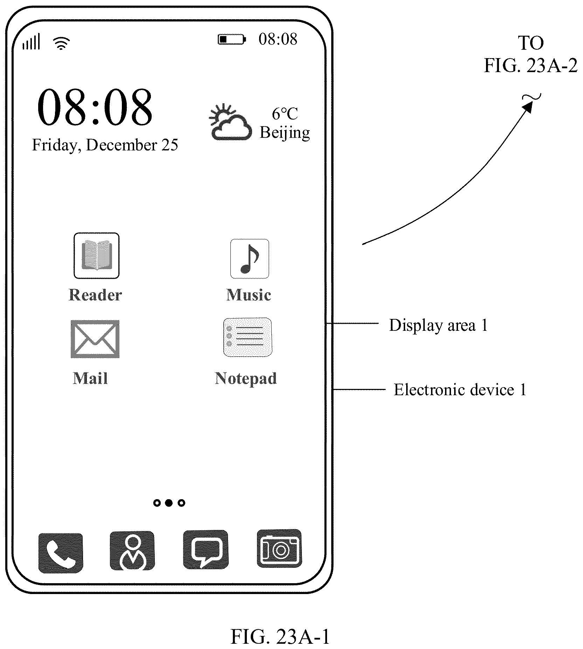

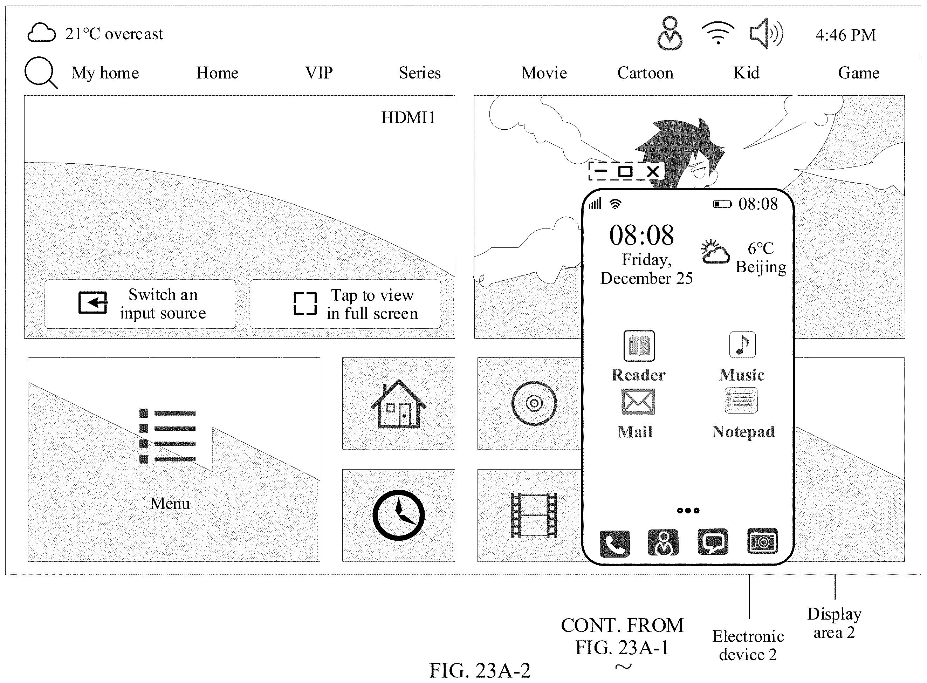

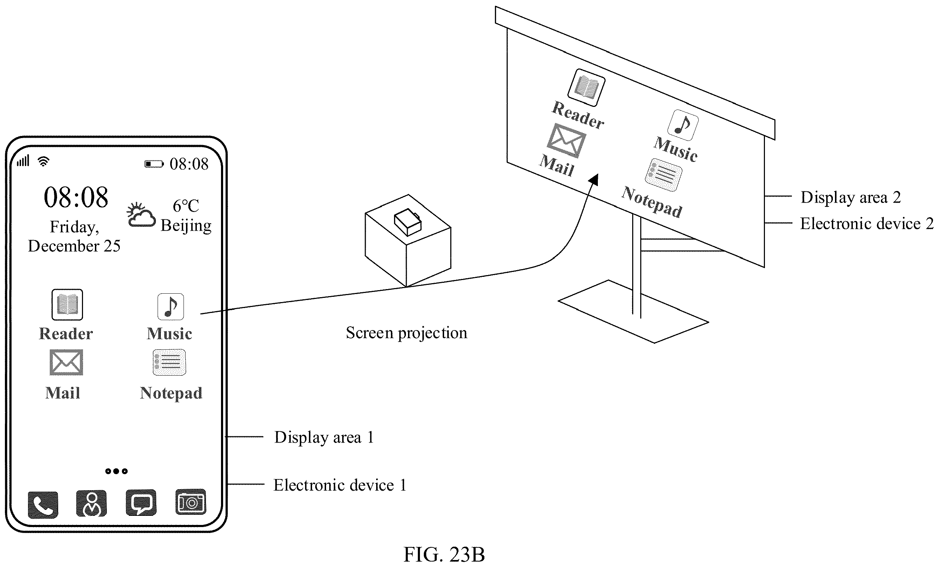

As shown in FIG. 23B, an electronic device 1 projects content displayed on a screen onto a screen of an electronic device 2. In this case, for the electronic device 1, the screen of the electronic device 1 is a display area 1, and the screen of the electronic device 2 is a display area 2. Different from the content shown in FIG. 23A-1 and FIG. 23A-2, content displayed on the screen of the electronic device 2 is only content on the screen of the electronic device 1.

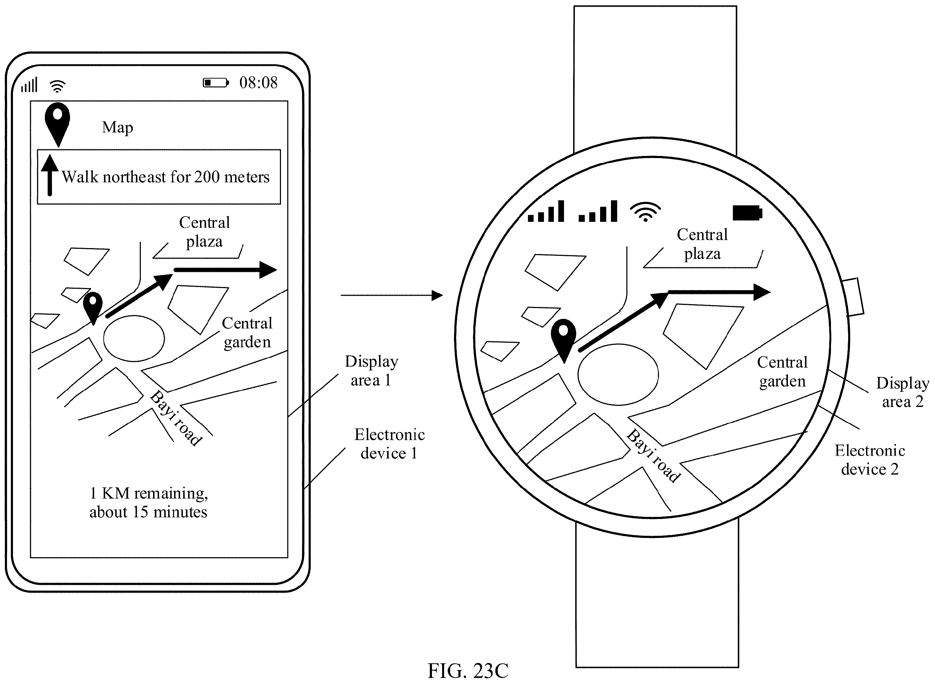

As shown in FIG. 23C, an electronic device 1 projects content displayed on a screen onto a screen of an electronic device 2. In this case, for the electronic device 1, the screen of the electronic device 1 is a display area 1, and the screen of the electronic device 2 is a display area 2. Different from the content shown in FIG. 23A-1 and FIG. 23A-2 and FIG. 23B, content displayed on the screen of the electronic device 2 is some content on the screen of the electronic device 1.

It should be noted that, in the multi-display-area scenario, in a case of a plurality of electronic devices, for example, there is a display area 1 on an electronic device 1 and there is a display area 2 on an electronic device 2, only content displayed on a screen of the electronic device 1 may be displayed in the display area 2, or some or all content displayed on a screen of the electronic device 1 and content originally displayed on a screen of the electronic device 2 may be displayed in the display area 2 in a superimposition manner.

(b) Interface generation method in a single-device multi-display-area scenario

FIG. 24 is a schematic diagram of another example of an interface generation method according to an embodiment of this application.

As shown in FIG. 24, the interface generation method in the single-device multi-display-area scenario includes the following steps.

S2401: Construct and generate a render tree after receiving a vertical signal.

For specific content, refer to the corresponding text description in step S901 in FIG. 9. Details are not described herein again.

S2402: Transfer the render tree in a cross-process manner.

For specific content, refer to the corresponding text description in step S902 in FIG. 9. Details are not described herein again.

Optionally, in some embodiments of this application, the DisplayRender subprocess may directly obtain the render tree through IPC communication with a corresponding application. A UniRender process determines a correspondence between the DisplayRender subprocess and the application.

Optionally, in some embodiments of this application, a shared memory set including a plurality of shared memories may exist between all DisplayRender subprocesses and all applications, and each DisplayRender subprocess holds handles of the plurality of shared memories.

For a concept of the DisplayRender subprocess, refer to the corresponding text description in step S2404. Details are not described herein again.

S2403: Transfer window control information and display area information of the application.

For specific content, refer to the corresponding text description in step S903 in FIG. 9. Details are not described herein again.

S2404: Allocate the render tree.

The UniRender process may create subprocesses DisplayRender (DisplayRender1 to DisplayRenderN in FIG. 24) whose quantity is equal to a quantity of display areas, and transfer a render tree of an application displayed in a display area to the DisplayRender.

For example, an application 1 and an application 2 are displayed in a display area 1, and the display area 1 is corresponding to the subprocess DisplayRender1; and an application 3 and an application 4 are displayed in a display area 2, and the display area 2 is corresponding to the subprocess DisplayRender 2. In this case, the UniRender process transfers a render tree of the application 1 and a render tree of the application 2 to the subprocess DisplayRender1, and transfers a render tree of the application 3 and a render tree of the application 4 to the subprocess DisplayRender2.

The DisplayRender1 and the DisplayRender2 may obtain a handle of a shared memory of a corresponding application from the UniRender process, to obtain a render tree of the corresponding application. Alternatively, the render tree of the application is obtained from the UniRender process in another IPC communication manner such as Binder. This is not limited herein.

Optionally, in some embodiments of this application, the UniRender process may first merge render trees of a plurality of applications into a target render tree, and then transfer the target render tree to a corresponding DisplayRender subprocess. Transfer of the target render tree may be implemented in a plurality of IPC communication manners such as shared memory and Binder. This is not limited herein.

Optionally, in some embodiments of this application, the UniRender process may move an off-screen rendering instruction forward for the render tree, and then transfer the render tree to the corresponding DisplayRender subprocess, or may transfer window control information and a render tree of an application in a corresponding display area to a corresponding DisplayRender subprocess, and the DisplayRender subprocess moves an off-screen rendering instruction forward for the render tree and merges a plurality of render trees into the target render tree.

Optionally, in some embodiments of this application, two threads may be configured for the DisplayRender subprocess, for example, an I/O thread and a render thread. The I/O thread is responsible for receiving a render tree, and the render thread is responsible for generating a target render tree and generating a bitmap based on the target render tree.

It may be understood that, by creating a plurality of DisplayRender subprocesses, the UniRender process may perform frequency division and frequency multiplication on the vertical synchronization signal (Vsync-UR), and transmit the vertical synchronization signal (Vsync-UR) on which frequency division and frequency multiplication are performed to different DisplayRender subprocesses, so that the different DisplayRender subprocesses generate bitmaps at different frequencies to match refresh rates of different display areas.

FIG. 25 is a schematic diagram of an example in which a UniRender process performs frequency division or frequency multiplication on a vertical synchronization signal according to an embodiment of this application.

As shown in FIG. 25, if refresh rates of display areas corresponding to different DisplayRender subprocesses are different, the UniRender may perform frequency division or frequency multiplication on a vertical synchronization signal (Vsync-UR), to forward the vertical synchronization signal to different DisplayRender subprocesses.

For example, a refresh rate of a display area 1 is 60 Hz, a refresh rate of a display area 2 is 30 Hz, a DisplayRender subprocess corresponding to the display area 1 is DisplayRender1, and a DisplayRender subprocess corresponding to the display area 2 is DisplayRender2. In this case, after receiving the 60 Hz vertical synchronization signal (Vsync), or after generating the 60 Hz vertical synchronization signal (Vsync), the UniRender process performs frequency division to generate a 30 Hz vertical synchronization signal (Vsync-UR) and a 60 Hz vertical synchronization signal (Vsync-UR), transfers the 60 Hz vertical synchronization signal (Vsync-UR) to the DisplayRender1 subprocess, and transfers the 30 Hz vertical synchronization signal (Vsync-UR) to the DisplayRender2 subprocess.

It may be understood that, frequency division or frequency multiplication is performed on the vertical synchronization signal (Vsync-UR), so that a frequency at which the DisplayUniRender process receives the render tree or the target render tree and a frequency at which the bitmap is generated are consistent with a refresh frequency of the display area.

After receiving the vertical synchronization signal (Vsync-UR), the DisplayRender subprocess may start to read the render tree, generate the target render tree, and generate the bitmap.

It should be noted that the UniRender process receives display area information sent by the display manager service, determines a connection status of each display area, and may create or destruct, according to the connection status of the display area, a DisplayRender process corresponding to each display area.

For content of concepts such as an architecture of the UniRender and a shared memory, refer to the text description in step S904. Details are not described herein again.

S2405: Generate a target render tree based on the obtained render tree, the window control information, and the display area information.

The DisplayRender subprocess merges one or more target render trees into a target render tree, and moves an off-screen rendering instruction forward for a render tree of an application when a layer of the application relates to off-screen rendering logic.

It should be noted that the DisplayRender subprocess may obtain the window control information and the display area information in the display area from the UniRender process.

Optionally, in some embodiments of this application, the UniRender process may merge one or more render trees into a target render tree, and then transfer the target render tree to a DisplayRender subprocess.

For content of concepts such as a process of generating the target render tree and moving the off-screen rendering instruction forward, refer to the text description in step S904. Details are not described herein again.

S2406: Generate a bitmap based on the target render tree.

After generating the target render tree, the DisplayRender subprocess generates the bitmap based on the target render tree. After generating the bitmap, the DisplayRender subprocess transfers a surface that carries the bitmap to the UniRender process. The UniRender process sends content of the surface to each display area through a DSS.

For a process of generating the bitmap based on the target render tree, refer to the text description in step S905. Details are not described herein again.

Because the invocation of the underlying graphics library depends on the context, different DisplayRender subprocesses correspond to different contexts, so that bitmaps can be generated for different display areas in parallel.

It may be understood that the UniRender process may generate a bitmap for each display area in parallel by creating a DisplayRender subprocess that is in a one-to-one correspondence with the display area. In the multi-display-area scenario, an interface generation speed can be improved, frame freezing can be reduced, and user experience can be improved.

With reference to content shown in FIG. 26A and FIG. 26B, the following describes an example of a data flow process when an electronic device implements an interface generation method.

FIG. 26A and FIG. 26B are schematic diagrams of an example of a data flow when an electronic device implements an interface generation method according to an embodiment of this application.

As shown in FIG. 26A, there are two display areas on the electronic device: a display area 1 and a display area 2. Content of an application 1 and an application 3 is displayed in the display area 1, and content of an application 2, the application 3, and an application 4 is displayed in the display area 2.

The UniRender process creates a DisplayRender1 subprocess corresponding to the display area 1 and a DisplayRender2 subprocess corresponding to the display area 2. After receiving a render tree 1 of the application 1, a render tree 2 of the application 2, a render tree 3 of the application 3, and a render tree 4 of the application 4, the UniRender process transfers the render tree 1 and the render tree 3 to the DisplayRender1 subprocess, and transfers the render tree 2, the render tree 3, and the render tree 4 to the DisplayRender2 subprocess. The UniRender process transfers related window control information and display area information to the DisplayRender subprocess.

The DisplayRender1 sub-process and the DisplayRender2 sub-process separately generate bitmaps based on the target render tree. The DisplayRender1 subprocess generates surface1 based on display area information of the display area 1, and the DisplayRender1 subprocess generates surface2 based on display area information of the display area 2. The surface1 is used to carry a bitmap 1 generated by the DisplayRender1 subprocess, and the surface2 is used to carry a bitmap 2 generated by the DisplayRender1 subprocess. A size of the surface 1 may be related to a size of the display area 1, and a size of the surface 2 may be related to a size of the display area 2.

In this embodiment of this application, content displayed by an application in different display areas may be the same or may be different. If the content displayed by the application in different display areas is the same, one render tree generated by the application is allocated to a plurality of DisplayRender subprocesses. If the content displayed by the application in different display areas is different, the application generates a plurality of different render trees, and correspondingly allocates the render trees to a plurality of DisplayRender subprocesses.

For example, in the content shown in FIG. 26B, because sizes (for example, resolutions) of the display area 1 and the display area 2 are different, interfaces displayed by the application 3 in the display area 1 and the display area 2 are different (for example, layout structures are different, but content is the same). Therefore, the application generates render trees corresponding to different display areas, which are respectively a render tree 31 and a render tree 32. The render tree 31 is transferred to the DisplayRender1 subprocess, and the render tree 32 is transferred to the DisplayRender2 subprocess.

Two threads may be configured for any DisplayRender subprocess, for example, an I/O thread and a render thread. The I/O thread is responsible for receiving a render tree, and the render thread is responsible for generating a target render tree and generating a bitmap based on the target render tree.

(c) Interface generation method in a multi-device multi-display-area scenario

As shown in the scenarios in FIG. 23A-1 and FIG. 23A-2 to FIG. 23C, the electronic device may display a part or all of content on a screen on a screen of a peer electronic device in a manner such as projection or multi-screen collaboration.

In the multi-device multi-display-area scenario, after establishing a connection to the peer electronic device, the local electronic device may use the screen of the peer electronic device as a display area 2, and transfer, to the peer electronic device, a render tree of an application that needs to be displayed in the display area 2. After receiving the render tree of the local electronic device, the peer electronic device merges render trees of all applications displayed in the display area 2 into a target render tree, to generate a bitmap and send the bitmap for display.

Alternatively, the local electronic device may send, to the peer electronic device, an interface of an application displayed in the display area 2.

FIG. 27 is a schematic diagram of another example of an interface generation method according to an embodiment of this application.

As shown in FIG. 27, the interface generation method provided in this embodiment of this application includes the following steps.

S2701: Establish a connection.

An electronic device 1 and an electronic device 2 establish a communication connection in a plurality of manners such as Bluetooth, Wi-Fi, and HiLink. The electronic device 1 uses a screen of the electronic device 2 as a display area 2, and a screen of the electronic device 1 is used as a display area 1.

After determining that the connection is established between the electronic device 1 and the electronic device 2, or after receiving a projection request, a multi-screen collaboration request, or the like of a display manager service and a window manager service, a UniRender process on the electronic device 2 may apply for a heap memory to store data that is sent by the electronic device 1 and that is used for rendering and generating a bitmap, for example, a render tree.

S2702: Determine an application displayed in the display area 2.

The window manager service and the display manager service on the electronic device 1 determine the application to be displayed in the display area 2, and transfer the result to a UniRender1 process on the electronic device 1. Then, the UniRender1 process on the electronic device 1 obtains, through IPC communication, a render tree of the application displayed in the display area 2.

For obtaining, by the UniRender1 process, the render tree of the application through IPC communication, refer to the foregoing text description in step S902. Details are not described herein again.

S2703: Send the render tree of the application displayed in the display area 2.

The UniRender1 process on the electronic device 1 sends the render tree of the application displayed in the display area 2 to the electronic device 2.

The UniRender 1 may determine a start address of a shared memory and a size of the shared memory, and transfer the render tree to the created heap memory of the UniRender 2 process on the electronic device 2 by using the communication connection in step S2701.

A storage structure of data in the heap memory may be consistent with a storage structure of data in the shared memory in the UniRender1. For the storage structure of the data in the heap memory and read and write security of the heap memory, refer to the text description in step S902. Details are not described herein again.

It may be understood that, the electronic device 1 sends the render tree to the electronic device 2, so that a data transmission amount between the electronic device 1 and the electronic device 2 can be reduced, thereby reducing a delay and improving an interface generation speed.

S2704: Merge the render tree of the application displayed in the display area 2 into a target render tree.

After receiving the vertical synchronization signal (Vsync-UR2), the UniRender2 process on the electronic device 2 merges the render tree of the application displayed in the display area 2 into the target render tree, and may complete moving forward of an off-screen rendering instruction in this process.

The electronic device 2 may merge the render tree sent by the electronic device 1 and a local render tree of the electronic device 2 into the target render tree.

FIG. 28A and FIG. 28B each are a schematic diagram of an example of merging render trees into a target render tree according to an embodiment of this application.

As shown in FIG. 28A, an application 1 and an application 2 run on an electronic device 1, a render tree generated by the application 1 is a render tree 1, and a render tree generated by the application 2 is a render tree 2. An application 3 runs on an electronic device 2, and a render tree generated by the application 3 is a render tree 3.

A UniRender1 process on the electronic device 1 determines that an interface of the application 2 needs to be displayed in a display area 2, and sends the render tree 2 to a UniRender2 process on the electronic device 2.

The UniRender1 process separately moves an off-screen rendering instruction forward for the render tree 1 and the render tree 2, and merges the render tree 1 and the render tree 2 into a target render tree 1, to generate a bitmap 1. The UniRender2 process separately moves an off-screen rendering instruction forward for the render tree 2 and the render tree 3, and merges the render tree 2 and the render tree 3 into a target render tree 2, to generate a bitmap 2.

It should be noted that, the UniRender1 process may send all data of the render tree 2 or send differential data of the render tree 2 to the UniRender2 process when the UniRender1 process sends data of the render tree 2 to the UniRender2 process. All data of the render tree 2 may be current properties, current displaylist, staging displaylist, or staging properties in the shared memory; and differential data of the render tree 2 may be a draw instruction list and a rendering property of a render node of the render tree 2 in a properties_dirty queue and a displaylist_dirty queue.

As shown in FIG. 28B, an application 1, an application 2, and an application 3 run on an electronic device 1, a render tree generated by the application 1 is a render tree 1, a render tree generated by the application 2 is a render tree 2, and a render tree generated by the application 2 is a render tree 3. An application 4 runs on an electronic device 2, and a render tree generated by the application 4 is a render tree 4.

If the UniRender1 process on the electronic device 1 determines that interfaces of the application 2 and the application 3 need to be displayed in the display area 2, the UniRender1 process sends the render tree 2 and the render tree 3 to the UniRender2 process of the electronic device 2, or after the render tree 2 and the render tree 3 are merged into a target render tree 2, sends the target render tree 2 to the UniRender2 process of the electronic device 2.

The UniRender1 process separately moves an off-screen rendering instruction forward for the render tree 1, the render tree 2, and the render tree 3, and merges the render tree 1, the render tree 2, and the render tree 3 into a target render tree 1, to generate a bitmap 1. The UniRender1 process moves an off-screen rendering instruction forward for the render tree 2, and merges the render tree 2 into a target render tree 2.

Optionally, in some embodiments of this application, the UniRender1 process may create a plurality of subprocesses DisplayRender, to separately receive and process render trees from different applications. To be specific, in the content shown in FIG. 28B, the UniRender1 process may create two subprocesses DisplayRender: DisplayRender1 and DisplayRender2. The DisplayRender1 subprocess receives the render tree 1, the render tree 2, and the render tree 3, and merges the render tree 1, the render tree 2, and the render tree 3 into the target render tree 1. The DisplayRender2 subprocess receives the render tree 2 and the render tree 3, merges the render tree 2 and the render tree 3 into the target render tree 2, and sends the target render tree 2 to the UniRender2 process.

The UniRender2 process separately moves an off-screen rendering instruction forward for the render tree 2 and the render tree 3, and merges the render tree 2 and the render tree 3 into a target render tree 2, to generate a bitmap 2.

It should be noted that, in response to a vertical synchronization signal (Vsync-UR1) on the electronic device 1, the UniRender1 process obtains render trees of one or more applications from the shared memory, and starts to generate the target render tree. In response to a vertical synchronization signal (Vsync-UR2) on the electronic device 2, the UniRender 2 obtains render trees of one or more applications from the heap memory and/or the shared memory, and starts to generate the target render tree.

Optionally, in some embodiments of this application, when frequencies of the vertical synchronization signal (Vsync-UR1) on the electronic device 1 and the vertical synchronization signal (Vsync-UR2) on the electronic device 2 are inconsistent, the UniRender on the electronic device 1 may adjust, through frequency division or frequency multiplication, the frequency of the vertical synchronization signal (Vsync-UR1) to be the same as that of the Vsync-UR2. Alternatively, the UniRender 2 on the electronic device 2 may adjust, through frequency division or frequency multiplication, a frequency of the vertical synchronization signal (Vsync-UR2) to be the same as a frequency of the vertical synchronization signal (Vsync-UR1).

Optionally, in some embodiments of this application, vertical synchronization signals (Vsync-UR1) at a plurality of frequencies may be configured for the electronic device 1. For example, in the scenario shown in FIG. 28A and FIG. 28B, an original frequency of a vertical synchronization signal (Vsync-UR) on the electronic device 1 is 60 Hz, and an original frequency of a vertical synchronization signal (Vsync-UR2) on the electronic device 2 is 90 Hz. After the electronic device 1 determines to display the interface of the application 2 on the electronic device 2, the UniRender process of the electronic device 1 may generate vertical synchronization signal (Vsync-UR1) frequencies that are respectively 60 Hz and 90 Hz, so that the application 2 generates a render tree at a frequency of 90 Hz. In this way, the UniRender1 process may transfer the render tree to the UniRender2 process at a frequency of 90 Hz. The application 1 may still generate a render tree at a frequency of 60 Hz.

On any electronic device, a vertical synchronization signal (Vsync-UR) received or generated by the UniRender may be the same as a vertical synchronization signal (Vsync-APP) received by an application.

S2705: Generate a bitmap based on the target render tree.

For specific content, refer to the text description in step S905. Details are not described herein again.

Optionally, in some embodiments of this application, the UniRender1 process of the electronic device 1 may first merge one or more render trees in the display area 2 into a target render tree, generate a bitmap based on the target render tree, and transfer the bitmap to the UniRender2 process of the electronic device 2.

It should be noted that, when the electronic device 2 displays the interface of the application 1 on the electronic device 1, the user taps the interface of the application 1 on the electronic device 2 in another interaction manner such as tapping, and the electronic device 2 may send a location of the tapping operation performed by the user in the interface of the application 1 to the application 1 on the electronic device 1, so that the application 1 can correctly respond to user interaction. Alternatively, because the interface of the application 1 on the electronic device 2 is generated by the UniRender2 process on the electronic device 2 based on the render tree, and the render tree includes location information of a view, the electronic device 2 may determine a view tapped by the user, and directly send the view tap event to the application 1 on the electronic device 1, so that the application 1 can correctly respond to user interaction.

**(3) Finally, a hardware architecture and a software architecture of an electronic device provided in embodiments of this application are described.**

FIG. 29 is a schematic diagram of an example of a hardware structure of an electronic device according to an embodiment of this application.

The following specifically describes the embodiments by using the electronic device as an example. It should be understood that the electronic device may have more or fewer components than those shown in the figure, may combine two or more components, or may have different component configurations. The components shown in the figure may be implemented in hardware including one or more signal processing and/or application-specific integrated circuits, software, or a combination of hardware and software.

The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device. In some other embodiments of this application, the electronic device may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device. The controller may generate an operation control signal based on instruction operation code and a time sequence signal, to complete control of instruction fetching and instruction execution.

A memory may be further disposed in the processor 110, to store instructions and data. In some embodiments, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, and includes a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K by using an I2C interface, so that the processor 110 communicates with the touch sensor 180K by using the I2C bus interface, to implement a touch function of the electronic device.

The I2S interface may be used for audio communication. The PCM interface may be configured to perform audio communication, and sample, quantize, and code analog signals. The UART interface is a universal serial data bus, and is used for asynchronous communication.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 and the camera 193 communicate with each other by using the CSI interface, to implement a photographing function of the electronic device. The processor 110 communicates with the display 194 by using the DSI interface, to implement a display function of the electronic device. The GPIO interface may be configured by using software. The GPIO interface may be configured as a control signal, or may be configured as a data signal. In some embodiments, the GPIO interface may be configured to connect the processor 110 to the camera 193, the display 194, the wireless communication module 160, the audio module 170, the sensor module 180, and the like. The GPIO interface may alternatively be configured as the I2C interface, the I2S interface, the UART interface, the MIPI interface, or the like. The SIM interface may be configured to communicate with the SIM card interface 195, to implement a function of transmitting data to a SIM card or reading data in a SIM card. The USB interface 130 is an interface conforming to a USB standard specification, and may be specifically a mini USB interface, a micro USB interface, a USB Type-C interface, or the like.

It may be understood that the interface connection relationship between the modules shown in this embodiment of the present invention is merely an example, and does not constitute a limitation on the structure of the electronic device. In some other embodiments of this application, the electronic device may alternatively use an interface connection manner different from that in the foregoing embodiment, or a combination of a plurality of interface connection manners.

The charging management module 140 is configured to receive charging input from a charger. The power management module 141 is configured to connect the battery 142, the charging management module 140, and the processor 110.

A wireless communication function of the electronic device may be implemented by using the antenna 1, the antenna 2, the mobile communication module 150, the wireless communication module 160, the modem processor, the baseband processor, and the like. The antenna 1 and the antenna 2 are configured to transmit and receive electromagnetic wave signals. Each antenna in the electronic device may be configured to cover one or more communication bands. Different antennas may be multiplexed to improve antenna utilization. The mobile communication module 150 may provide a solution for wireless communication, including 2G/3G/4G/5G and the like, that is applied to the electronic device. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send a processed electromagnetic wave to the modem processor for demodulation. The mobile communication module 150 may further amplify a signal modulated by the modem processor, and convert the signal into an electromagnetic wave for radiation through the antenna 1. In some embodiments, at least some function modules of the mobile communication module 150 may be disposed in the processor 110. In some embodiments, at least some function modules of the mobile communication module 150 may be disposed in a same component as at least some modules of the processor 110.

The modem processor may include a modulator and a demodulator. The modulator is configured to adjust a to-be-sent low-frequency baseband signal to a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110 and disposed in a same device as the mobile communication module 150 or another function module.

The wireless communication module 160 may provide a solution for wireless communication that is applied to the electronic device and that includes a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more components that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

In some embodiments, in the electronic device, the antenna 1 is coupled to the mobile communication module 150, and the antenna 2 is coupled to the wireless communication module 160, so that the electronic device can communicate with a network and another device according to a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device implements a display function by using the GPU, the display 194, the application processor, and the like. The GPU is a microprocessor for image processing, and is connected to the display 194 and the application processor. The GPU is configured to perform mathematical and geometric calculation and render graphics. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), or the like. In some embodiments, the electronic device may include one or N displays 194, where N is a positive integer greater than 1.

The electronic device may implement a photographing function by using the ISP, the camera 193, the video codec, the GPU, the display 194, the application processor, and the like, to obtain real-time video data.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise and luminance of the image. The ISP may further optimize parameters such as exposure and a color temperature of a photographing scenario. In some embodiments, the ISP may be disposed in the camera 193.

The camera 193 is configured to capture a still image or a video. An optical image of an object is generated by using a lens and projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for conversion into a digital image signal. The ISP outputs the digital image signal to the DSP for processing. The DSP converts the digital image signal into a standard image signal in a format such as RGB or YUV. In some embodiments, the electronic device may include one or N cameras 193, where N is a positive integer greater than 1.

The digital signal processor is configured to process a digital signal. In addition to processing a digital image signal, the digital signal processor may further process another digital signal. For example, when the electronic device selects a frequency, the digital signal processor is configured to perform Fourier transform or the like on frequency energy.

The video codec is configured to compress or decompress a digital video. The electronic device can support one or more video codecs. In this way, the electronic device may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor that processes input information rapidly by referring to a structure of a biological neural network, for example, by referring to a transmission mode between human brain neurons, and can further perform self-learning continuously. The NPU may be used to implement applications such as intelligent cognition of the electronic device, for example, image recognition, facial recognition, voice recognition, and text understanding.

The internal memory 121 may include one or more random access memories (random access memory, RAM) and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, where for example, a 5th generation DDR SDRAM is usually referred to as DDR5 SDRAM), and the like.

The non-volatile memory may include a disk storage device and a flash memory (flash memory).

In embodiments of this application, a non-real-time video may be located in the non-volatile memory.

According to operation principles, the flash memory may include NOR FLASH, NAND FLASH, 3D NAND FLASH, and the like. According to quantities of potential levels of storage units, the flash memory may include a single-level cell (single-level cell, SLC), a multi-level cell (multi-level cell, MLC), a triple-level cell (triple-level cell, TLC), a quad-level cell (quad-level cell, QLC), and the like. According to storage specifications, the flash memory may include a universal flash storage (English: universal flash storage, UFS), an embedded multimedia card (embedded multimedia Card, eMMC), and the like.

The random access memory may be directly read and written by the processor 110, may be configured to store an executable program (for example, a machine instruction) of an operating system or another running program, and may be further configured to store data of a user and an application.

The non-volatile memory may also store an executable program, data of a user and an application, and the like, and may be loaded into the random access memory in advance, for direct reading and writing by the processor 110.

The external memory interface 120 may be configured to connect to an external non-volatile memory, to extend a storage capability of the electronic device. The external non-volatile memory communicates with the processor 110 by using the external memory interface 120, to implement a data storage function. For example, files such as music or videos are stored in the external non-volatile memory.

The electronic device may implement an audio function, such as music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The speaker 170A, also referred to as a "loudspeaker", is configured to convert an audio electrical signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. The gyro sensor 180B may be configured to determine a motion gesture of the electronic device. The barometric pressure sensor 180C is configured to measure barometric pressure. The magnetic sensor 180D includes a Hall sensor. The acceleration sensor 180E may detect values of acceleration of the electronic device in all directions (usually on three axes). The distance sensor 180F is configured to measure a distance. The optical proximity sensor 180G may include, for example, a light-emitting diode (LED) and a light detector such as a photodiode. The ambient light sensor 180L is configured to sense ambient light brightness. The fingerprint sensor 180H is configured to collect a fingerprint. The electronic device may implement fingerprint-based unlocking, application lock access, fingerprint-based photographing, fingerprint-based call answering, or the like based on a feature of the collected fingerprint. The temperature sensor 180J is configured to detect a temperature.

The touch sensor 180K is also referred to as a "touch panel". The touch sensor 180K may be disposed on the display 194. The touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. Visual output related to the touch operation may be provided by using the display 194. In some other embodiments, the touch sensor 180K may alternatively be disposed on a surface of the electronic device at a position different from that of the display 194.

The button 190 includes a power button, a volume button, and the like. The button 190 may be a mechanical button, or may be a touch button. The electronic device may receive button input, and generate button signal input related to user settings and function control of the electronic device. The motor 191 may generate a vibration prompt. The indicator 192 may be an indicator light, and may be used to indicate a charging status or a power change, or may be used to indicate a message, a missed call, a notification, or the like. The SIM card interface 195 is configured to connect to a SIM card. The electronic device interacts with a network by using a SIM card, to implement functions such as conversation and data communication.

FIG. 30 is a schematic diagram of an example of a software structure of an electronic device according to an embodiment of this application.

In the layered architecture, software is divided into several layers, and each layer has a clear role and task. The layers communicate with each other through a software interface. In some embodiments, a system is divided into four layers: an application layer, an application framework layer, a system library, and a kernel layer from top to bottom.

The application layer may include a series of application packages. As shown in FIG. 20, the application packages may include application programs (which may also be referred to as applications) such as Camera, Gallery, Calendar, Phone, Map, Navigation, WLAN, Bluetooth, Music, Videos, and Messages.

The application framework layer provides an application programming interface (application programming interface, API) and a programming framework for applications at the application layer. The application framework layer includes some predefined functions.

As shown in FIG. 30, the application framework layer may include a window manager service, a display manager service, a content provider, a view system, a phone manager, a resource manager, a notification manager, a local profile assistant (Local Profile Assistant, LPA), and the like.

The window manager service is responsible for starting, adding, and deleting a window, and can determine an application displayed in the window, determine creation, destruction, a property change, and the like of a layer of an application, determine whether there is a status bar, lock a screen, capture a screen, and the like.

The display manager service can obtain a quantity of display areas and a size of a display area, and is responsible for starting, adding, and deleting a display area.

The content provider is configured to store and obtain data and make the data accessible to the application. The data may include videos, images, audio, calls that are made and received, browsing history and bookmarks, a phone book, and the like.

The phone manager is configured to provide a communication function of the electronic device, for example, call status management (including accepting and declining).

The resource manager provides various resources for the application, such as a localized string, an icon, a picture, a layout file, and a video file.

The notification manager enables the application to display notification information in a status bar, and may be configured to transfer a message of a notification type. The information may automatically disappear after a short stay without user interaction. For example, the notification manager is configured to notify a download completion, a message reminder, and the like. The notification manager may alternatively be a notification that appears in a form of a graph or a scroll bar text in a status bar at the top of the system, for example, a notification of an application running in the background, or may be a notification that appears in a form of a dialog interface on a screen. For example, the status bar shows text information, a prompt tone is made, the electronic device vibrates, and an indicator flickers.

The view system includes visual controls, such as a text display control and a picture display control. The view system may be configured to construct an application. A display interface may include one or more views. For example, a display interface including an SMS notification icon may include a text display view and a picture display view.

The view system further includes a UniRender, and the UniRender may receive render trees of one or more applications. The UniRender may synchronize layer information, such as layer creation, layer destruction, and a property change, by using the window manager service. The UniRender may synchronize information about a display area, such as a screen size, from the display manager service.

Optionally, in some embodiments of this application, the view system further includes a SurfaceFlinger. On an electronic device configured with a trustlist, when an application does not belong to the trustlist, after a UI thread of the application generates a render tree, a render thread of the application generates a bitmap, and then the bitmap is sent to the SurfaceFlinger for layer composition.

Optionally, in some embodiments of this application, when an application in the trustlist and an application not in the trustlist are displayed in a display area, the UniRender is responsible for generating a bitmap of the application in the trustlist. After generating the bitmap, the UniRender transfers the bitmap to the SurfaceFlinger. Then, the Surface-Flinger performs layer composition on the bitmap and another application not in the trustlist, to generate a bitmap to be sent for display.

The runtime includes a kernel library and a virtual machine. The runtime is responsible for scheduling and management of the operating system.

The kernel library includes two parts: a function that needs to be invoked by using the Java language, and a kernel library.

The application layer and the application framework layer run in the virtual machine. The virtual machine executes a binary file of a Java file at the application layer and the application framework layer. The virtual machine is configured to perform functions such as object lifecycle management, stack management, thread management, security and abnormity management, and garbage collection.

The system library may include a plurality of function modules, for example, a surface manager (surface manager), a media library (Media Libraries), a graphics processing library, where the graphics processing library includes a three-dimensional graphics processing library (for example, OpenGL ES), a two-dimensional graphics engine (for example, SGL), and the like.

The surface manager is configured to manage a display subsystem, and provide fusion of two-dimensional (2-Dimensional, 2D) and three-dimensional (3-Dimensional, 3D) layers for a plurality of applications.

The media library supports playback and recording in a plurality of commonly used audio and video formats, and static image files. The media library can support a plurality of audio and video coding formats, such as MPEG-4, H.264, MP3, AAC, AMR, JPG, and PNG.

The three-dimensional graphics processing library is configured to implement 3D graphics drawing, image rendering, layer composition, layer processing, and the like. The 2D graphics engine is a drawing engine for 2D drawing.

The kernel layer is a layer between hardware and software. The kernel layer includes at least a display driver, a camera driver, an audio driver, a sensor driver, and a virtual card driver.

In embodiments of this application, one or more applications at the application layer transfer, to the UniRender process of the view system, render trees generated by UI threads of the applications. The UniRender process obtains window control information and display area information from the window manager service and the display manager service, and then merges render trees of applications in a display area into a target render tree. After generating the target render tree, the UniRender process invokes a layer processing library to perform a DrawOP operation in a draw instruction list of the target render tree, to generate a bitmap. The UniRender transfers the generated bitmap to the display driver for display.

As used in the foregoing embodiments, according to the context, the term "when" may be interpreted as "if", "after", "in response to determining", or "in response to detecting". Similarly, according to the context, the phrase "when determining" or "if detecting (a stated condition or event)" may be interpreted as "if determining", "in response to determining", "when detecting (a stated condition or event)", or "in response to detecting (a stated condition or event)".

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device such as a server or a data center that integrates one or more usable media. The usable medium may be a magnetic medium (for example, a floppy disk, a hard disk, or a magnetic tape), an optical medium (for example, a DVD), a semi-conductor medium (for example, a solid-state drive), or the like.

A person of ordinary skill in the art may understand that all or some of the procedures in the methods in the foregoing embodiments may be completed by a computer program instructing related hardware. The program may be stored in a computer-readable storage medium. When the program is executed, the procedures in the foregoing method embodiments may be included. The foregoing storage medium includes any medium that can store program code, such as a ROM or a random access memory RAM, a magnetic disk, or an optical disc.

## Claims

1. An interface generation method, applied to a first electronic device, wherein the first electronic device determines that content displayed in a first display area comprises an interface of a first process and an interface of a second process, and the method comprises:

   generating, by the first process, a first render tree, wherein the first render tree is used to draw the interface of the first process;
   generating, by the second process, a second render tree, wherein the second render tree is used to draw the interface of the second process; and
   generating, by a third process, a first target interface based on the first render tree and the second render tree, wherein the first target interface comprises the interface of the first process and the interface of the second process, and the first target interface is displayed in the first display area.

2. The method according to claim 1, wherein the generating, by a third process, a first target interface based on the first render tree and the second render tree specifically comprises:

   generating, by the third process, a first target render tree based on the first render tree and the second render tree; and
   generating, by the third process, the first target interface based on the first target render tree.

3. The method according to claim 2, wherein the generating, by the third process, a first target render tree based on the first render tree and the second render tree specifically comprises:
   creating, by the third process, a root render node as a root node of the first target render tree, and using the first render tree and the second render tree as child nodes of the root render node.

**4.** The method according to claim 3, wherein the method further comprises:
deleting, by the third process, a render node in the first target render tree based on a Z-order of the first render tree and a Z-order of the second render tree, wherein the deleted render node corresponds to a fully shielded view.

**5.** The method according to claim 3, wherein the method further comprises:
deleting, by the third process, a draw operation in the first target render tree based on a Z-order of the first render tree and a Z-order of the second render tree, wherein the deleted draw operation corresponds to a fully shielded graphic.

**6.** The method according to any one of claims 1 to 5, wherein the method further comprises:
in a process in which the third process generates the first target interface based on the first render tree and the second render tree, performing, by the third process, merging or batching on a first draw operation and a second draw operation, wherein the first draw operation belongs to the first render tree, and the second draw operation belongs to the second render tree.

**7.** The method according to any one of claims 1 to 6, wherein the method further comprises:

determining, by the third process, off-screen rendering logic of the interface of the first process, wherein the off-screen rendering logic comprises at least one of window rounding, color transform, rotation, and scaling; and
adding, by the third process, an off screen rendering property to a rendering property of the first render tree based on the off-screen rendering logic of the interface of the first process, wherein the off-screen rendering property comprises at least one of a rounding property, a color property, a rotation property, and a scaling property, wherein
the off-screen rendering property one-to-one corresponds to the off-screen rendering logic, and the off-screen rendering property is used to modify a draw operation in the process in which the third process generates the first target interface based on the first render tree and the second render tree, to implement the off-screen rendering logic.

**8.** The method according to any one of claims 1 to 7, wherein when a reference coordinate system of the first render tree is a first coordinate system, a reference coordinate system corresponding to the first display area is a second coordinate system, and the first coordinate system is different from the second coordinate system, the method further comprises:

determining, by the third process, a first parameter based on the first coordinate system and the second coordinate system, and adding the first parameter to the rendering property of the first render tree; and
in the process in which the third process generates the first target interface based on the first render tree and the second render tree, modifying, by the third process, a reference coordinate system of the first draw operation based on the first parameter, wherein the first draw operation belongs to the first render tree.

**9.** An interface generation method, applied to a second electronic device, wherein the second electronic device determines that content displayed in a first display area comprises an interface of a first process and an interface of a second process, and the method comprises:

receiving, by a third process running on the second electronic device, a first render tree and a second render tree, wherein the first render tree is generated by the first process running on a first electronic device, the first render tree is used to draw the interface of the first process, the second render tree is generated by the second process running on the second electronic device, and the second render tree is used to draw the interface of the second process; and
generating, by the third process, a target interface based on the first render tree and the second render tree, wherein the target interface comprises the interface of the first process and the interface of the second process, and the target interface is displayed in the first display area.

**10.** An electronic device, wherein the electronic device comprises one or more processors and a memory, wherein the memory is coupled to the one or more processors, the memory is configured to store computer program code, the computer program code comprises computer instructions, and the one or more processors invoke the computer instructions, so that the electronic device performs the method according to any one of claims 1 to 9.

**11.** A chip system, wherein the chip system is applied to an electronic device, the chip system comprises one or more processors, and the processor is configured to invoke computer instructions, so that the electronic device performs the method according to any one of claims 1 to 8.

12. A computer-readable storage medium, comprising instructions, wherein when the instructions are run on an electronic device, the electronic device is enabled to perform the method according to any one of claims 1 to 9.

13. A computer program product, comprising computer-readable instructions, wherein when the computer-readable instructions are executed by one or more processors, the method according to any one of claims 1 to 9 is implemented.

Interface of the application 2

Interface of the application 1

08:08

Song 1

00:42          04:42

A bitmap is used as a layer to participate in layer composition

Bitmap 1

Bitmap 2

Surface composer (SurfaceFlinger)/ Hardware composition policy module (HWC)

Application 1 — Bitmap 1

Application 2 — Bitmap 2

FIG. 1A

Application 1 → Bitmap 3

Application 2 → Bitmap 4

Application 3 → Bitmap 5

A bitmap is used as a layer to participate in layer composition

Bitmap 3

Bitmap 4 + bitmap 5

Surface composer (SurfaceFlinger)/ Hardware composition policy module (HWC)

Interface of the application 1

08:08

Search

News Fiction

< Lily ...

☺ {Hi

Interface of the application 3

1

Interface of the application 2

News content 2

EP 4 421 619 A1

FIG. 1B

FIG. 2

PhoneWindow

Root view

View 1    View 2

View 3

Nest relationship
correspondence

Surface composer

Window

Root render
node

Render
node 0

Render
node 1    Render
node 2

Render
node 3

Surface

FIG. 3

EP 4 421 619 A1

FIG. 4

Layer list
Layer 1
Layer 2
...
Layer N

Surface composer

Underlying hardware corresponding to a hardware composition policy module

Layer 1
Layer 2

GPU composition

...
Layer N

Overlay composition

FIG. 5

A Z-order of a layer 1 is a

A Z-order of a layer 2 is a+1

GPU composition: composition in a Mode.SRC_OVER mode

A Z-order of a layer 3 is a+2

FIG. 6

FIG. 7A

Bitmap generated by an application 2 and transferred to a SurfaceFlinger

Bitmap generated by an application 3 and transferred to the SurfaceFlinger

News Entertainment Finance
Fiction Estate Auto

Pin News title 1

Pin News title 2

News content 1

News content 2

Lily

Hi

~
TO
FIG. 7B-2

FIG. 7B-1

CONT. FROM
FIG. 7B-1

News Entertainment Finance
Fiction    Estate    Auto ∨
[Pin]   News title 1
[Pin]   News title 2

News content 1

News content 2

Lily

Transform is
performed first

Lily

😊 { Hi

Off-
screen
buffer

Overlay is
performed later

Layer
composition

08:08

News
Fiction

Lily

😊 { Hi

content 1

News
content 2

On-screen
buffer

FIG. 7B-2

———— Data flow in a
       rendering process

– – – – Vsync signal flow

**Application layer**

| Music | News | ... | Vsync-APP |

Render tree 1    Render tree 2

**Application framework layer**

UniRender

A plurality of render trees → Render tree merging → Target render tree → Rendering → Bitmap

Vsync                                                          Bitmap

**Hardware abstraction layer**

HWC/Hardware composition module

Send for display

FIG. 8

FIG. 9

FIG. 10

| UniRender process | Anonymous shared memory subsystem | Application |
|---|---|---|

Apply for a shared memory

Startup process

Apply for a shared memory

Virtual memory ←Map→ Physical memory ←Map→ Virtual memory

Handle

Handle

FIG. 11

FIG. 12A

| layer key (layer identifier) | root id (root render node identifier) | ... | ... | HEAD field | Offset a |
| node id (node identifier) | node id (node identifier) | ... | ... | MAPPING field | Offset b |
| address (address) | address (address) | ... | ... | | |
| current property (current rendering property) | staging property (changed rendering property) | current displaylist (current draw instruction list) | staging displaylist (changed draw instruction list) | NODES field | Offset c |
| current property (current rendering property) | staging property (changed rendering property) | current displaylist (current draw instruction list) | staging displaylist (changed draw instruction list) | | |
| ... | | | | | |

RootRenderNode (root render node)

RenderNode0 (render node 0)

RenderNode2 (render node 2)

RenderNode1 (render node 1)

RenderNode3 (render node 3)

EP 4 421 619 A1

| layer key (layer identifier) | root id (root render node identifier) | ... | ... | | HEAD field | Offset a |
| node id (node identifier) | node id (node identifier) | ... | ... | | MAPPING field | Offset b |
| address (address) | address (address) | ... | ... | | | |
| displaylist (draw instruction list) | | | property (rendering property) | | | |
| displaylist (draw instruction list) | | | property (rendering property) | | NODES field | Offset c |
| ... | | | ... | | | |

FIG. 12B

FIG. 13

FIG. 14

Vertical synchronization
signal 1

Vertical synchronization
signal 2

An application cannot
write a render tree into a
shared memory

Time

Status of a lock
variable A

Held by an application

Held by an application

Held by a UniRender
(unified render)

An application can
write a render tree
into a shared memory

Status of a lock
variable A

Held by an application

Held by a UniRender
(unified render)

Status of a lock
variable B

Held by an application

Time

An application can
write a render tree into
a shared memory

FIG. 15

Gallery

Today

TO
FIG. 16A-2
Rounding
and scaling

TO
FIG. 16A-2

Photo   Album   Moment   Discover

Rounding

FIG. 16A-1

Gallery

Photo  Album  Moment  Discover

CONT.
FROM
FIG. 16A-1

CONT.
FROM
FIG. 16A-1

FIG. 16A-2

SMS application

News application

News content 1

News content 2

Rounding

FIG. 16B

FIG. 16C

EP 4 421 619 A1

Working

Application 1 | UI thread

Application 2 | UI thread

Transfer a render tree 1

Transfer a render tree 2

UniRender

Update a rendering property of a render node of the render tree 1

Generate a target render tree

GPU

| Scaling property | Rounding property | ... |

Render to generate a bitmap

FIG. 17A

FIG. 17B

Code example

setscale()
setclipbounds()
setLeftTopRrightBottom()
outline().setRoundRect()
setMatrix()
setColorFilter()
...

Root render node

| Rendering property | Draw instruction list |

Render node 1

| Rendering property | Draw instruction list |

Render node 2

| Rendering property | Draw instruction list |

Render node 3

| Rendering property | Draw instruction list |

FIG. 18

EP 4 421 619 A1

FIG. 19

Root render node 1

Render node 1    Render node 2

Render
node 3

Root render node 2

Render
node 4    Render node 5

Render node 6

Generate a target
render tree

New root render node

Root render node 1

Render node 1    Render node 2

Render
node 3

Root render node 2

Render node 4    Render node 5

FIG. 20

Surface coordinate system of an application

setStaticMatrix()

A UniRender allocates the surface coordinate system

FIG. 21

Song 1

Music
application

Lyrics

Display area 2

5G ⊿ 5G ⊿ 📶 🔋 8:00

Clock  Calendar  Gallery  Notepad

Display
area 1

Jan
15

Desktop
application

Phone  Contacts  Camera

FIG. 22A

EP 4 421 619 A1

**Folded state**

Display area 2                          Display area 1

**Unfolded state**

180°

< **Song 1**

Clock   Gallery   Notepad

Phone   Contacts   Camera

01:42                    04:42

FIG. 22B

FIG. 22C

FIG. 23A-1

EP 4 421 619 A1

21°C overcast 4:46 PM

My home Home VIP Series Movie Cartoon Kid Game

HDMI1

Switch an input source

Tap to view in full screen

08:08

08:08
Friday,
December 25

6°C
Beijing

Reader Music

Mail Notepad

Menu

CONT. FROM FIG. 23A-1

Electronic device 2

Display area 2

FIG. 23A-2

EP 4 421 619 A1

FIG. 23B

FIG. 23C

| Window manager service and display manager service | UniRender (unified render) | | Application | | | |
|---|---|---|---|---|---|---|
| | DisplayRender1 (display render 1) ··· | DisplayRenderN (display render N) | Application 1 | Application 2 | ... | Application N |

S2401: Construct and generate a render tree after receiving a vertical signal ··· S2401: Construct and generate a render tree after receiving a vertical signal

S2402: Transfer the render tree in a cross-process manner

S2403: Transfer window control information and display area information of an application

S2404: Allocate the render tree

S2404: Allocate the render tree

S2405: Generate a target render tree based on the obtained render tree, the window control information, and the display area information

S2405: Generate a target render tree based on the obtained render tree, the window control information, and the display area information

S2406: Generate a bitmap based on the target render tree

S2406: Generate a bitmap based on the target render tree

FIG. 24

60 Hz Vsync
(vertical
synchronization
signal)

Display area 1

60 Hz
refresh rate

Display area 2

30 Hz
refresh rate

UniRender
(unified
render)

DisplayRender1
(display render 1)

DisplayRender2
(display render 2)

60 Hz Vsync-UR
(vertical synchronization
signal-unified render)

30 Hz Vsync-UR
(vertical
synchronization
signal-unified
render)

Frequency division

FIG. 25

FIG. 26A

EP 4 421 619 A1

UniRender (unified render)

DisplayRender2 (display render 2)

I/O thread

Render thread

Render tree 3

Render tree 31

Application 3

Render tree 32

DisplayRender1 (display render 1)

I/O thread

Render thread

FIG. 26B

Electronic device 1

Electronic device 2

S2701: Establish a connection

S2702: Determine an application displayed in a display area 2

S2703: Send a render tree of the application displayed in the display area 2

S2704: Merge the render tree of the application displayed in the display area 2 into a target render tree

S2705: Generate a bitmap based on the target render tree

FIG. 27

FIG. 28A

FIG. 28B

Electronic device

Antenna 1

Antenna 2

| Mobile communication module<br>2G/3G/4G/5G<br>[150] | | Wireless communication module<br>BT/WLAN/GNSS/NFC/IR/FM<br>[160] |

Speaker
[170A]

Receiver
[170B]

Audio
module
[170]

Microphone
[170C]

Headset jack
[170D]

Displays 1 to N [194]

Cameras 1 to N [193]

Indicator [192]

Motor [191]

Button [190]

Internal memory
[121]

SIM card interfaces 1
to N [195]

External memory
interface [120]

Processor
[110]

Sensor module [180]

Pressure sensor
[180A]

Gyro sensor [180B]

Barometric pressure
sensor [180C]

Magnetic sensor
[180D]

Acceleration sensor
[180E]

Distance sensor
[180F]

Optical proximity
sensor [180G]

Fingerprint sensor
[180H]

Temperature sensor
[180J]

Touch sensor
[180K]

Ambient light
sensor [180L]

Bone conduction
sensor [180M]

USB interface [130]

Charging
input

Charging
management
module
[140]

Power
management
module [141]

Battery [142]

FIG. 29

| Application layer | Camera | Calendar | Map | WLAN | Music | Desktop |
|---|---|---|---|---|---|---|
| | Gallery | Phone | Navigation | Bluetooth | Video | ... |

Render trees of one or more applications

**Application framework layer**

View system

UniRender (unified render)

SurfaceFlinger (surface composer)

Window manager service

Display manager service

Target render tree

**System library**

Graphics processing library

Two-dimensional graphics engine

Three-dimensional graphics processing library

...

Bitmap

**Kernel layer**

Display driver

Send for display

FIG. 30

## INTERNATIONAL SEARCH REPORT

| | International application No. |
| --- | --- |
| | **PCT/CN2022/133838** |

**A. CLASSIFICATION OF SUBJECT MATTER**

G06F 8/38(2018.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

WPABSC; CNTXT; ENTXT; CJFD; DWPI; ENTXTC; CNKI: 进程, 属性, 线程, 参数, 逻辑, 渲染, 第二, 离屏, 坐标系, 绘制, 渲染树, 第一, 生成, process, attribute, thread, parameter, logic, render, second, off-plane, coordinate system, draw, render tree, first, generate

**C. DOCUMENTS CONSIDERED TO BE RELEVANT**

| Category* | Citation of document, with indication, where appropriate, of the relevant passages | Relevant to claim No. |
| --- | --- | --- |
| Y | CN 111897607 A (ALIBABA GROUP HOLDING LTD.) 06 November 2020 (2020-11-06) description, paragraphs 26-225 | 1-13 |
| Y | CN 111198731 A (BEIJING QIHOO TECHNOLOGY CO., LTD.) 26 May 2020 (2020-05-26) description, paragraphs 61-181 | 1-13 |
| Y | CN 111696186 A (HANGZHOU HIKVISION SYSTEM TECHNOLOGY CO., LTD.) 22 September 2020 (2020-09-22) description, paragraphs 28-46 | 1-13 |
| A | US 2011078594 A1 (SAP AG.) 31 March 2011 (2011-03-31) entire document | 1-13 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **12 January 2023** | **28 January 2023** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/133838**

| Patent document cited in search report | | | Publication date (day/month/year) | Patent family member(s) | | | Publication date (day/month/year) |
|---|---|---|---|---|---|---|---|
| CN | 111897607 | A | 06 November 2020 | None | | | |
| CN | 111198731 | A | 26 May 2020 | None | | | |
| CN | 111696186 | A | 22 September 2020 | None | | | |
| US | 2011078594 | A1 | 31 March 2011 | US | 8938684 | B2 | 20 January 2015 |

Form PCT/ISA/210 (patent family annex) (January 2015)

**EP 4 421 619 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111410513